# EUROPEAN PATENT APPLICATION

(11) **EP 4 553 570 A1**
(43) Date of publication of application: **14.05.2025**
(21) Application number: 23852838.4
(22) Date of filing: 31.07.2023
(51) Int. Cl.: G02F 1/153, G02F 1/155, E06B 9/24, B60J 3/04, G02F 1/1523, C09K 9/00

(54) **ELECTROCHROMIC ELEMENT AND WINDOW DEVICE COMPRISING SAME**

(30) Priority: 08.08.2022 KR 20220098422; 16.08.2022 KR 20220101967; 21.12.2022 KR 20220180456
(71) Applicant: SKC Co., Ltd., Suwon-si, Gyeonggi-do 16338 (KR)
(72) Inventor: KIM, Su Woo, Suwon-si Gyeonggi-do 16338 (KR); AHN, Byeong Uk, Suwon-si Gyeonggi-do 16338 (KR); LA, Yong Sang, Suwon-si Gyeonggi-do 16338 (KR); OH, Seung Bae, Suwon-si Gyeonggi-do 16338 (KR); LEE, Seong Hwan, Suwon-si Gyeonggi-do 16338 (KR); KIM, Jung Pil, Suwon-si Gyeonggi-do 16338 (KR)
(74) Representative: Isarpatent
(86) International application number: PCT/KR2023/011177
(87) International publication number: WO 2024/034957

(57) **Abstract**

Provided in an embodiment are an electrochromic element and a window device comprising same, the electrochromic element comprising an electrochromic unit and a photoelectron capping unit, which absorbs photoelectrons generated when external light is incident to the electrochromic unit, and having improved durability and discoloration rate.

## Description

### [Technical Field]

Embodiments relate to an electrochromic element and a window device including the same.

### [Background Art]

Electrochromic films, whose colors change due to coloring and discoloring through oxidation-reduction reactions at each oxidation electrode and reduction electrode depending on an applied potential, can be artificially controlled by a user to emit visible light and infrared rays, and various types of inorganic oxides are used as electrode materials.

Electrochromic films as described above have been developed in various ways and patent-applied. As examples of related patent applications, there are Korea Patent Application Publication No. 10-2001-0087586, which discloses a film that changes from transparent to blue by depositing MoO₃, a reduced chromogenic oxide, on one of two ITO films (1A, 1B) formed by depositing a conductive Indium-tin oxide thin film on a glass film, and depositing WO₃, also a reduced chromogenic material, is deposited on the other ITO film, and then depositing a solid electrolyte of lithium, an alkali metal, on the deposited ITO film, and then injecting polyaniline, a conductive polymer, between the two films, and then allowing passing through a high-frequency compression roller to apply voltage, and Korea Utility Model Publication No. 0184841 which discloses a film, whose color changes by electric energy, characterized by depositing indium-tin oxide on a 0.05 mm thick glass film, and then depositing opposite surfaces of the transition metal oxide film with WO₃, a reduced chromogenic material, and IrO₂, an oxidized chromogenic material, with a polymer solid electrolyte, α-PEO copolymer, therebetween, and then bonding the opposite surfaces with a high-frequency roller.

### [Disclosure]

### [Technical Problem]

Therefore, the present invention has been made in view of the above problems, and it is one object of the present invention to provide an electrochromic element having improved durability.

It is another object of the present invention to provide an electrochromic element having a variety of colors and a wide range of transmittance, and a window device including the same.

It is yet another object of the present invention to provide an electrochromic element having improved color change speed and durability, and a window device including the same.

### [Technical Solution]

In accordance with an aspect of the present invention, the above and other objects can be accomplished by the provision of an electrochromic element, including: an electrochromic part; and a photoelectron capping part configured to absorb photoelectrons generated when external light is incident on the electrochromic part.

In an embodiment, the electrochromic part can include: a first substrate; a first transparent electrode disposed on the first substrate; a first reduction discoloration layer disposed on the first transparent electrode; an electrolyte layer disposed on the first reduction discoloration layer; a first oxidation discoloration layer disposed on the first electrolyte layer; a second transparent electrode disposed on the first oxidation discoloration layer; and a second substrate disposed on the second transparent electrode, wherein the photoelectrons are generated in the first oxidation discoloration layer.

In an embodiment, the photoelectron capping part can be electrically connected to the first transparent electrode and the second transparent electrode.

In an embodiment, the photoelectron capping part can include: a third transparent electrode electrically connected to the first transparent electrode; a second oxidation discoloration layer disposed on the third transparent electrode; a second electrolyte layer disposed on the second oxidation discoloration layer; a second reduction discoloration layer disposed on the second electrolyte layer; and a fourth transparent electrode disposed on the second reduction discoloration layer and electrically connected to the second transparent electrode.

In an embodiment, the first transparent electrode and the third transparent electrode can be formed integrally, and the second transparent electrode and the fourth transparent electrode can be formed integrally.

In an embodiment, the photoelectron capping part includes a first photoelectron-capping part 12 and second photoelectron capping part 13 configured to extend parallel to each other, and the electrochromic part is disposed between the first photoelectron-capping part 12 and the second photoelectron capping part 13.

In an embodiment, the photoelectron capping part can be disposed between the first substrate and the second substrate.

In an embodiment, the first reduction discoloration layer can include at least one selected from the group consisting of tungsten oxide, niobium pentoxide, vanadium pentoxide, titanium oxide, molybdenum oxide, viologen and poly(3,4-ethylenedioxythiophene (PEDOT), the second reduction discoloration layer can include at least one selected from the group consisting of tungsten oxide, niobium pentoxide, vanadium pentoxide, titanium oxide, molybdenum oxide, viologen and poly(3,4-ethylenedioxythiophene (PEDOT), the first oxidation discoloration layer can include at least one selected from the group consisting of Prussian blue, lithium nickel oxide and iridium oxide, and the second oxidation discoloration layer can include at least one selected from the group consisting of Prussian blue, lithium nickel oxide and iridium oxide.

In an embodiment, the first reduction discoloration layer can receive cations, contained in the first electrolyte layer, by driving voltage applied to the first transparent electrode and the second transparent electrode, and the second reduction discoloration layer can receive cations contained in the second electrolyte layer when the external light is incident on the electrochromic part.

In an embodiment, the first oxidation discoloration layer can release cations to the first electrolyte layer by driving voltage applied to the first transparent electrode and the second transparent electrode, and the second oxidation discoloration layer can release cations to the second electrolyte layer when the external light is incident on the electrochromic part.

In accordance with another aspect of the present invention, provided is an electrochromic element, including: a first substrate; a first transparent electrode disposed on the first substrate; a third transparent electrode disposed on the first substrate and formed integrally with the first transparent electrode; a first reduction discoloration layer disposed on the first transparent electrode; a second oxidation discoloration layer disposed on the third transparent electrode; an electrolyte layer configured to cover the first reduction discoloration layer and the second oxidation discoloration layer; a first oxidation discoloration layer disposed on the electrolyte layer; a second reduction discoloration layer disposed on the electrolyte layer; a second transparent electrode disposed on the first oxidation discoloration layer; a fourth transparent electrode disposed on the second reduction discoloration layer and formed integrally with the second transparent electrode; and a second substrate disposed on the second transparent electrode and the fourth transparent electrode.

In accordance with still another aspect of the present invention, provided is a window device including a frame; a window mounted on the frame; and an electrochromic element disposed in the window.

The electrochromic element according to an embodiment includes a first substrate; a first electrochromic part disposed on the first substrate; and a second electrochromic part disposed under the first substrate, wherein the first electrochromic part has a first dark state and a first transmission state, the second electrochromic part has a second dark state and a second transmission state, the first dark state and the second transmission state have a first color, the first transmission state and in the second dark state have a second color, and the first color differs from the second color.

In an embodiment, the first electrochromic part can include a first transparent electrode disposed on the first substrate; a first discoloration layer disposed on the first transparent electrode; a first electrolyte layer disposed on the first discoloration layer; a second discoloration layer disposed on the first electrolyte layer; and a second transparent electrode disposed on the second discoloration layer, and the second electrochromic part can include a third transparent electrode disposed under the first substrate; a third discoloration layer disposed under the third transparent electrode; a second electrolyte layer disposed under the third discoloration layer; a fourth discoloration layer disposed under the second electrolyte layer; and a fourth transparent electrode disposed under the fourth discoloration layer.

In an embodiment, the b* of the first color can be greater than the b* of the second color.

In an embodiment, a difference between the b* of the first color and the b* of the second color can be 2 to 10.

In an embodiment, a transmittance in the first dark state and the second dark state can be 3% to 8%.

In an embodiment, the first electrochromic part can have a first transmission state, the second electrochromic part can have a second transmission state, and a transmittance in the first transmission state and the second transmission state can be 30% to 50%.

In an embodiment, a transmittance in the first dark state and the second transmission state can be 10% to 20%, and a transmittance in the first transmission state and the second dark state can be 10% to 20%.

In an embodiment, the first discoloration layer can include nickel oxide, and the third discoloration layer can include Prussian blue.

In an embodiment, the second discoloration layer and the third discoloration layer can include tungsten oxide or titanium oxide.

In an embodiment, a second substrate disposed on the first electrochromic part; and a third substrate disposed under the second electrochromic part can be further included.

In an embodiment, the first substrate, the second substrate and the third substrate can be flexible.

In accordance with still another aspect of the present invention, provided is a window device including a frame; a window mounted on the frame; and an electrochromic element disposed in the window, wherein the electrochromic element includes a first substrate; a first electrochromic part disposed on the first substrate; and a second electrochromic part disposed under the first substrate, wherein the first electrochromic part has a first dark state and a first transmission state, the second electrochromic part has a second dark state and a second transmission state, the first dark state and the second transmission state has a first color, the first transmission state and the second dark state has a second color, and the first color differs from the second color.

The electrochromic element according to an embodiment includes a first substrate; a first transparent electrode disposed on the first substrate; a first discoloration layer disposed on the first transparent electrode; an electrolyte layer disposed on the first discoloration layer; a second discoloration layer disposed on the electrolyte layer; a second transparent electrode disposed on the second discoloration layer; a second substrate disposed on the second transparent electrode; a first bus bar configured to extend from a first corner region and accessed to the first transparent electrode; and a second bus bar configured to extend from the first corner region and accessed to the second transparent electrode, wherein the first transparent electrode includes a first insulation pattern extending from the first corner region, and the second transparent electrode includes a second insulation pattern extending from the first corner region.

In an embodiment, the first insulation pattern can extend from the first corner region to the central portion of the first substrate, and the second insulation pattern can extend from the first corner region to the central portion of the second substrate.

The electrochromic element according to an embodiment further includes a first open region formed by opening an upper surface of a first transparent electrode layer between a first side surface of the first substrate and a second side surface of the second substrate, and the first bus bar can be disposed in the first open region.

In an embodiment, the first substrate can include a third side surface that meets the first side surface in the first corner region, and the second substrate can include a fourth side surface that meets the second side surface in the first corner region, a second open region formed by opening a lower surface of the second transparent electrode can be formed between the third side surface and the fourth side surface, and the second bus bar can be disposed in the second open region.

The electrochromic element according to an embodiment can further include a first sealing part disposed in the first open region and configured to cover the first bus bar and the upper surface of the first transparent electrode.

The electrochromic element according to an embodiment can further include a second sealing part disposed in the second open region and configured to cover the second bus bar and the lower surface of the second transparent electrode.

In an embodiment, the first insulation pattern can further include fifth insulation patterns extending parallel to each other.

In an embodiment, the second insulation pattern can further include sixth insulation patterns extending parallel to each other.

The electrochromic element according to an embodiment can include a second corner region positioned on the opposite side of the first corner region with respect to the central portion of the first substrate, and can further include a third bus bar extended from the second corner region and accessed to the first transparent electrode; and a fourth bus bar configured to extend from the second corner region and accessed to the second transparent electrode.

In an embodiment, the first transparent electrode can further include a third insulation pattern extended from the second corner region, and the second transparent electrode can further include a fourth insulation pattern extended from the second corner region.

In an embodiment, the third insulation pattern can extend to the central portion, and the fourth insulation pattern can extend to the central portion.

In an embodiment, the first insulation pattern can expose an upper surface of the first substrate, and the second insulation pattern can expose a lower surface of the second substrate.

In accordance with yet another aspect of the present invention, provided is a window device including a frame; a window mounted on the frame; and an electrochromic element disposed in the window, wherein the electrochromic element includes a first substrate; a first transparent electrode disposed on the first substrate; a first discoloration layer disposed on the first transparent electrode; an electrolyte layer disposed on the first discoloration layer; a second discoloration layer disposed on the electrolyte layer; a second transparent electrode disposed on the second discoloration layer; a second substrate disposed on the second transparent electrode; a first bus bar extended from a first corner region and accessed to the first transparent electrode; and a second bus bar extended from the first corner region and accessed to the second transparent electrode, wherein the first transparent electrode includes a first insulation pattern extended from the first corner region, and the second transparent electrode includes a second insulation pattern extended from the first corner region.

### [Advantageous effects]

An electrochromic element according to an embodiment includes a photoelectron capping part. When external light is incident on an electrochromic part, photoelectrons may be generated. The photoelectrons can be accommodated in the photoelectron capping part.

Accordingly, the electrochromic element according to an embodiment can suppress an additional reaction due to the photoelectrons, and can prevent the durability of the electrochromic portion from being reduced due to the additional reaction.

In particular, the photoelectron capping part is disposed between the first substrate and the second substrate. In addition, the first transparent electrode and the third transparent electrode may be formed integrally, and the second transparent electrode and the fourth transparent electrode may be formed integrally.

Accordingly, photoelectrons generated from the electrochromic part can be easily transferred to the photoelectron capping part through the first transparent electrode, the second transparent electrode, the third transparent electrode and the fourth transparent electrode.

Accordingly, the electrochromic element according to an embodiment may easily capture the photoelectrons while having a simple structure.

In particular, the photoelectron capping part may be inserted into the first substrate and the second substrate. Accordingly, the electrochromic element according to an embodiment may have a simple structure and improved durability.

The electrochromic element according to an embodiment includes a first electrochromic part and a second electrochromic part. In addition, the first electrochromic part and the second electrochromic part may have different colors in each of a first dark state and a second dark state. In particular, the first electrochromic part and the second electrochromic part may be laminated to each other.

In addition, the first electrochromic part may have the first dark state and a first transmission state. The second electrochromic part may have the second dark state and the second transmission state.

In addition, the electrochromic element according to an embodiment may separately drive the first electrochromic part and the second electrochromic part.

Accordingly, the electrochromic element according to an embodiment may implement a variety of colors and a variety of light transmittances by combining the first dark state, the second dark state, the first transmission state and the second transmission state. That is, the electrochromic element according to an embodiment may have a combination of the first dark state and the second dark state. The electrochromic element according to an embodiment may have a combination of the first dark state and the second transmission state. The electrochromic element according to an embodiment may have a combination of the first transmission state and the second dark state. The electrochromic element according to an embodiment may have a combination of the first transmission state and the second transmission state.

The electrochromic element according to an embodiment includes a first bus bar and a second bus bar that respectively extend from a first corner region in different directions. In addition, the electrochromic element according to an embodiment may include a third bus bar and a fourth bus bar that respectively extend from a second corner region in different directions.

Accordingly, the electrochromic element according to an embodiment may supply a driving signal to the first transparent electrode through the first bus bar and the third bus bar, and may supply a driving signal to the second transparent electrode through the second bus bar and the fourth bus bar.

Accordingly, the electrochromic element according to an embodiment may have a fast color change speed across the entire surface because a driving signal is supplied from four sides thereof. In particular, the electrochromic element according to an embodiment may have a uniform discoloration and fast color change speed throughout the entire surface.

In addition, in the first corner region, the first bus bar and the second bus bar may be adjacent to each other. The first insulation pattern and the second insulation pattern may increase the length of the electrical path of the first bus bar and the second bus bar.

Accordingly, the electrochromic element according to an embodiment can suppress the deterioration of a region adjacent to the first corner region and the second corner region. Accordingly, the electrochromic element according to an embodiment may have improved durability.

In addition, the electrochromic element according to an embodiment can suppress color change speed increase in the region where the first bus bar and the second bus bar are adjacent to each other. Accordingly, the electrochromic element according to an embodiment may have a uniform color change speed throughout.

In addition, the electrochromic element according to an embodiment may include a first sealing part for covering the first bus bar; and a second sealing part for covering the second bus bar. Accordingly, the electrochromic element according to an embodiment effectively may protect a discoloration layer and electrolyte layer thereinside.

### [Description of Drawings]

FIG. 1 illustrates the plan view of an electrochromic element according to an embodiment.
FIG. 2 illustrates a sectional view taken along line A-A' of FIG. 1.
FIGS. 3 to 6 are sectional views illustrating processes of fabricating the electrochromic element according to an embodiment.
FIG. 7 is a sectional view illustrating the cross-section of an electrochromic element according to another embodiment cut in a width direction.
FIGS. 8 to 11 are drawings illustrating processes of fabricating the electrochromic element according to another embodiment.
FIG. 12 illustrates the plan view of an electrochromic element according to still another embodiment.
FIG. 13 illustrates the plan view of a first transparent electrode according to still another embodiment.
FIG. 14 illustrates the plan view of a second transparent electrode according to still another embodiment.
FIG. 15 is a sectional view illustrating a cross-section taken along line A-A' of FIG. 12.
FIG. 16 is a sectional view illustrating a cross-section taken along line B-B' of FIG. 12.
FIGS. 17 to 24 are drawings illustrating an electrochromic element according to still another embodiment.
FIG. 25 illustrates the plan view of a first transparent electrode according to still another embodiment.
FIG. 26 illustrates the plan view of a second transparent electrode according to still another embodiment.
FIG. 27 illustrates a window device including the electrochromic element according to an embodiment.

### [Best Mode]

In the description of embodiments, it will be understood that when each part, surface, layer or substrate is referred to as being "on" or "under" another part, surface, layer or substrate, the part, surface, layer or substrate can be directly on another part, surface, layer or substrate or intervening part, surface, layer or substrate, and criteria for "on" and "under" will be provided based on the drawings. Elements in the following drawings may be exaggerated, omitted, or schematically illustrated for conveniences and clarity of explanation, and the sizes of elements do not reflect their actual sizes completely.

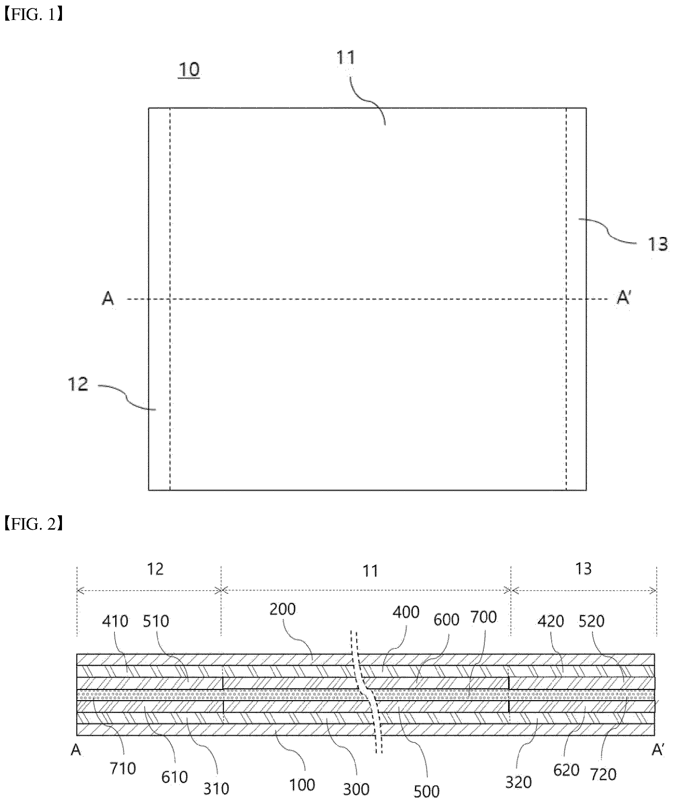

FIG. 1 illustrates the plan view of an electrochromic element according to an embodiment. FIG. 2 illustrates a sectional view taken along line A-A' of FIG. 1.

Referring to FIGS. 1 and 2, an electrochromic element 10 according to an embodiment includes an electrochromic part 11 and photoelectron capping parts 12 and 13.

The electrochromic part 11 is disposed in the center. The electrochromic part 11 may occupy most of the planar area of the electrochromic element according to an embodiment. The electrochromic part 11 may occupy about 1% to about 10% of the total planar area of the electrochromic element according to an embodiment.

The electrochromic part 11 may control the light transmittance of the electrochromic element according to an embodiment by using an external driving voltage.

The photoelectron capping part is disposed on one outer side. The photoelectron capping part is disposed on one side of the electrochromic part 11. The photoelectron capping part is disposed on one outer side of the electrochromic element according to an embodiment.

The photoelectron capping part may have a shape extending in one direction. The electrochromic element according to an embodiment may extend in a length direction. The photoelectron capping part may have a shape extending in the length direction. Here, the width of the photoelectron capping part may be about 1% to about 10% of the total width of the electrochromic element according to an embodiment.

The photoelectron capping part may include a first photoelectron-capping part 12 and a second photoelectron capping part 13.

The first photoelectron-capping part 12 and the second photoelectron capping part 13 may have a shape extending parallel to each other. The electrochromic part 11 may be disposed between the first photoelectron-capping part 12 and the second photoelectron capping part 13.

Referring to FIG. 2, the electrochromic part 11 may include a first substrate 100, a second substrate 200, a first transparent electrode 300, a second transparent electrode 400, a first reduction discoloration layer 500, a first oxidation discoloration layer 600 and a first electrolyte layer 700.

Together with the second substrate 200, the first substrate 100 supports the first transparent electrode 300, the first reduction discoloration layer 500, the first oxidation discoloration layer 600, the second transparent electrode 400 and the first electrolyte layer 700.

In addition, the first transparent electrode 300, the first reduction discoloration layer 500, the first oxidation discoloration layer 600, the second transparent electrode 400 and the first electrolyte layer 700 are sandwiched between the first substrate 100 and the second substrate 200. Together with the second substrate 200, the first substrate 100 may protect the first transparent electrode 300, the first reduction discoloration layer 500, the first oxidation discoloration layer 600, the second transparent electrode 400 and the first electrolyte layer 700 from external physical impact and chemical impact.

The first substrate 100 may include a polymer resin. The first substrate 100 may include at least one selected from the group consisting of a polyester-based resin, a polyimidebased resin, a cyclic olefin polymer resin, a polyethersulfone, a polycarbonate and a polyolefinbased resin.

The first substrate 100 may include a polyester resin as a main component. The first substrate 100 may include polyethylene terephthalate. The first substrate 100 may include the polyethylene terephthalate in a content of about 90 wt% or more based on the total composition amount. The first substrate 100 may include the polyethylene terephthalate in a content of about 95 wt% or more based on the total composition amount. The first substrate 100 may include the polyethylene terephthalate in a content of about 97 wt% or more based on the total composition amount. The first substrate 100 may include the polyethylene terephthalate in a content of about 98 wt% or more based on the total composition amount.

The first substrate 100 may include a uniaxially or biaxially stretched polyethylene terephthalate film. The first substrate 100 may include a polyethylene terephthalate film stretched about 2 to about 5 times in a longitudinal direction and/or width direction.

The first substrate 100 may have high mechanical properties to reinforce the glass when applied to a window of a building or a vehicle.

The first substrate 100 may have a tensile strength of about 7 kgf/mm² to about 40 kgf/mm² in the longitudinal direction. The first substrate 100 may have a tensile strength of about 8 kgf/mm² to about 35 kgf/mm² in the longitudinal direction.

The first substrate 100 may have a tensile strength of about 7 kgf/mm² to about 40 kgf/mm² in the width direction. The first substrate 100 may have a tensile strength of about 8 kgf/mm² to about 35 kgf/mm² in the width direction.

The first substrate 100 may have a modulus of about 200 kgf/mm² to about 400 kgf/mm² in the longitudinal direction. The first substrate 100 may have a modulus of about 250 kgf/mm² to about 350 kgf/mm² in the longitudinal direction. The first substrate 100 may have a modulus of about 250 kgf/mm² to about 270 kgf/mm² in the longitudinal direction.

The first substrate 100 may have a modulus of about 200 kgf/mm² to about 400 kgf/mm² in the width direction. The first substrate 100 may have a modulus of about 250 kgf/mm² to about 350 kgf/mm² in the width direction. The first substrate 100 may have a modulus of about 250 kgf/mm² to about 270 kgf/mm² in the width direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The first substrate 100 may have a fracture elongation of about 30% to about 150% in the longitudinal direction. The first substrate 100 may have a fracture elongation of about 30% to about 130% in the longitudinal direction. The first substrate 100 may have a fracture elongation of about 40% to about 120% in the longitudinal direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The modulus, the fracture elongation and the tensile strength may be measured according to KS B 5521.

In addition, the modulus, the tensile strength and the fracture elongation may be measured according to ASTM D882.

Since the first substrate 100 has the improved mechanical strength as described above, it may efficiently protect the first transparent electrode 300, the second transparent electrode 400, the first reduction discoloration layer 500, the first oxidation discoloration layer 600 and the first electrolyte layer 700. In addition, since the first substrate 100 has the improved mechanical strength as described above, the mechanical strength of the mechanical strength of glass to be attached may be effectively reinforced.

The first substrate 100 may include glass. The first substrate 100 may be a glass substrate.

In addition, the first substrate 100 may have high chemical resistance. Accordingly, even if an electrolyte contained in the first substrate 100 leaks, damage to the surface of the first substrate 100 may be minimized.

The first substrate 100 may have improved optical properties. A total light transmittance of the first substrate 100 may be about 55% or more. The total light transmittance of the first substrate 100 may be about 70% or more. The total light transmittance of the first substrate 100 may be about 75% to about 99%. The total light transmittance of the first substrate 100 may be about 80% to about 99%.

A haze of the first substrate 100 may be about 20% or less. The haze of the first substrate 100 may be about 0.1% to about 20%. The haze of the first substrate 100 may be about 0.1% to about 10%. The haze of the first substrate 100 may be about 0.1% to about 7%.

The total light transmittance and the haze may be measured according to ASTM D 1003, etc.

Since the first substrate 100 has an appropriate total light transmittance and haze, the electrochromic element according to another embodiment may have improved optical properties. That is, since the first substrate 100 has an appropriate transmittance and haze, an improved appearance may be achieved by minimizing distortion of images from the outside while appropriately controlling a transmittance when the electrochromic element according to another embodiment is applied to a window.

In addition, the first substrate 100 may have an in-plane phase difference of about 100 nm to about 4000 nm. The first substrate 100 may have an in-plane phase difference of about 200 nm to about 3500 nm. The first substrate 100 may have an in-plane phase difference of about 200 nm to about 3000 nm.

The first substrate 100 may have an in-plane phase difference of about 7000 nm or more. The first substrate 100 may have an in-plane phase difference of about 7000 nm to about 50000 nm. The first substrate 100 may have an in-plane phase difference of about 8000 nm to about 20000 nm.

The in-plane phase difference may be derived from a refractive index and thickness according to the direction of the first substrate 100.

Since the first substrate 100 has the in-plane phase difference as described above, the electrochromic element according to an embodiment may have an improved appearance.

The thickness of the first substrate 100 may be about 10 µm to about 200 µm. The thickness of the first substrate 100 may be about 23 µm to about 150 µm. The thickness of the first substrate 100 may be about 30 µm to about 120 µm.

The first substrate 100 may include an organic filler or an inorganic filler. The organic or inorganic filler may function as an anti-blocking agent.

An average particle diameter of the filler may be about 0.1 µm to about 5 µm. The average particle diameter of the filler may be about 0.1 µm to about 3 µm. The average particle diameter of the filler may be about 0.1 µm to about 1 µm.

The filler may be at least one selected from the group consisting of silica particles, barium sulfate particles, alumina particles and titania particles.

In addition, the filler may be included in the first substrate 100 in a content of about 0.01 wt% to about 3 wt% based on the total amount of the first substrate 100. The filler may be included in the first substrate 100 in a content of about 0.05 wt% to about 2 wt% based on the total amount of the first substrate 100.

The first substrate 100 may have a single-layer structure. For example, the first substrate 100 may be a single-layer polyester film.

The first substrate 100 may have a multi-layer structure. For example, the first substrate 100 may be a multi-layer co-extruded film. The multi-layer co-extruded structure may include a center layer, a first surface layer and a second surface layer. The filler may be included in the first surface layer and the second surface layer.

The second substrate 200 faces the first substrate 100. The second substrate 200 is disposed on the first substrate 100. One end of the second substrate 200 may be disposed to be misaligned with one end of the first substrate 100. The other end of the second substrate 200 may be disposed to be misaligned with the other end of the first substrate 100.

Together with the first substrate 100, the second substrate 200 supports the first transparent electrode 300, the first reduction discoloration layer 500, the first oxidation discoloration layer 600, the second transparent electrode 400 and the first electrolyte layer 700.

In addition, the first transparent electrode 300, the first reduction discoloration layer 500, the first oxidation discoloration layer 600, the second transparent electrode 400 and the first electrolyte layer 700 are sandwiched between the second substrate 200 and the first substrate 100. Together with the first substrate 100, the second substrate 200 may protect the first transparent electrode 300, the first reduction discoloration layer 500, the first oxidation discoloration layer 600, the second transparent electrode 400 and the first electrolyte layer 700 from external physical impact and chemical impact.

The second substrate 200 may include a polymer resin. The second substrate 200 may include at least one selected from the group consisting of a polyester-based resin, a polyimidebased resin, a cyclic olefin polymer resin, a polyethersulfone, a polycarbonate and a polyolefinbased resin.

The second substrate 200 may include a polyester resin as a main component. The second substrate 200 may include polyethylene terephthalate. The second substrate 200 may include the polyethylene terephthalate in a content of about 90 wt% or more based on the total composition amount. The second substrate 200 may include the polyethylene terephthalate in a content of about 95 wt% or more based on the total composition amount. The second substrate 200 may include the polyethylene terephthalate in a content of about 97 wt% or more based on the total composition amount. The second substrate 200 may include the polyethylene terephthalate in a content of about 98 wt% or more based on the total composition amount.

The second substrate 200 may include a uniaxially or biaxially stretched polyethylene terephthalate film. The second substrate 200 may include a polyethylene terephthalate film stretched about 2 to about 5 times in a longitudinal direction and/or width direction.

The second substrate 200 may have high mechanical properties to reinforce the glass when applied to a window of a building or a vehicle.

The second substrate 200 may have a tensile strength of about 7 kgf/mm² to about 40 kgf/mm² in the length direction. The second substrate 200 may have a tensile strength of about 8 kgf/mm² to about 35 kgf/mm² in the length direction.

The second substrate 200 may have a tensile strength of about 7 kgf/mm² to about 40 kgf/mm² in the width direction. The second substrate 200 may have a tensile strength of about 8 kgf/mm² to about 35 kgf/mm² in the width direction.

The second substrate 200 may have a modulus of about 200 kgf/mm² to about 400 kgf/mm² in the length direction. The second substrate 200 may have a modulus of about 250 kgf/mm² to about 350 kgf/mm² in the length direction. The second substrate 200 may have a modulus of about 250 kgf/mm² to about 270 kgf/mm² in the length direction.

The second substrate 200 may have a modulus of about 200 kgf/mm² to about 400 kgf/mm² in the width direction. The second substrate 200 may have a modulus of about 250 kgf/mm² to about 350 kgf/mm² in the width direction. The second substrate 200 may have a modulus of about 250 kgf/mm² to about 270 kgf/mm² in the width direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the width direction. The second substrate 200 may have a fracture elongation of about 30% to about 130% in the width direction. The second substrate 200 may have a fracture elongation of about 40% to about 120% in the width direction.

Since the second substrate 200 has the improved mechanical strength as described above, it may efficiently protect the first transparent electrode 300, the second transparent electrode 400, the first reduction discoloration layer 500, the first oxidation discoloration layer 600 and the first electrolyte layer 700. In addition, since the second substrate 200 has the improved mechanical strength as described above, the mechanical strength of the mechanical strength of glass to be attached may be effectively reinforced.

In addition, the second substrate 200 may have high chemical resistance. Accordingly, even if an electrolyte contained in the second substrate 200 leaks, damage to the surface of the second substrate 200 may be minimized.

The second substrate 200 may include glass. The second substrate 200 may be a glass substrate.

The second substrate 200 may have improved optical properties. The second substrate 200 may have a total light transmittance of about 55% or more. The second substrate 200 may have a total light transmittance of about 70% or more. The second substrate 200 may have a total light transmittance of about 75% to about 99%. The second substrate 200 may have a total light transmittance of about 80% to about 99%.

A haze of the second substrate 200 may be about 20% or less. The haze of the second substrate 200 may be about 0.1% to about 20%. The haze of the second substrate 200 may be about 0.1% to about 10%. The haze of the second substrate 200 may be about 0.1% to about 7%.

Since the second substrate 200 has an appropriate total light transmittance and haze, the electrochromic element according to another embodiment may have improved optical properties. That is, since the second substrate 200 has an appropriate transmittance and haze, an improved appearance may be achieved by minimizing distortion of images from the outside while appropriately controlling a transmittance when the electrochromic element according to another embodiment is applied to a window.

In addition, the second substrate 200 may have an in-plane phase difference of about 100 nm to about 4000 nm. The second substrate 20 may have an in-plane phase difference of about 200 nm to about 3500 nm. The second substrate 200 may have an in-plane phase difference of about 200 nm to about 3000 nm.

The second substrate 200 may have an in-plane phase difference of about 7000 nm or more. The second substrate 200 may have an in-plane phase difference of about 7000 nm to about 50000 nm. The second substrate 200 may have an in-plane phase difference of about 8000 nm to about 20000 nm.

The in-plane phase difference may be derived from a refractive index and thickness according to the direction of the second substrate 200.

Since the second substrate 200 has the in-plane phase difference as described above, the electrochromic element according to an embodiment may have improved appearance.

The thickness of the second substrate 200 may be about 10 µm to about 200 µm. The thickness of the first substrate 100 may be about 23 µm to about 150 µm. The thickness of the first substrate 100 may be about 30 µm to about 120 µm.

The second substrate 200 may include an organic filler or an inorganic filler. The organic or inorganic filler may function as an anti-blocking agent.

An average particle diameter of the filler may be about 0.1 µm to about 5 µm The average particle diameter of the filler may be about 0.1 µm to about 3 µm. The average particle diameter of the filler may be about 0.1 µm to about 1 µm.

The filler may be at least one selected from the group consisting of silica particles, barium sulfate particles, alumina particles and titania particles.

In addition, the filler may be included in the second substrate 200 in a content of about 0.01 wt% to about 3 wt% of the total amount of the second substrate 200. The filler may be included in the second substrate 200 in a content of about 0.05 wt% to about 2 wt% of the total amount of the second substrate 200.

The second substrate 200 may have a single-layer structure. For example, the second substrate 200 may be a single-layer polyester film.

The second substrate 200 may have a multi-layer structure. For example, the second substrate 200 may be a multi-layer co-extruded film.

The first substrate 100 and the second substrate 200 may be flexible. Accordingly, Accordingly, the electrochromic element according to another embodiment may be flexible overall.

The first transparent electrode 300 is disposed on the first substrate 100. The first transparent electrode 300 may be deposited on the first substrate 100. In addition, a hard coating layer may be further included between the first transparent electrode 300 and the first substrate 100.

The first transparent electrode 300 may include at least one selected from the group consisting of tin oxide, zinc oxide, silver (Ag), chromium (Cr), indium tin oxide (ITO), fluorinedoped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the first transparent electrode 300 may include graphene, silver nanowires and/or metal mesh.

The first transparent electrode 300 may have a total light transmittance of about 80% or more. The first transparent electrode 300 may have a total light transmittance of about 85% or more. The first transparent electrode 300 may have a total light transmittance of about 88% or more.

The first transparent electrode 300 may have a haze of about 10% or less. The first transparent electrode 300 may have a haze of about 7% or less. The first transparent electrode 300 may have a haze of about 5% or less.

A surface resistance of the first transparent electrode 300 may be about 1 Ω/sq to 60 Ω/sq The surface resistance of the first transparent electrode 300 may be about 1 Ω/sq to 40 Ω/sq. The surface resistance of the first transparent electrode 300 may be about 1 Ω/sq to 30 Ω/sq.

A thickness of the first transparent electrode 300 may be about 50 nm to about 50 µm The thickness of the first transparent electrode 300 may be about 100 nm to about 10 µm. The thickness of the first transparent electrode 300 may be about 150 nm to about 5 µm.

The first transparent electrode 300 is electrically connected to the first reduction discoloration layer 500. In addition, the first transparent electrode 300 is electrically connected to the first electrolyte layer 700 through the first reduction discoloration layer 500.

The second transparent electrode 400 is disposed under the second substrate 200. The second transparent electrode 400 may be deposited on the second substrate 200. In addition, a hard coating layer may further included between the second transparent electrode 400 and the second substrate 200.

The second transparent electrode 400 may include at least one selected from the group consisting of tin oxide, zinc oxide, silver (Ag), chromium (Cr), indium tin oxide (ITO), fluorinedoped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the second transparent electrode 400 may include graphene, silver nanowires and/or metal mesh.

The second transparent electrode 400 may have a total light transmittance of about 80% or more. The second transparent electrode 400 may have a total light transmittance of about 85% or more. The second transparent electrode 400 may have a total light transmittance of about 88% or more.

The second transparent electrode 400 may have a haze of about 10% or less. The second transparent electrode 400 may have a haze of about 7% or less. The second transparent electrode 400 may have a haze of about 5% or less.

A surface resistance of the second transparent electrode 400 may be about 1 Ω/sq to 60 Ω/sq. The surface resistance of the second transparent electrode 400 may be about 1 Ω/sq to 40 Ω/sq. The surface resistance of the second transparent electrode 400 may be about 1 Ω/sq to 30 Ω/sq.

A thickness of the second transparent electrode 400 may be about 50 nm to about 50 µm. The thickness of the second transparent electrode 400 may be about 100 nm to about 10 µm. The thickness of the second transparent electrode 400 may be about 150 nm to about 5 µm.

The second transparent electrode 400 is electrically connected to the first oxidation discoloration layer 600. In addition, the second transparent electrode 400 is electrically connected to the first electrolyte layer 700 through the first oxidation discoloration layer 600.

The first reduction discoloration layer 500 is disposed on the first transparent electrode 300. The first reduction discoloration layer 500 may be directly disposed on an upper surface of the first transparent electrode 300. The first reduction discoloration layer 500 may be electrically directly connected to the first transparent electrode 300.

The first reduction discoloration layer 500 is electrically connected to the first transparent electrode 300. The first reduction discoloration layer 500 may be directly accessed to the first transparent electrode 300. In addition, the first reduction discoloration layer 500 is electrically connected to the first electrolyte layer 700. The first reduction discoloration layer 500 may be electrically connected to the first electrolyte layer 700.

The first reduction discoloration layer 500 may be discolored when supplied with electrons. The first reduction discoloration layer 500 may include a first electrochromic material whose color changes when supplied with electrons. The first electrochromic material may include at least one selected from the group consisting of tungsten oxide, niobium pentoxide, vanadium pentoxide, titanium oxide, molybdenum oxide, viologen and poly(3,4-ethylenedioxythiophene (PEDOT).

The first reduction discoloration layer 500 may include the first electrochromic material in the form of particles. The tungsten oxide, the niobium pentoxide, the vanadium pentoxide, the titanium oxide and the molybdenum oxide may be particles having a particle diameter of about 1nm to about 200 nm.

In addition, the first reduction discoloration layer 500 may further include a binder. The binder may be an inorganic binder. The binder may include a silica gel. The binder may be formed by a silica sol containing tetramethoxysilane or methyltrimethoxysilane.

The first oxidation discoloration layer 600 is disposed under the second transparent electrode 400. The first oxidation discoloration layer 600 may be directly disposed on a lower surface of the second transparent electrode 400. The first oxidation discoloration layer 600 may be electrically directly connected to the second transparent electrode 400.

The first oxidation discoloration layer 600 is electrically connected to the second transparent electrode 400. The first oxidation discoloration layer 600 may be directly accessed to the second transparent electrode 400. In addition, the first oxidation discoloration layer 600 is electrically connected to the first electrolyte layer 700. The first oxidation discoloration layer 600 may be electrically connected to the first electrolyte layer 700.

The first oxidation discoloration layer 600 may be discolored while losing electrons. The first oxidation discoloration layer 600 may include a second electrochromic material that is oxidized and discolored while losing electrons. The first oxidation discoloration layer 600 may include at least one selected from the group consisting of Prussian blue, nickel oxide and iridium oxide.

The first oxidation discoloration layer 600 may include the second electrochromic material in the form of particles. The Prussian blue, the nickel oxide and the iridium oxide may be particles having a particle diameter of about 1nm to about 200 nm.

In addition, the first oxidation discoloration layer 600 may further include the binder.

The first electrolyte layer 700 is disposed on the first reduction discoloration layer 500. In addition, the first electrolyte layer 700 is disposed under the first oxidation discoloration layer 600. The first electrolyte layer 700 is disposed between the first reduction discoloration layer 500 and the first oxidation discoloration layer 600.

The first electrolyte layer 700 may include a solid polymer electrolyte containing metal ions, an inorganic hydrate, etc. The first electrolyte layer 700 may include lithium ions (Li+), sodium ions (Na+), potassium ions (K+), etc.

Specifically, poly-AMPS, PEO/LiCF₃SO₃, etc. may be used as the solid polymer electrolyte, and Sb₂O₅ • 4H₂O, etc. may be used as the inorganic hydrate.

In addition, the first electrolyte layer 700 is a configuration that provides electrolyte ions involved in an electrochromic reaction. The electrolyte ions may be, for example, monovalent cations such as H+, Li+, Na+, K+, Rb+ or Cs+.

The first electrolyte layer 700 may include an electrolyte. For example, a liquid electrolyte, a gel polymer electrolyte, an inorganic solid electrolyte, etc. may be used as the electrolyte without limitation. In addition, the electrolyte may be used in the form of a single layer or film so as to be laminated together with the electrode or the substrate.

The type of electrolyte salt used in the first electrolyte layer 700 is not particularly limited so long as it contains a compound capable of providing monovalent cations, i.e., H⁺, Li⁺, Na⁺, K⁺, Rb⁺ or Cs⁺. For example, the first electrolyte layer 700 may include a lithium salt compound such as LiClO₄, LiBF₄, LiAsF₆, LiPF₆, LiCl, LiBr, Lil, LiB₁₀Cl₁₀, LiCF₃SO₃, LiCF₃CO₂, LiAsF₆, LiSbF₆, LiAlCl₄, CH₃SO₃Li, CF₃SO₃Li or (CF₃SO₂)₂NLi; or a sodium salt compound such as NaClO₄.

As one example, the first electrolyte layer 700 may include a Cl or F element-containing compound as an electrolyte salt. Specifically, the first electrolyte layer 700 may include one or more electrolyte salts selected from among LiClO₄, LiBF₄, LiAsF₆, LiPF₆, LiCl, LiB₁₀Cl₁₀, LiCF₃SO₃, LiCF₃CO₂, LiAsF₆, LiSbF₆, LiAlCl₄, CF₃SO₃Li, (CF₃SO₂)₂NLi and NaClO₄.

The electrolyte may additionally include a carbonate compound as a solvent. Since a carbonate compound has a high dielectric constant, it may increase ionic conductivity. As a non-limiting example, a solvent such as propylene carbonate (PC), ethylene carbonate (EC), dimethyl carbonate (DMC), diethyl carbonate (DEC) or ethylmethyl carbonate (EMC) may be used as a carbonate compound.

As another example, when the first electrolyte layer 700 includes a gel polymer electrolyte, the first electrolyte layer 700 may include a polymer such as poly-vinyl sulfonic acid, poly-styrene sulfonic acid, polyethylene sulfonic acid, poly-2-acrylamido-2methyl-propane sulfonic acid, poly-perfluoro sulfonic acid, poly-toluene sulfonic acid, poly-vinyl alcohol, polyethylene imine, poly-vinyl pyrrolidone, poly-ethylene oxide (PEO), poly-propylene oxide (PPO), poly-(ethylene oxide (siloxane PEOS), poly-(ethylene glycol, siloxane), poly-(propylene oxide, siloxane), poly-(ethylene oxide, methyl methacrylate) (PEO-PMMA), poly-(ethylene oxide, acrylic acid) (PEO PAA), poly-(propylene glycol, methyl methacrylate) (PPG PMMA), polyethylene succinate or poly-ethylene adipate. In one example, a mixture of two or more of the listed polymers or two or more copolymers may be used as a polymer electrolyte.

In addition, the first electrolyte layer 700 may include a curable resin that can be cured by ultraviolet irradiation or heat. The curable resin may be at least one selected from the group consisting of an acrylate-based oligomer, a polyethylene glycol-based oligomer, a urethanebased oligomer, a polyester-based oligomer, polyethylene glycol dimethyl and polyethylene glycol diacrylate. In addition, the first electrolyte layer 700 may include a photocurable initiator and/or a heat-curable initiator.

A thickness of the first electrolyte layer 700 may be about 10 µm to about 200 µm. The thickness of the first electrolyte layer 700 may be about 50 µm to about 150 µm.

The first electrolyte layer 700 may have a transmittance in a range of 60% to 95 %. Specifically, the first electrolyte layer 700 may have a transmittance of 60% to 95 % for visible light in a wavelength range of 380 nm to 780 nm, more specifically in a wavelength of 400 nm wavelength or 550 nm. The transmittance may be measured using a known haze meter (HM).

The first photoelectron-capping part 12 is disposed on one side of the electrochromic part 11. The first photoelectron-capping part 12 is disposed between the first substrate 100 and the second substrate 200.

The first photoelectron-capping part 12 includes a third transparent electrode 310, a second oxidation discoloration layer 610, a second electrolyte layer 710, a second reduction discoloration layer 510 and a fourth transparent electrode.

The third transparent electrode 310 is disposed on the first substrate 100. The third transparent electrode 310 is disposed next to the first transparent electrode 300. The third transparent electrode 310 may be disposed on the upper surface of the first substrate 100. The third transparent electrode 310 may be disposed on the same plane as the first transparent electrode 300.

The third transparent electrode 310 is electrically connected to the first transparent electrode 300. The third transparent electrode 310 may be physically directly connected to the first transparent electrode 300. The third transparent electrode 310 may be formed integrally with the first transparent electrode 300. That is, when the first transparent electrode 300 is formed, the third transparent electrode 310 may be formed of the same material as the first transparent electrode 300.

The second oxidation discoloration layer 610 is disposed on the third transparent electrode 310. The second oxidation discoloration layer 610 may be disposed next to the first reduction discoloration layer 500. The second oxidation discoloration layer 610 may be disposed on the same plane as the first reduction discoloration layer 500. Although not illustrated in the drawings, the second oxidation discoloration layer 610 may be spaced apart from the first reduction discoloration layer 500 by a predetermined distance.

The second oxidation discoloration layer 610 may be disposed on the upper surface of the third transparent electrode 310. The second oxidation discoloration layer 610 may be directly disposed on the upper surface of the third transparent electrode 310. The second oxidation discoloration layer 610 may be in direct contact with the upper surface of the third transparent electrode 310.

The second oxidation discoloration layer 610 may be electrically connected to the third transparent electrode 310. The second oxidation discoloration layer 610 may be electrically connected to the third transparent electrode 310 by direct contact therewith.

The second oxidation discoloration layer 610 may be discolored while losing electrons. The second oxidation discoloration layer 610 may include a second electrochromic material that is oxidized and discolored while losing electrons. The second oxidation discoloration layer 610 may include at least one selected from the group consisting of Prussian blue, nickel oxide and iridium oxide.

The second oxidation discoloration layer 610 may include the second electrochromic material in the form of particles. The Prussian blue, the nickel oxide and the iridium oxide may be particles having a particle diameter of about 1nm to about 200 nm.

In addition, the second oxidation discoloration layer 610 may further include a binder. The binder may be an inorganic binder. The binder may include a silica gel. The binder may be formed by a silica sol containing tetramethoxysilane or methyltrimethoxysilane.

The second electrolyte layer 710 is disposed on the second oxidation discoloration layer 610. The second electrolyte layer 710 is disposed on the upper surface of the second oxidation discoloration layer 610. The second oxidation discoloration layer 610 may be disposed next to the first electrolyte layer 700.

In addition, the second electrolyte layer 710 may be electrochemically connected to the second oxidation discoloration layer 610. That is, ions may move between the second electrolyte layer 710 and the second oxidation discoloration layer 610, so charges may move between the second electrolyte layer 710 and the second oxidation discoloration layer 610.

Descriptions of components included in the second electrolyte layer 710 may be substantially the same as the descriptions of the constructions included in the first electrolyte layer 700.

In addition, the thickness of the second electrolyte layer 710 may be substantially the same as the thickness of the first electrolyte layer 700.

The second electrolyte layer 710 may be formed of substantially the same components as in the first electrolyte layer 700.

The second electrolyte layer 710 may be formed integrally with the first electrolyte layer 700.

Alternatively, although not illustrated in the drawings, the second electrolyte layer 710 may be separated from the first electrolyte layer 700. A separation groove may be formed between the second electrolyte layer 710 and the first electrolyte layer 700, and the second electrolyte layer 710 and the first electrolyte layer 700 may be spaced apart from each other by a predetermined distance.

The second reduction discoloration layer 510 is disposed on the second electrolyte layer 710. The second reduction discoloration layer 510 is disposed on the upper surface of the second electrolyte layer 710. The second reduction discoloration layer 510 may be directly disposed on the upper surface of the second electrolyte layer 710.

The second reduction discoloration layer 510 is disposed next to the first oxidation discoloration layer 600. The second reduction discoloration layer 510 may be disposed on the same plane as the first oxidation discoloration layer 600.

The second reduction discoloration layer 510 may be spaced apart from the first oxidation discoloration layer 600 by a predetermined distance.

The second reduction discoloration layer 510 and the second electrolyte layer 710 are electrochemically connected to each other. That is, ions may move between the second electrolyte layer 710 and the second reduction discoloration layer 510, charges may move between so the second electrolyte layer 710 and the second reduction discoloration layer 510.

The second reduction discoloration layer 510 may be electrically connected to the fourth transparent electrode 410. The second reduction discoloration layer 510 may be electrically connected to a layer of the fourth transparent electrode 410 by direct contact therewith.

The second reduction discoloration layer 510 may include a first electrochromic material whose color changes when supplied with electrons. The first electrochromic material may include at least one selected from the group consisting of tungsten oxide, niobium pentoxide, vanadium pentoxide, titanium oxide, molybdenum oxide, viologen and poly(3,4ethylenedioxythiophene (PEDOT).

The second reduction discoloration layer 510 may include the first electrochromic material in the form of particles. The tungsten oxide, the niobium pentoxide, the vanadium pentoxide, the titanium oxide and the molybdenum oxide may be particles having a particle diameter of about 1nm to about 200 nm.

In addition, the second reduction discoloration layer 510 may further include a binder. The binder may be an inorganic binder. The binder may include a silica gel. The binder may be formed by a silica sol containing tetramethoxysilane or methyltrimethoxysilane.

The fourth transparent electrode 410 is disposed on the second reduction discoloration layer 510. The fourth transparent electrode 410 is disposed next to the second transparent electrode 400. In addition, the fourth transparent electrode 410 is disposed on the lower surface of the second substrate 200.

The fourth transparent electrode 410 is electrically connected to the second transparent electrode 400. The fourth transparent electrode 410 is accessed to the second transparent electrode 400. The fourth transparent electrode 410 may be formed integrally with the second transparent electrode 400.

The second photoelectron capping part 13 includes a fifth transparent electrode 320, a third oxidation discoloration layer 620, a third electrolyte layer 720, a third reduction discoloration layer 520 and a sixth transparent electrode 420.

The fifth transparent electrode 320 is disposed on the first substrate 100. The fifth transparent electrode 320 is disposed next to the first transparent electrode 300. The fifth transparent electrode 320 may be disposed on the upper surface of the first substrate 100. The fifth transparent electrode 320 may be disposed on the same plane as the first transparent electrode 300.

The fifth transparent electrode 320 is electrically connected to the first transparent electrode 300. The fifth transparent electrode 320 may be physically directly connected to the first transparent electrode 300. The fifth transparent electrode 320 may be formed integrally with the first transparent electrode 300. That is, when the first transparent electrode 300 is formed, the fifth transparent electrode 320 may be formed of the same material as the first transparent electrode 300.

The third oxidation discoloration layer 620 is disposed on the fifth transparent electrode 320. The third oxidation discoloration layer 620 may be disposed next to the first reduction discoloration layer 500. The third oxidation discoloration layer 620 may be disposed on the same plane as the first reduction discoloration layer 500. Although not illustrated in the drawings, the third oxidation discoloration layer 620 may be spaced apart from the first reduction discoloration layer 500 by a predetermined distance.

The third oxidation discoloration layer 620 may be disposed on the upper surface of the fifth transparent electrode 320. The third oxidation discoloration layer 620 may be directly disposed on the upper surface of the fifth transparent electrode 320. The third oxidation discoloration layer 620 may be in direct contact with the upper surface of the fifth transparent electrode 320.

The third oxidation discoloration layer 620 may be electrically connected to the fifth transparent electrode 320. The third oxidation discoloration layer 620 may be electrically connected to a layer of the fifth transparent electrode 320 by direct contact therewith.

The third oxidation discoloration layer 620 may be discolored while losing electrons. The third oxidation discoloration layer 620 may include a second electrochromic material that is oxidized and discolored while losing electrons. The third oxidation discoloration layer 620 may include at least one selected from the group consisting of Prussian blue, nickel oxide and iridium oxide.

The third oxidation discoloration layer 620 may include the second electrochromic material in the form of particles. The Prussian blue, the nickel oxide and the iridium oxide may be particles having a particle diameter of about 1nm to about 200 nm.

In addition, the third oxidation discoloration layer 620 may further include a binder. The binder may be an inorganic binder. The binder may include a silica gel. The binder may be formed by a silica sol containing tetramethoxysilane or methyltrimethoxysilane.

The third electrolyte layer 720 is disposed on the third oxidation discoloration layer 620. The third electrolyte layer 720 is disposed on the upper surface of the third oxidation discoloration layer 620. The third oxidation discoloration layer 620 may be disposed next to the first electrolyte layer 700.

In addition, the third electrolyte layer 720 may be electrochemically connected to the third oxidation discoloration layer 620. That is, ions may move between the third electrolyte layer 720 and the third oxidation discoloration layer 620, so charges may move between the third electrolyte layer 720 and the third oxidation discoloration layer 620.

Descriptions of components included in the third electrolyte layer 720 may be substantially the same as the descriptions of constructions included in the first electrolyte layer 700.

In addition, the thickness of the third electrolyte layer 720 may be substantially the same as the thickness of the first electrolyte layer 700.

The third electrolyte layer 720 may be formed of substantially the same components as in the first electrolyte layer 700.

The third electrolyte layer 720 may be formed integrally with the first electrolyte layer 700.

Alternatively, although not illustrated in the drawings, the third electrolyte layer 720 may be separated from the first electrolyte layer 700. A separation groove may be formed between the third electrolyte layer 720 and the first electrolyte layer 700, and the third electrolyte layer 720 and the first electrolyte layer 700 may be spaced apart from each other by a predetermined distance.

The third reduction discoloration layer 520 is disposed on the third electrolyte layer 720. The third reduction discoloration layer 520 is disposed on the upper surface of the third electrolyte layer 720. The second reduction discoloration layer 510 may be directly disposed on the upper surface of the third electrolyte layer 720.

The third reduction discoloration layer 520 is disposed next to the first oxidation discoloration layer 600. The third reduction discoloration layer 520 may be disposed on the same plane as the first oxidation discoloration layer 600.

The third reduction discoloration layer 520 may be spaced apart from the first oxidation discoloration layer 600 by a predetermined distance.

The third reduction discoloration layer 520 and the third electrolyte layer 720 are electrochemically connected to each other. That is, ions may move between the third electrolyte layer 720 and the third reduction discoloration layer 520, so charges may move between the third electrolyte layer 720 and the third reduction discoloration layer 520.

The third reduction discoloration layer 520 may be electrically connected to the sixth transparent electrode 420. The third reduction discoloration layer 520 may be electrically connected to a layer of the sixth transparent electrode 420 by direct contact therewith.

The third reduction discoloration layer 520 may include a first electrochromic material whose color changes when supplied with electrons. The first electrochromic material may include at least one selected from the group consisting of tungsten oxide, niobium pentoxide, vanadium pentoxide, titanium oxide, molybdenum oxide, viologen and poly(3,4-ethylenedioxythiophene (PEDOT).

The third reduction discoloration layer 520 may include the first electrochromic material in the form of particles. The tungsten oxide, the niobium pentoxide, the vanadium pentoxide, the titanium oxide and the molybdenum oxide may be particles having a particle diameter of about 1nm to about 200 nm.

In addition, the third reduction discoloration layer 520 may further include a binder. The binder may be an inorganic binder. The binder may include a silica gel. The binder may be formed by a silica sol containing tetramethoxysilane or methyltrimethoxysilane.

The sixth transparent electrode 420 is disposed on the third reduction discoloration layer 520. The sixth transparent electrode 420 is disposed next to the second transparent electrode 400. In addition, the sixth transparent electrode 420 is disposed on the lower surface of the second substrate 200.

The sixth transparent electrode 420 is electrically connected to the second transparent electrode 400. The sixth transparent electrode 420 is accessed to the second transparent electrode 400. The sixth transparent electrode 420 may be formed integrally with the second transparent electrode 400.

The first bus bar is disposed on the first transparent electrode 300. The first bus bar is accessed to the first transparent electrode 300. The first bus bar may be electrically connected to the first transparent electrode 300. The first bus bar may be in direct contact with the upper surface of the first transparent electrode 300. The first bus bar may access to the first transparent electrode 300 through solder.

The second bus bar is disposed under the second transparent electrode 400. The second bus bar is accessed to the second transparent electrode 400.

The second bus bar may be electrically connected to the second transparent electrode 400. The second bus bar may be in direct contact with the lower surface of the second transparent electrode 400. The second bus bar may access to the second transparent electrode 400 through solder.

The first bus bar and/or the second bus bar may include a metal. The first bus bar and/or the second bus bar may include a metal ribbon. The first bus bar and/or the second bus bar may include a conductive paste. The first bus bar and/or the second bus bar may include a binder and a conductive filler.

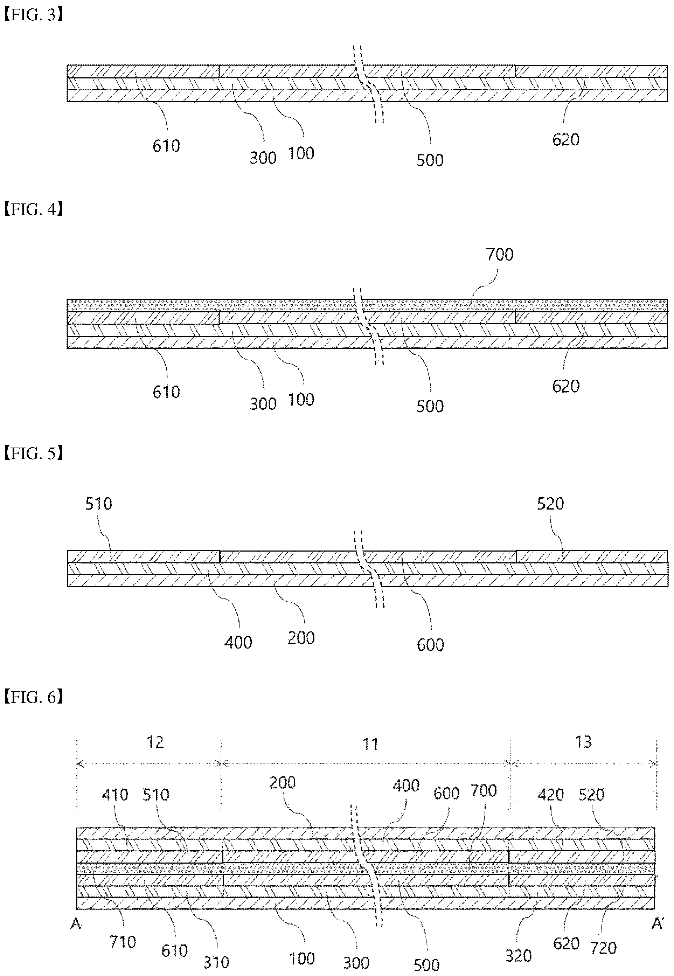

The electrochromic element according to an embodiment may be fabricated by the following method. FIGS. 3 to 6 are sectional views illustrating processes of fabricating the electrochromic element according to an embodiment.

Referring to FIG. 3, a first transparent electrode 300 is formed on a first substrate 100. The first transparent electrode 300 may be formed by a vacuum deposition process. A metal oxide such as indium tin oxide may be deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that a first transparent electrode 300 including a metal mesh may be formed on the first substrate 100.

Next, a first reduction discoloration layer 500, a second oxidation discoloration layer 610 and a third oxidation discoloration layer 620 are formed on the first transparent electrode 300.

The first reduction discoloration layer 500 may be formed by a sol-gel coating process. A first sol solution including a first electrochromic material, a binder and a solvent may be coated on the first transparent electrode 300. A sol-gel reaction may occur in the coated first sol solution, and the first reduction discoloration layer 500 may be formed.

The first sol solution may include the first discoloration material in the form of particles in a content of about 5 wt% to about 30 wt%. The first sol solution may include the binder in a content of about 5 wt% to about 30 wt%. The first sol solution may include the solvent in a content of about 60 wt% to about 90 wt%.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

In addition, the second oxidation discoloration layer 610 and the third oxidation discoloration layer 620 are formed on the first transparent electrode 300. The second oxidation discoloration layer 610 and the third oxidation discoloration layer 620 may be formed by a sol-gel coating process. A second sol solution including a second electrochromic material, a binder and a solvent may be coated on the first transparent electrode 300. A sol-gel reaction may occur in the coated second sol solution, and the second oxidation discoloration layer 610 and the third oxidation discoloration layer 620 may be formed.

The second sol solution may include the second discoloration material in the form of particles in a content of about 5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

Referring to FIG. 4, an electrolyte composition for forming an electrolyte layer 700 is formed on the first reduction discoloration layer 500, the second oxidation discoloration layer 610 and the third oxidation discoloration layer 620.

The electrolyte composition may include a metal salt, an electrolyte, a photocurable resin and a photocurable initiator. The photocurable resin may be at least one selected from the group consisting of hexandiol diacrylate (HDDA), tripropylene glycoldiacrylate, ethylene glycoldiacrylate (EGDA), trimethylolpropane triacrylate (TMPTA), trimethylolpropane ethoxylated triacrylate (TMPEOTA), glycerol propoxylated triacrylate (GPTA), pentaerythritol tetraacrylate (PETA), and dipentaerythritol hexaacrylate (DPHA).

The metal salt, the electrolyte and the photocurable initiator may be the same as described above.

The electrolyte layer 700 may include a separation groove formed along a boundary between the first reduction discoloration layer 500 and the second oxidation discoloration layer 610. In addition, the electrolyte layer may include a separation groove formed along a boundary between the first reduction discoloration layer 500 and the third oxidation discoloration layer 620.

Referring to FIG. 5, the second transparent electrode 400 is formed on the second substrate 200.

The second transparent electrode 400 may be formed by a vacuum deposition process. A metal oxide such as indium tin oxide may be deposited on the second substrate 200 by a sputtering process, etc., thereby forming the second transparent electrode 400.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a second transparent electrode 400 including a metal mesh may be formed on the second substrate 200.

Next, a first oxidation discoloration layer 600, a second reduction discoloration layer 510 and a third reduction discoloration layer 520 are formed on the second transparent electrode 400.

The first oxidation discoloration layer 600 may be formed by a sol-gel coating process. A second sol solution including a second electrochromic material, a binder and a solvent may be coated on the second transparent electrode 400. A sol-gel reaction may occur in the coated second sol solution, and the first oxidation discoloration layer 600 may be formed.

The second sol solution may include the second discoloration material in the form of particles in a content of about 5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

The second reduction discoloration layer 510 and the third reduction discoloration layer 520 may be formed by a sol-gel coating process. A first sol solution including the first electrochromic material, the binder and the solvent may be coated on the second transparent electrode 400. A sol-gel reaction may occur in the coated first sol solution, and the second reduction discoloration layer 510 and the third reduction discoloration layer 520 may be formed.

The first sol solution may include the first discoloration material in the form of particles in a content of about 5 wt% to about 30 wt%. The first sol solution may include the binder in a content of about 5 wt% to about 30 wt%. The first sol solution may include the solvent in a content of about 60 wt% to about 90 wt%.

The first sol solution may additionally include a dispersant.

Referring to FIG. 6, the second substrate 200, the second transparent electrode 400, the first oxidation discoloration layer 600, the second reduction discoloration layer 510 and the third reduction discoloration layer 520 are laminated on the coated electrolyte composition. Here, the first oxidation discoloration layer 600, the second reduction discoloration layer 510 and the third reduction discoloration layer 520 are brought into direct contact with the coated electrolyte composition.

Next, the coated electrolyte composition is cured by light, and a first laminate including the first substrate 100, the first transparent electrode 300, the first reduction discoloration layer 500, the second oxidation discoloration layer 610 and the third oxidation discoloration layer 620 and a second laminate including the second substrate 200, the second transparent electrode 400, the first oxidation discoloration layer 600, the second reduction discoloration layer 510 and the third reduction discoloration layer 520 are laminated to each other. That is, the first laminate and the second laminate may be adhered to each other by the first electrolyte layer 700.

The first reduction discoloration layer 500 receives cations, included in the first electrolyte layer 700, by driving voltage applied to the first transparent electrode 300 and the second transparent electrode 400. Accordingly, the electrochromic part 11 may be colored, and the light transmittance of the electrochromic element according to an embodiment may be reduced.

At the same time, the first oxidation discoloration layer 600 may release cations to the first electrolyte layer 700 by the driving voltage applied to the first transparent electrode 300 and the second transparent electrode 400. Accordingly, the electrochromic part 11 may be colored, and the light transmittance of the electrochromic element according to an embodiment may be reduced.

In addition, when light from the outside is incident on the electrochromic part 11, the electrochromic part 11 may generate photoelectrons. Here, the photoelectrons may be captured by the first photoelectron-capping part 12. When the first photoelectron-capping part 12 captures the photoelectrons, the second reduction discoloration layer 510 may receive cations included in the second electrolyte layer 710. Accordingly, the first photoelectron-capping part may efficiently cap the photoelectrons.

Similarly, when light from the outside is incident on the electrochromic part 11, the electrochromic part 11 may generate photoelectrons. Here, the photoelectrons may be captured by the second photoelectron capping part 13. When the second photoelectron capping part 13 captures the photoelectrons, the third reduction discoloration layer 520 may receive cations included in the third electrolyte layer 720. Accordingly, the second photoelectron capping part may efficiently cap the photoelectrons.

In addition, when light from the outside is incident on the electrochromic part 11, the electrochromic part 11 may generate photoelectrons. Here, the photoelectrons may be captured by the first photoelectron-capping part 12. When the first photoelectron-capping part 12 captures the photoelectrons, the second oxidation discoloration layer 610 may release cations to the second electrolyte layer 710. Accordingly, the first photoelectron-capping part may efficiently cap the photoelectrons.

Similarly, when light from the outside is incident on the electrochromic part 11, the electrochromic part 11 may generate photoelectrons. Here, the photoelectrons may be captured by the second photoelectron capping part 13. When the second photoelectron capping part 13 captures the photoelectrons, the third oxidation discoloration layer 620 may release cations to the third electrolyte layer 720. Accordingly, the second photoelectron capping part may efficiently cap the photoelectrons.

The electrochromic element according to an embodiment includes the photoelectron capping parts 12 and 13. When external light is incident on the electrochromic part 11, photoelectrons may be generated. The photoelectrons may be accommodated in the photoelectron capping parts 12 and 13.

Accordingly, the electrochromic element according to an embodiment may suppress an additional reaction by the photoelectrons, and may prevent the durability of the electrochromic part 11 from being reduced by the additional reaction.

In particular, the photoelectron capping parts 12 and 13 are disposed between the first substrate 100 and the second substrate 200. In addition, the first transparent electrode 300 and the third transparent electrode 310 may be formed integrally, and the second transparent electrode 400 and the fourth transparent electrode 410 may be formed integrally. In addition, the first transparent electrode 300 and the fifth transparent electrode 320 may be formed integrally, and the second transparent electrode 400 and the sixth transparent electrode 420 may be formed integrally.

Accordingly, photoelectrons generated in the electrochromic part 11 may be easily transferred to the first photoelectron-capping part 12 through the first transparent electrode 300, the second transparent electrode 400, the third transparent electrode 310 and the fourth transparent electrode 410. Similarly, photoelectrons generated in the electrochromic part 11 may be easily transferred to the second photoelectron capping part 13 through the first transparent electrode 300, the second transparent electrode 400, the fifth transparent electrode 320 and the sixth transparent electrode 420.

Accordingly, the electrochromic element according to an embodiment may have a simple structure and may easily capture the photoelectrons.

In particular, the photoelectron capping parts 12 and 13 may be inserted into the first substrate 100 and the second substrate 200. Accordingly, the electrochromic element according to an embodiment may have a simple structure and improved durability.

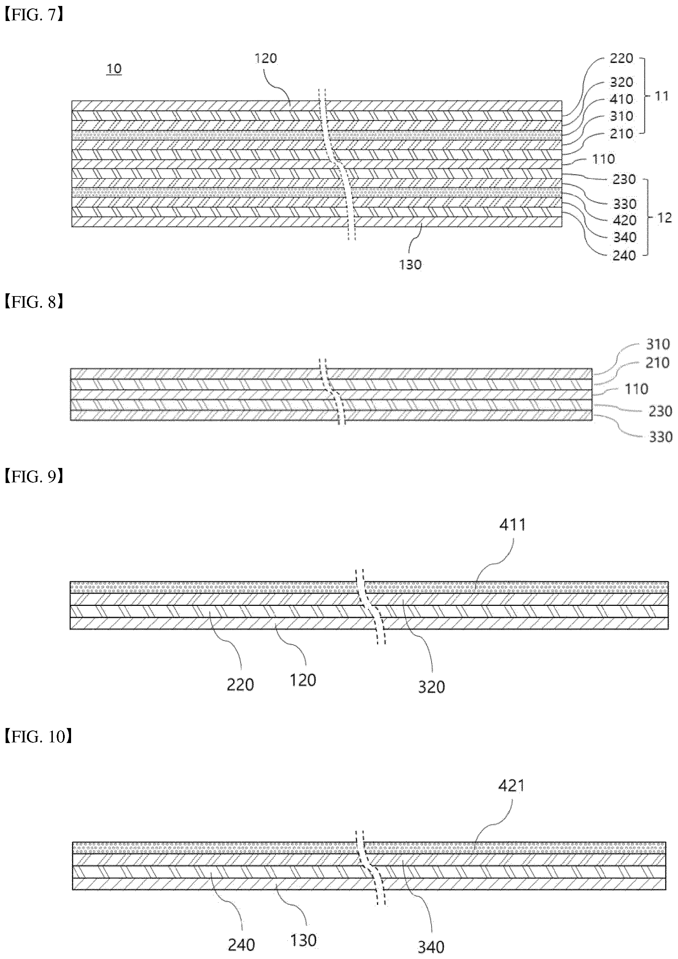

FIG. 7 is a sectional view illustrating the cross-section of an electrochromic element according to another embodiment cut in a width direction.

Referring to FIG. 7, an electrochromic element 10 according to an embodiment includes a first substrate 110, a second substrate 120, a third substrate 130, a first electrochromic part 11 and a second electrochromic part 12.

Together with the second substrate 120 and the third substrate 130, the first substrate 110 supports the first electrochromic part 11 and the second electrochromic part 12.

In addition, the first electrochromic part 11 is sandwiched between the first substrate 110 and the second substrate 120. The second electrochromic part 12 is sandwiched between the first substrate 110 and the third substrate 130.

The first substrate 110 may include a polymer resin. The first substrate 110 may include at least one selected from the group consisting of a polyester-based resin, a polyimidebased resin, a cyclic olefin polymer resin, a polyethersulfone, a polycarbonate and a polyolefinbased resin.

The first substrate 110 may include a polyester resin as a main component. The first substrate 110 may include polyethylene terephthalate. The first substrate 110 may include the polyethylene terephthalate in a content of about 90 wt% or more based on the total composition amount. The first substrate 110 may include the polyethylene terephthalate in a content of about 95 wt% or more based on the total composition amount. The first substrate 110 may include the polyethylene terephthalate in a content of about 97 wt% or more based on the total composition amount. The first substrate 110 may include the polyethylene terephthalate in a content of about 98 wt% or more based on the total composition amount.

The first substrate 110 may include a uniaxially or biaxially stretched polyethylene terephthalate film. The first substrate 110 may include a polyethylene terephthalate film stretched about 2 to about 5 times in a longitudinal direction and/or width direction.

The first substrate 110 may have high mechanical properties to reinforce the glass when applied to a window of a building or a vehicle.

The first substrate 110 may have a tensile strength of about 7 kgf/mm² to about 40 kgf/mm² in the longitudinal direction. The first substrate 110 may have a tensile strength of about 8 kgf/mm² to about 35 kgf/mm² in the longitudinal direction.

The first substrate 110 may have a tensile strength of about 7 kgf/mm² to about 40 kgf/mm² in the width direction. The first substrate 110 may have a tensile strength of about 8 kgf/mm² to about 35 kgf/mm² in the width direction.

The first substrate 110 may have a modulus of about 200 kgf/mm² to about 400 kgf/mm² in the longitudinal direction. The first substrate 110 may have a modulus of about 250 kgf/mm² to about 350 kgf/mm² in the longitudinal direction. The first substrate 110 may have a modulus of about 250 kgf/mm² to about 270 kgf/mm² in the longitudinal direction.

The first substrate 110 may have a modulus of about 200 kgf/mm² to about 400 kgf/mm² in the width direction. The first substrate 110 may have a modulus of about 250 kgf/mm² to about 350 kgf/mm² in the width direction. The first substrate 110 may have a modulus of about 250 kgf/mm² to about 270 kgf/mm² in the width direction.

The first substrate 110 may have a fracture elongation of about 30% to about 150% in the width direction. The first substrate 110 may have a fracture elongation of about 30% to about 130% in the width direction. The first substrate 110 may have a fracture elongation of about 40% to about 120% in the width direction.

The first substrate 110 may have a fracture elongation of about 30% to about 150% in the longitudinal direction. The first substrate 110 may have a fracture elongation of about 30% to about 130% in the longitudinal direction. The first substrate 110 may have a fracture elongation of about 40% to about 120% in the longitudinal direction.

The first substrate 110 may have a fracture elongation of about 30% to about 150% in the width direction. The first substrate 110 may have a fracture elongation of about 30% to about 130% in the width direction. The first substrate 110 may have a fracture elongation of about 40% to about 120% in the width direction.

The modulus, the fracture elongation and the tensile strength may be measured according to KS B 5521.

In addition, the modulus, the tensile strength and the fracture elongation may be measured according to ASTM D882.

Since the first substrate 110 has the improved mechanical strength as described above, it may efficiently protect the first electrochromic part 11 and the second electrochromic part 12. In addition, since the first substrate 110 has the improved mechanical strength as described above, the mechanical strength of the mechanical strength of glass to be attached may be effectively reinforced.

The first substrate 110 may include glass. The first substrate 110 may be a glass substrate.

In addition, the first substrate 110 may have high chemical resistance. Accordingly, even if an electrolyte included in the first electrochromic part 11 and/or the second electrochromic part 12 leaks into the first substrate 110, damage to the surface of the first substrate 110 may be minimized.

The first substrate 110 may have improved optical properties. A total light transmittance of the first substrate 110 may be about 55% or more. The total light transmittance of the first substrate 110 may be about 70% or more. The total light transmittance of the first substrate 110 may be about 75% to about 99%. The total light transmittance of the first substrate 110 may be about 80% to about 99%.

A haze of the first substrate 110 may be about 20% or less. The haze of the first substrate 110 may be about 0.1% to about 20%. The haze of the first substrate 110 may be about 0.1% to about 10%. The haze of the first substrate 110 may be about 0.1% to about 7%.

The total light transmittance and the haze may be measured according to ASTM D 1003, etc.

Since the first substrate 110 has an appropriate total light transmittance and haze, the electrochromic element according to another embodiment may have improved optical properties. That is, since the first substrate 110 has an appropriate transmittance and haze, an improved appearance may be achieved by minimizing distortion of images from the outside while appropriately controlling a transmittance when the electrochromic element according to another embodiment is applied to a window.

In addition, the first substrate 110 may have an in-plane phase difference of about 100 nm to about 4000 nm. The first substrate 110 may have an in-plane phase difference of about 200 nm to about 3500 nm. The first substrate 110 may have an in-plane phase difference of about 200 nm to about 3000 nm.

The first substrate 110 may have an in-plane phase difference of about 7000 nm or more. The first substrate 110 may have an in-plane phase difference of about 7000 nm to about 50000 nm. The first substrate 110 may have an in-plane phase difference of about 8000 nm to about 20000 nm.

The in-plane phase difference may be derived from a refractive index and thickness according to the direction of the first substrate 110.

Since the first substrate 110 has the in-plane phase difference as described above, the electrochromic film according to another embodiment may have an improved appearance.

The thickness of the first substrate 110 may be about 10 µm to about 200 µm. The thickness of the first substrate 110 may be about 23 µm to about 150 µm. The thickness of the first substrate 110 may be about 30 µm to about 120 µm.

The first substrate 110 may include an organic filler or an inorganic filler. The organic or inorganic filler may function as an anti-blocking agent.

An average particle diameter of the filler may be about 0.1 µm to about 5 µm. The average particle diameter of the filler may be about 0.1 µm to about 3 µm. The average particle diameter of the filler may be about 0.1 µm to about 1 µm.

The filler may be at least one selected from the group consisting of silica particles, barium sulfate particles, alumina particles and titania particles.

In addition, the filler may be included in the first substrate 110 in a content of about 0.01 wt% to about 3 wt% based on the total amount of the first substrate 110. The filler may be included in the first substrate 110 in a content of about 0.05 wt% to about 2 wt% based on the total amount of the first substrate 110.

The first substrate 110 may have a single-layer structure. For example, the first substrate 110 may be a single-layer polyester film.

The first substrate 110 may have a multi-layer structure. For example, the first substrate 110 may be a multi-layer co-extruded film. The multi-layer co-extruded structure may include a center layer, a first surface layer and a second surface layer. The filler may be included in the first surface layer and the second surface layer.

The second substrate 120 faces the first substrate 110. The second substrate 120 is disposed on the first substrate 110. One end of the second substrate 120 may be disposed to be misaligned with one end of the first substrate 110. The other end of the second substrate 120 may be disposed to be misaligned with the other end of the first substrate 110.

Together with the first substrate 110, the second substrate 120 supports the first electrochromic part 11.

In addition, the first electrochromic part 11 is sandwiched between the second substrate 120 and the first substrate 110. The second substrate 120 may protect the first electrochromic part 11 from external physical impact and chemical impact.

The second substrate 120 may include a polymer resin. The second substrate 120 may include at least one selected from the group consisting of a polyester-based resin, a polyimidebased resin, a cyclic olefin polymer resin, a polyethersulfone, a polycarbonate and a polyolefinbased resin.

The second substrate 120 may include a polyester resin as a main component. The second substrate 120 may include polyethylene terephthalate. The second substrate 120 may include the polyethylene terephthalate in a content of about 90 wt% or more based on the total composition amount. The second substrate 120 may include the polyethylene terephthalate in a content of about 95 wt% or more based on the total composition amount. The second substrate 120 may include the polyethylene terephthalate in a content of about 97 wt% or more based on the total composition amount. The second substrate 120 may include the polyethylene terephthalate in a content of about 98 wt% or more based on the total composition amount.

The second substrate 120 may include a uniaxially or biaxially stretched polyethylene terephthalate film. The second substrate 120 may include a polyethylene terephthalate film stretched about 2 to about 5 times in a longitudinal direction and/or width direction.

The second substrate 120 may have high mechanical properties to reinforce the glass when applied to a window of a building or a vehicle.

The second substrate 120 may have a tensile strength of about 7 kgf/mm² to about 40 kgf/mm² in the length direction. The second substrate 120 may have a tensile strength of about 8 kgf/mm² to about 35 kgf/mm² in the length direction.

The second substrate 120 may have a tensile strength of about 7 kgf/mm² to about 40 kgf/mm² in the width direction. The second substrate 120 may have a tensile strength of about 8 kgf/mm² to about 35 kgf/mm² in the width direction.

The second substrate 120 may have a modulus of about 200 kgf/mm² to about 400 kgf/mm² in the length direction. The second substrate 120 may have a modulus of about 250 kgf/mm² to about 350 kgf/mm² in the length direction. The second substrate 120 may have a modulus of about 250 kgf/mm² to about 270 kgf/mm² in the length direction.

The second substrate 120 may have a modulus of about 200 kgf/mm² to about 400 kgf/mm² in the width direction. The second substrate 120 may have a modulus of about 250 kgf/mm² to about 350 kgf/mm² in the width direction. The second substrate 120 may have a modulus of about 250 kgf/mm² to about 270 kgf/mm² in the width direction.

The second substrate 120 may have a fracture elongation of about 30% to about 150% in the length direction. The second substrate 120 may have a fracture elongation of about 30% to about 130% in the length direction. The second substrate 120 may have a fracture elongation of about 40% to about 120% in the length direction.

The second substrate 120 may have a fracture elongation of about 30% to about 150% in the length direction. The second substrate 120 may have a fracture elongation of about 30% to about 130% in the length direction. The second substrate 120 may have a fracture elongation of about 40% to about 120% in the length direction.

The second substrate 120 may have a fracture elongation of about 30% to about 150% in the width direction. The second substrate 120 may have a fracture elongation of about 30% to about 130% in the width direction. The second substrate 120 may have a fracture elongation of about 40% to about 120% in the width direction.

Since the second substrate 120 has the improved mechanical strength as described above, it may efficiently protect the first electrochromic part 11. In addition, since the second substrate 120 has the improved mechanical strength as described above, the mechanical strength of the mechanical strength of glass to be attached may be effectively reinforced.

The second substrate 120 may include glass. The second substrate 120 may be a glass substrate.

In addition, the second substrate 120 may have high chemical resistance. Accordingly, even if an electrolyte included in the first electrochromic part 11 leaks into the second substrate 120, damage to the surface of the second substrate 120 may be minimized.

The second substrate 120 may have improved optical properties. The second substrate 120 may have a total light transmittance of about 55% or more. The second substrate 120 may have a total light transmittance of about 70% or more. The second substrate 120 may have a total light transmittance of about 75% to about 99%. The second substrate 120 may have a total light transmittance of about 80% to about 99%.

A haze of the second substrate 120 may be about 20% or less. The haze of the second substrate 120 may be about 0.1% to about 20%. The haze of the second substrate 120 may be about 0.1% to about 10%. The haze of the second substrate 120 may be about 0.1% to about 7%.

Since the second substrate 120 has an appropriate total light transmittance and haze, the electrochromic element according to another embodiment may have improved optical properties. That is, since the second substrate 120 has an appropriate transmittance and haze, an improved appearance may be achieved by minimizing distortion of images from the outside while appropriately controlling a transmittance when the electrochromic element according to another embodiment is applied to a window.

In addition, the second substrate 120 may have an in-plane phase difference of about 100 nm to about 4000 nm. The second substrate 120 may have an in-plane phase difference of about 200 nm to about 3500 nm. The second substrate 120 may have an in-plane phase difference of about 200 nm to about 3000 nm.

The second substrate 120 may have an in-plane phase difference of about 7000 nm or more. The second substrate 120 may have an in-plane phase difference of about 7000 nm to about 50000 nm. The second substrate 120 may have an in-plane phase difference of about 8000 nm to about 20000 nm.

The in-plane phase difference may be derived from a refractive index and thickness according to the direction of the second substrate 120.

Since the second substrate 120 has the in-plane phase difference as described above, the electrochromic element according to an embodiment may have improved appearance.

The thickness of the second substrate 120 may be about 10 µm to about 200 µm. The thickness of the second substrate 120 may be about 23 µm to about 150 µm The thickness of the second substrate 120 may be about 30 µm to about 120 µm.

The second substrate 120 may include an organic filler or an inorganic filler. The organic or inorganic filler may function as an anti-blocking agent.

An average particle diameter of the filler may be about 0.1 µm to about 5 µm The average particle diameter of the filler may be about 0.1 µm to about 3 µm. The average particle diameter of the filler may be about 0.1 µm to about 1 µm.

The filler may be at least one selected from the group consisting of silica particles, barium sulfate particles, alumina particles and titania particles.

In addition, the filler may be included in the second substrate 120 in a content of about 0.01 wt% to about 3 wt% of the total amount of the second substrate 120. The filler may be included in the second substrate 120 in a content of about 0.05 wt% to about 2 wt% of the total amount of the second substrate 120.

The second substrate 120 may have a single-layer structure. For example, the second substrate 120 may be a single-layer polyester film.

The second substrate 120 may have a multi-layer structure. For example, the second substrate 120 may be a multi-layer co-extruded film.

The third substrate 130 faces the first substrate 110. The third substrate 130 is disposed under the first substrate 110. One end of the third substrate 130 may be disposed so as to be misaligned with one end of the first substrate 110. The other end of the third substrate 130 may be disposed so as to be misaligned with the other end of the first substrate 110.

Together with the first substrate 110, the third substrate 130 supports the second electrochromic part 12.

In addition, the second electrochromic part 12 is sandwiched between the third substrate 130 and the first substrate 110. The third substrate 130 may protect the second electrochromic part 12 from external physical impact and chemical impact.

The third substrate 130 may include a polymer resin. The third substrate 130 may include at least one selected from the group consisting of a polyester-based resin, a polyimidebased resin, a cyclic olefin polymer resin, a polyethersulfone, a polycarbonate and a polyolefinbased resin.

The third substrate 130 may include a polyester resin as a main component. The third substrate 130 may include polyethylene terephthalate. The third substrate 130 may include the polyethylene terephthalate in a content of about 90 wt% or more based on the total composition amount. The third substrate 130 may include the polyethylene terephthalate in a content of about 95 wt% or more based on the total composition amount. The third substrate 130 may include the polyethylene terephthalate in a content of about 97 wt% or more based on the total composition amount. The third substrate 130 may include the polyethylene terephthalate in a content of about 98 wt% or more based on the total composition amount.

The third substrate 130 may include a uniaxially or biaxially stretched polyethylene terephthalate film. The third substrate 130 may include a polyethylene terephthalate film stretched about 2 to about 5 times in a longitudinal direction and/or width direction.

The third substrate 130 may have high mechanical properties to reinforce the glass when applied to a window of a building or a vehicle.

The third substrate 130 may have a tensile strength of about 7 kgf/mm² to about 40 kgf/mm² in the length direction. The third substrate 130 may have a tensile strength of about 8 kgf/mm² to about 35 kgf/mm² in the length direction.

The third substrate 130 may have a tensile strength of about 7 kgf/mm² to about 40 kgf/mm² in the width direction. The third substrate 130 may have a tensile strength of about 8 kgf/mm² to about 35 kgf/mm² in the width direction.

The third substrate 130 may have a modulus of about 200 kgf/mm² to about 400 kgf/mm² in the length direction. The third substrate 130 may have a modulus of about 250 kgf/mm² to about 350 kgf/mm² in the length direction. The third substrate 130 may have a modulus of about 250 kgf/mm² to about 270 kgf/mm² in the length direction.

The third substrate 130 may have a modulus of about 200 kgf/mm² to about 400 kgf/mm² in the width direction. The third substrate 130 may have a modulus of about 250 kgf/mm² to about 350 kgf/mm² in the width direction. The third substrate 130 may have a modulus of about 250 kgf/mm² to about 270 kgf/mm² in the width direction.

The third substrate 130 may have a fracture elongation of about 30% to about 150% in the length direction. The third substrate 130 may have a fracture elongation of about 30% to about 130% in the length direction. The third substrate 130 may have a fracture elongation of about 40% to about 120% in the length direction.

The third substrate 130 may have a fracture elongation of about 30% to about 150% in the length direction. The third substrate 130 may have a fracture elongation of about 30% to about 130% in the length direction. The third substrate 130 may have a fracture elongation of about 40% to about 120% in the length direction.

The third substrate 130 may have a fracture elongation of about 30% to about 150% in the width direction. The third substrate 130 may have a fracture elongation of about 30% to about 130% in the width direction. The third substrate 130 may have a fracture elongation of about 40% to about 120% in the width direction.

Since the third substrate 130 has the improved mechanical strength as described above, it may efficiently protect the second electrochromic part 12. In addition, since the third substrate 130 has the improved mechanical strength as described above, the mechanical strength of the mechanical strength of glass to be attached may be effectively reinforced.

In addition, the third substrate 130 may have high chemical resistance. Accordingly, even if an electrolyte included in the second electrochromic part 12 leaks into the third substrate 130, damage to the surface of the third substrate 130 may be minimized.

The third substrate 130 may have improved optical properties. The third substrate 130 may have a total light transmittance of about 55% or more. The third substrate 130 may have a total light transmittance of about 70% or more. The third substrate 130 may have a total light transmittance of about 75% to about 99%. The third substrate 130 may have a total light transmittance of about 80% to about 99%.

A haze of the third substrate 130 may be about 20% or less. The haze of the third substrate 130 may be about 0.1% to about 20%. The haze of the third substrate 130 may be about 0.1% to about 10%. The haze of the third substrate 130 may be about 0.1% to about 7%.

Since the third substrate 130 has an appropriate total light transmittance and haze, the electrochromic element according to another embodiment may have improved optical properties. That is, since the third substrate 130 has an appropriate transmittance and haze, an improved appearance may be achieved by minimizing distortion of images from the outside while appropriately controlling a transmittance when the electrochromic element according to another embodiment is applied to a window.

In addition, the third substrate 130 may have an in-plane phase difference of about 100 nm to about 4000 nm. The third substrate 130 may have an in-plane phase difference of about 200 nm to about 3500 nm. The third substrate 130 may have an in-plane phase difference of about 200 nm to about 3000 nm.

The third substrate 130 may have an in-plane phase difference of about 7000 nm or more. The third substrate 130 may have an in-plane phase difference of about 7000 nm to about 50000 nm. The third substrate 130 may have an in-plane phase difference of about 8000 nm to about 20000 nm.

The in-plane phase difference may be derived from a refractive index and thickness according to the direction of the third substrate 130.

Since the third substrate 130 has the in-plane phase difference as described above, the electrochromic element according to an embodiment may have improved appearance.

The thickness of the third substrate 130 may be about 10 µm to about 200 µm. The thickness of the third substrate 130 may be about 23 µm to about 150 µm The thickness of the third substrate 130 may be about 30 µm to about 120 µm.

The third substrate 130 may include an organic filler or an inorganic filler. The organic or inorganic filler may function as an anti-blocking agent.

An average particle diameter of the filler may be about 0.1 µm to about 5 µm The average particle diameter of the filler may be about 0.1 µm to about 3 µm. The average particle diameter of the filler may be about 0.1 µm to about 1 µm.

The filler may be at least one selected from the group consisting of silica particles, barium sulfate particles, alumina particles and titania particles.

In addition, the filler may be included in the third substrate 130 in a content of about 0.01 wt% to about 3 wt% of the total amount of the third substrate 130. The filler may be included in the third substrate 130 in a content of about 0.05 wt% to about 2 wt% of the total amount of the third substrate 130.

The third substrate 130 may have a single-layer structure. For example, the third substrate 130 may be a single-layer polyester film.

The third substrate 130 may have a multi-layer structure. For example, the third substrate 130 may be a multi-layer co-extruded film.

The first substrate 110, the third substrate 130 and the third substrate 130 may be flexible. Accordingly, the electrochromic element according to another embodiment may be flexible overall.

The first electrochromic part 11 is disposed on the first substrate 110. The first electrochromic part 11 is disposed under the second substrate 120. The first electrochromic part 11 is disposed between the first substrate 110 and the second substrate 120.

The first electrochromic part 11 includes a first transparent electrode 210, a second transparent electrode 220, a first discoloration layer 310, a second discoloration layer 320 and a first electrolyte layer 410.

The first transparent electrode 210 is disposed on the first substrate 110. The first transparent electrode 210 may be deposited on the first substrate 110. In addition, a hard coating layer may further included between the first transparent electrode 210 and the first substrate 110.

The first transparent electrode 210 may include at least one selected from the group consisting of tin oxide, zinc oxide, silver (Ag), chromium (Cr), indium tin oxide (ITO), fluorinedoped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the first transparent electrode 210 may include graphene, silver nanowires and/or metal mesh.

The first transparent electrode 210 may have a total light transmittance of about 80% or more. The first transparent electrode 210 may have a total light transmittance of about 85% or more. The first transparent electrode 210 may have a total light transmittance of about 88% or more.

The first transparent electrode 210 may have a haze of about 10% or less. The first transparent electrode 210 may have a haze of about 7% or less. The first transparent electrode 210 may have a haze of about 5% or less.

A surface resistance of the first transparent electrode 210 may be about 1 Ω/sq to 60 Ω/sq The surface resistance of the first transparent electrode 210 may be about 1 Ω/sq to 40 Ω/sq. The surface resistance of the first transparent electrode 210 may be about 1 Ω/sq to 30 Ω/sq.

A thickness of the first transparent electrode 210 may be about 50 nm to about 50 µm The thickness of the first transparent electrode 210 may be about 100 nm to about 10 µm. The thickness of the first transparent electrode 210 may be about 150 nm to about 5 µm.

The first transparent electrode 210 is electrically connected to the first discoloration layer 310. In addition, the first transparent electrode 210 is electrically connected to the first electrolyte layer 410 through the first discoloration layer 310.

The second transparent electrode 220 is disposed under the second substrate 120. The second transparent electrode 220 may be deposited on the second substrate 120. In addition, a hard coating layer may be further included between the second transparent electrode 220 and the second substrate 120.

The second transparent electrode 220 may include at least one selected from the group consisting of tin oxide, zinc oxide, silver (Ag), chromium (Cr), indium tin oxide (ITO), fluorinedoped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the second transparent electrode 220 may include graphene, silver nanowires and/or metal mesh.

The second transparent electrode 220 may have a total light transmittance of about 80% or more. The second transparent electrode 220 may have a total light transmittance of about 85% or more. The second transparent electrode 220 may have a total light transmittance of about 88% or more.

The second transparent electrode 220 may have a haze of about 10% or less. The second transparent electrode 220 may have a haze of about 7% or less. The second transparent electrode 220 may have a haze of about 5% or less.

A surface resistance of the second transparent electrode 220 may be about 1 Ω/sq to 60 Ω/sq. The surface resistance of the second transparent electrode 220 may be about 1 Ω/sq to 40 Ω/sq. The surface resistance of the second transparent electrode 220 may be about 1 Ω/sq to 30 Ω/sq.

A thickness of the second transparent electrode 220 may be about 50 nm to about 50 µm. The thickness of the second transparent electrode 220 may be about 100 nm to about 10 µm. The thickness of the second transparent electrode 220 may be about 150 nm to about 5 µm.

The second transparent electrode 220 is electrically connected to the second discoloration layer 320. In addition, the second transparent electrode 220 is electrically connected to the first electrolyte layer 410 through the second discoloration layer 320.

The first discoloration layer 310 is disposed on the first transparent electrode 210. The first discoloration layer 310 may be directly disposed on the upper surface of the first transparent electrode 210. The first discoloration layer 310 may be electrically directly connected to the first transparent electrode 210.

The first discoloration layer 310 is electrically connected to the first transparent electrode 210. The first discoloration layer 310 may be directly accessed to the first transparent electrode 210. In addition, the first discoloration layer 310 is electrically connected to the first electrolyte layer 410. The first discoloration layer 310 may be electrically connected to the first electrolyte layer 410.

The first discoloration layer 310 may be discolored when supplied with electrons. The first discoloration layer 310 may include a first electrochromic material whose color changes when supplied with electrons. The first electrochromic material may include at least one selected from the group consisting of tungsten oxide, niobium pentoxide, vanadium pentoxide, titanium oxide, molybdenum oxide, viologen and poly(3,4-ethylenedioxythiophene (PEDOT).

The first discoloration layer 310 may include the first electrochromic material in the form of particles. The tungsten oxide, the niobium pentoxide, the vanadium pentoxide, the titanium oxide and the molybdenum oxide may be particles having a particle diameter of about 1nm to about 200 nm.

The first discoloration layer 310 may include the first electrochromic material in a content of about 70 wt% to about 98 wt% based on the total weight of the first discoloration layer 310. The first discoloration layer 310 may include the first electrochromic material in a content of about 80 wt% to about 96 wt% based on the total weight of the first discoloration layer 310. The first discoloration layer 310 may include the first electrochromic material in a content of about 90 wt% to about 94 wt% based on the total weight of the first discoloration layer 310.

In addition, the first discoloration layer 310 may further include a binder. The binder may be an inorganic binder. The binder may include a silica gel. The binder may be formed by a silica sol containing tetramethoxysilane or methyltrimethoxysilane.

The first discoloration layer 310 may include the binder in a content of about 1 wt% to 15 wt% based on the total weight of the first discoloration layer 310. The first discoloration layer 310 may include the binder in a content of about 2 wt% to 10 wt% based on the total weight of the first discoloration layer 310. The first discoloration layer 310 may include the binder in a content of about 3 wt% to 5 wt% based on the total weight of the first discoloration layer 310.

The second discoloration layer 320 is disposed under the second transparent electrode 220. The second discoloration layer 320 may be directly disposed a lower surface of the second transparent electrode 220. The second discoloration layer 320 may be electrically directly connected to the second transparent electrode 220.

The second discoloration layer 320 is electrically connected to the second transparent electrode 220. The second discoloration layer 320 may be directly accessed to the second transparent electrode 220. In addition, the second discoloration layer 320 is electrically connected to the first electrolyte layer 410. The second discoloration layer 320 may be electrically connected to the first electrolyte layer 410.

The second discoloration layer 320 may be discolored while losing electrons. The second discoloration layer 320 may include a second electrochromic material that is oxidized and discolored while losing electrons. The second discoloration layer 320 may include at least one selected from the group consisting of Prussian blue, nickel oxide and iridium oxide.

The second discoloration layer 320 may include the second electrochromic material in the form of particles. The Prussian blue, the nickel oxide and the iridium oxide may be particles having a particle diameter of about 1nm to about 200 nm.

In addition, the second discoloration layer 320 may further include the binder.

The second discoloration layer 320 may include the binder in a content of about 1 wt% to 15 wt% based on the total weight of the second discoloration layer 320. The second discoloration layer 320 may include the binder in a content of about 2 wt% to 10 wt% based on the total weight of the second discoloration layer 320. The second discoloration layer 320 may include the binder in a content of about 3 wt% to 5 wt% based on the total weight of the second discoloration layer 320.

The first electrolyte layer 410 is disposed on the first discoloration layer 310. In addition, the first electrolyte layer 410 is disposed under the second discoloration layer 320. The first electrolyte layer 410 is disposed between the first discoloration layer 310 and the second discoloration layer 320. The first electrolyte layer 410 may be in direct contact with the first discoloration layer 310 and the second discoloration layer 320, thereby being electrically connected thereto.

The first electrolyte layer 410 may include a solid polymer electrolyte containing metal ions, an inorganic hydrate, etc. The first electrolyte layer 410 may include lithium ions (Li+), sodium ions (Na+), potassium ions (K+), etc.

Specifically, poly-AMPS, PEO/LiCF₃SO₃, etc. may be used as the solid polymer electrolyte, and Sb₂O₅ • 4H₂O, etc. may be used as the inorganic hydrate.

In addition, the first electrolyte layer 410 is a configuration that provides electrolyte ions involved in an electrochromic reaction. The electrolyte ions may be, for example, monovalent cations such as H+, Li+, Na+, K+, Rb+ or Cs+.

The first electrolyte layer 410 may include an electrolyte. For example, a liquid electrolyte, a gel polymer electrolyte, an inorganic solid electrolyte, etc. may be used as the electrolyte without limitation. In addition, the electrolyte may be used in the form of a single layer or film so as to be laminated together with the electrode or the substrate.

The type of electrolyte salt used in the first electrolyte layer 410 is not particularly limited so long as it contains a compound capable of providing monovalent cations, i.e., H⁺, Li⁺, Na⁺, K⁺, Rb⁺ or Cs⁺. For example, the first electrolyte layer 410 may include a lithium salt compound such as LiClO₄, LiBF₄, LiAsF₆, LiPF₆, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li or (CF₃SO₂)₂NLi; or a sodium salt compound such as NaClO₄.

As one example, the first electrolyte layer 410 may include a Cl or F element-containing compound as an electrolyte salt. Specifically, the first electrolyte layer 410 may include one or more electrolyte salts selected from among LiClO₄, LiBF₄, LiAsF₆, LiPF₆, LiCl, LiB₁₀Cl₁₀, LiCF₃SO₃, LiCF₃CO₂, LiAsF₆, LiSbF₆, LiAlCl₄, CF₃SO₃Li, (CF₃SO₂)₂NLi and NaClO₄.

The electrolyte may additionally include a carbonate compound as a solvent. Since a carbonate compound has a high dielectric constant, it may increase ionic conductivity. As a non-limiting example, a solvent such as propylene carbonate (PC), ethylene carbonate (EC), dimethyl carbonate (DMC), diethyl carbonate (DEC) or ethylmethyl carbonate (EMC) may be used as a carbonate compound.

As another example, when the first electrolyte layer 410 includes a gel polymer electrolyte, the first electrolyte layer 410 may include a polymer such as poly-vinyl sulfonic acid, poly-styrene sulfonic acid, polyethylene sulfonic acid, poly-2-acrylamido-2methyl-propane sulfonic acid, poly-perfluoro sulfonic acid, poly-toluene sulfonic acid, poly-vinyl alcohol, polyethylene imine, poly-vinyl pyrrolidone, poly-ethylene oxide (PEO), poly-propylene oxide (PPO), poly-(ethylene oxide (siloxane PEOS), poly-(ethylene glycol, siloxane), poly-(propylene oxide, siloxane), poly-(ethylene oxide, methyl methacrylate) (PEO-PMMA), poly-(ethylene oxide, acrylic acid) (PEO PAA), poly-(propylene glycol, methyl methacrylate) (PPG PMMA), polyethylene succinate or poly-ethylene adipate. In one example, a mixture of two or more of the listed polymers or two or more copolymers may be used as a polymer electrolyte.

In addition, the first electrolyte layer 410 may include a curable resin that can be cured by ultraviolet irradiation or heat. The curable resin may be at least one selected from the group consisting of an acrylate-based oligomer, a polyethylene glycol-based oligomer, a urethanebased oligomer, a polyester-based oligomer, polyethylene glycol dimethyl and polyethylene glycol diacrylate. In addition, the first electrolyte layer 410 may include a photocurable initiator and/or a heat-curable initiator.

A thickness of the first electrolyte layer 410 may be about 10 µm to about 200 µm. The thickness of the first electrolyte layer 410 may be about 50 µm to about 150 µm.

The first electrolyte layer 410 may have a transmittance in a range of 60% to 95 %. Specifically, the first electrolyte layer 410 may have a transmittance of 60% to 95 % for visible light in a wavelength range of 380 nm to 780 nm, more specifically in a wavelength of 400 nm wavelength or 550 nm. The transmittance may be measured using a known haze meter (HM).

The second electrochromic part 12 is disposed under the first substrate 110. The second electrochromic part 12 is disposed on the third substrate 130. The second electrochromic part 12 is disposed between the first substrate 110 and the third substrate 130.

The second electrochromic part 12 includes a third transparent electrode 230, a fourth transparent electrode 240, a third discoloration layer 330, a fourth discoloration layer 340 and a second electrolyte layer 420.

The third transparent electrode 230 is disposed under the first substrate 110. The third transparent electrode 230 may be deposited under the first substrate 110. In addition, a hard coating layer may further included between the third transparent electrode 230 and the first substrate 110.

The third transparent electrode 230 may include at least one selected from the group consisting of tin oxide, zinc oxide, silver (Ag), chromium (Cr), indium tin oxide (ITO), fluorinedoped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the third transparent electrode 230 may include graphene, silver nanowires and/or metal mesh.

The third transparent electrode 230 may have a total light transmittance of about 80% or more. The third transparent electrode 230 may have a total light transmittance of about 85% or more. The third transparent electrode 230 may have a total light transmittance of about 88% or more.

The third transparent electrode 230 may have a haze of about 10% or less. The third transparent electrode 230 may have a haze of about 7% or less. The third transparent electrode 230 may have a haze of about 5% or less.

The surface resistance of the third transparent electrode 230 may be about 1 Ω/sq to 60 Ω/sq. The surface resistance of the third transparent electrode 230 may be about 1 Ω/sq to 40 Ω/sq. The surface resistance of the third transparent electrode 230 may be about 1 Ω/sq to 30 Ω/sq.

The thickness of the third transparent electrode 230 may be about 50 nm to about 50 µm The thickness of the third transparent electrode 230 may be about 100 nm to about 10 µm. The thickness of the third transparent electrode 230 may be about 150 nm to about 5 µm.

The third transparent electrode 230 is electrically connected to the third discoloration layer 330. In addition, the third transparent electrode 230 is electrically connected to the second electrolyte layer 420 through the third discoloration layer 330.

The fourth transparent electrode 240 is disposed on the third substrate 130. The fourth transparent electrode 240 may be deposited on the third substrate 130. In addition, a hard coating layer may further included between the fourth transparent electrode 240 and the third substrate 130.

The fourth transparent electrode 240 may include at least one selected from the group consisting of tin oxide, zinc oxide, silver (Ag), chromium (Cr), indium tin oxide (ITO), fluorinedoped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the fourth transparent electrode 240 may include graphene, silver nanowires and/or metal mesh.

The fourth transparent electrode 240 may have a total light transmittance of about 80% or more. The fourth transparent electrode 240 may have a total light transmittance of about 85% or more. The fourth transparent electrode 240 may have a total light transmittance of about 88% or more.

The fourth transparent electrode 240 may have a haze of about 10% or less. The fourth transparent electrode 240 may have a haze of about 7% or less. The fourth transparent electrode 240 may have a haze of about 5% or less.

A surface resistance of the fourth transparent electrode 240 may be about 1 Ω/sq to 60 Ω/sq. The surface resistance of the fourth transparent electrode 240 may be about 1 Ω/sq to 40 Ω/sq. The surface resistance of the fourth transparent electrode 240 may be about 1 Ω/sq to 30 Ω/sq.

The thickness of the fourth transparent electrode 240 may be about 50 nm to about 50 µm. The thickness of the fourth transparent electrode 240 may be about 100 nm to about 10 µm. The thickness of the fourth transparent electrode 240 may be about 150 nm to about 5 µm.

The fourth transparent electrode 240 is electrically connected to the fourth discoloration layer 340. In addition, the fourth transparent electrode 240 is electrically connected to the second electrolyte layer 420 through the fourth discoloration layer 340.

The third discoloration layer 330 is disposed under the third transparent electrode 230. The third discoloration layer 330 may be directly disposed on a lower surface of the third transparent electrode 230. The third discoloration layer 330 may be electrically directly connected to the third transparent electrode 230.

The third discoloration layer 330 is electrically connected to the third transparent electrode 230. The third discoloration layer 330 may be directly accessed to the third transparent electrode 230. In addition, the third discoloration layer 330 is electrically connected to the second electrolyte layer 420. The third discoloration layer 330 may be electrically connected to the second electrolyte layer 420.

The third discoloration layer 330 may be discolored when supplied with electrons. The third discoloration layer 330 may include a third electrochromic material whose color changes when supplied with electrons. The third electrochromic material may include at least one selected from the group consisting of tungsten oxide, niobium pentoxide, vanadium pentoxide, titanium oxide, molybdenum oxide, viologen and poly(3,4-ethylenedioxythiophene (PEDOT).

The third discoloration layer 330 may include the third electrochromic material in the form of particles. The tungsten oxide, the niobium pentoxide, the vanadium pentoxide, the titanium oxide and the molybdenum oxide may be particles having a particle diameter of about 1nm to about 200 nm.

The third discoloration layer 330 may include the third electrochromic material in a content of about 70 wt% to about 98 wt% based on the total weight of the third discoloration layer 330. The third discoloration layer 330 may include the first electrochromic material in a content of about 80 wt% to about 96 wt% based on the total weight of the third discoloration layer 330. The third discoloration layer 330 may include the third electrochromic material in a content of about 90 wt% to about 94 wt% based on the total weight of the third discoloration layer 330.

In addition, the third discoloration layer 330 may further include a binder. The binder may be an inorganic binder. The binder may include a silica gel. The binder may be formed by a silica sol containing tetramethoxysilane or methyltrimethoxysilane.

The third discoloration layer 330 may include the binder in a content of about 1 wt% to 15 wt% based on the total weight of the third discoloration layer 330. The third discoloration layer 330 may include the binder in a content of about 2 wt% to 10 wt% based on the total weight of the third discoloration layer 330. The third discoloration layer 330 may include the binder in a content of about 3 wt% to 5 wt% based on the total weight of the third discoloration layer 330.

The fourth discoloration layer 340 is disposed on the fourth transparent electrode 240. The fourth discoloration layer 340 may be directly disposed on an upper surface of the fourth transparent electrode 240. The fourth discoloration layer 340 may be electrically directly connected to the fourth transparent electrode 240.

The fourth discoloration layer 340 is electrically connected to the fourth transparent electrode 240. The fourth discoloration layer 340 may be directly accessed to the fourth transparent electrode 240. In addition, the fourth discoloration layer 340 is electrically connected to the second electrolyte layer 420. The fourth discoloration layer 340 may be electrically connected to the second electrolyte layer 420.

The fourth discoloration layer 340 may be discolored while losing electrons. The fourth discoloration layer 340 may include a fourth electrochromic material that is oxidized and discolored while losing electrons. The fourth discoloration layer 340 may include at least one selected from the group consisting of Prussian blue, nickel oxide and iridium oxide.

The fourth discoloration layer 340 may include the fourth electrochromic material in the form of particles. The Prussian blue, the nickel oxide and the iridium oxide may be particles having a particle diameter of about 1nm to about 200 nm.

In addition, the fourth discoloration layer 340 may further include the binder.

The fourth discoloration layer 340 may include the binder in a content of about 1 wt% to 15 wt% based on the total weight of the fourth discoloration layer 340. The fourth discoloration layer 340 may include the binder in a content of about 2 wt% to 10 wt% based on the total weight of the fourth discoloration layer 340. The fourth discoloration layer 340 may include the binder in a content of about 3 wt% to 5 wt% based on the total weight of the fourth discoloration layer 340.

The second electrolyte layer 420 is disposed under the third discoloration layer 330. In addition, the second electrolyte layer 420 is disposed on the fourth discoloration layer 340. The second electrolyte layer 420 is disposed between the third discoloration layer 330 and the fourth discoloration layer 340.

The second electrolyte layer 420 may include a solid polymer electrolyte containing metal ions, an inorganic hydrate, etc. The first electrolyte layer 410 may include lithium ions (Li+), sodium ions (Na+), potassium ions (K+), etc.

Specifically, poly-AMPS, PEO/LiCF₃SO₃, etc. may be used as the solid polymer electrolyte, and Sb₂O₅ • 4H₂O, etc. may be used as the inorganic hydrate.

In addition, the second electrolyte layer 420 is a configuration that provides electrolyte ions involved in an electrochromic reaction. The electrolyte ions may be, for example, monovalent cations such as H+, Li+, Na+, K+, Rb+ or Cs+.

The second electrolyte layer 420 may include an electrolyte. For example, a liquid electrolyte, a gel polymer electrolyte, an inorganic solid electrolyte, etc. may be used as the electrolyte without limitation. In addition, the electrolyte may be used in the form of a single layer or film so as to be laminated together with the electrode or the substrate.

The type of electrolyte salt used in the second electrolyte layer 420 is not particularly limited so long as it contains a compound capable of providing monovalent cations, i.e., H⁺, Li⁺, Na⁺, K⁺, Rb⁺ or Cs⁺. For example, the second electrolyte layer 420 may include a lithium salt compound such as LiClO₄, LiBF₄, LiAsF₆, LiPF₆, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li or (CF₃SO₂)₂NLi; or a sodium salt compound such as NaClO₄.

As one example, the second electrolyte layer 420 may include a Cl or F element-containing compound as an electrolyte salt. Specifically, the first electrolyte layer 410 may include one or more electrolyte salts selected from among LiClO₄, LiBF₄, LiAsF₆, LiPF₆, LiCl, LiB₁₀Cl₁₀, LiCF₃SO₃, LiCF₃CO₂, LiAsF₆, LiSbF₆, LiAlCl₄, CF₃SO₃Li, (CF₃SO₂)₂NLi and NaClO₄.

The electrolyte may additionally include a carbonate compound as a solvent. Since a carbonate compound has a high dielectric constant, it may increase ionic conductivity. As a non-limiting example, a solvent such as propylene carbonate (PC), ethylene carbonate (EC), dimethyl carbonate (DMC), diethyl carbonate (DEC) or ethylmethyl carbonate (EMC) may be used as a carbonate compound.

As another example, when the second electrolyte layer 420 includes a gel polymer electrolyte, the second electrolyte layer 420 may include a polymer such as poly-vinyl sulfonic acid, poly-styrene sulfonic acid, polyethylene sulfonic acid, poly-2-acrylamido-2methyl-propane sulfonic acid, poly-perfluoro sulfonic acid, poly-toluene sulfonic acid, poly-vinyl alcohol, poly-ethylene imine, poly-vinyl pyrrolidone, poly-ethylene oxide (PEO), poly-propylene oxide (PPO), poly-(ethylene oxide (siloxane PEOS), poly-(ethylene glycol, siloxane), poly-(propylene oxide, siloxane), poly-(ethylene oxide, methyl methacrylate) (PEO-PMMA), poly-(ethylene oxide, acrylic acid) (PEO PAA), poly-(propylene glycol, methyl methacrylate) (PPG PMMA), poly-ethylene succinate or poly-ethylene adipate. In one example, a mixture of two or more of the listed polymers or two or more copolymers may be used as a polymer electrolyte.

In addition, the second electrolyte layer 420 may include a curable resin that can be cured by ultraviolet irradiation or heat. The curable resin may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the second electrolyte layer 420 may include a photocurable initiator and/or a heat-curable initiator.

A thickness of the second electrolyte layer 420 may be about 10 *µ*m to about 200 *µ*m. The thickness of the second electrolyte layer 420 may be about 50 *µ*m to about 150 *µ*m.

The second electrolyte layer 420 may have a transmittance in a range of 60% to 95 %. Specifically, the second electrolyte layer 420 may have a transmittance of 60% to 95 % for visible light in a wavelength range of 380 nm to 780 nm, more specifically in a wavelength of 400 nm wavelength or 550 nm. The transmittance may be measured using a known haze meter (HM).

The electrochromic element according to an embodiment may further include a sealing part (not shown). The sealing part may be disposed on one side surface of at least one of the first electrochromic part 11 and the second electrochromic part 12.

The sealing part includes a curable resin. The sealing part may include a thermosetting resin and/or a photocurable resin.

Examples of the thermosetting resin include epoxy resin, melamine resin, urea resin, unsaturated polyester resin, and the like. In addition, examples of the epoxy resin include phenol novolac-type epoxy resin, cresol novolac-type epoxy resin, biphenyl novolac-type epoxy resin, trisphenol novolac-type epoxy resin, dicyclopentadiene novolac-type epoxy resin, bisphenol A-type epoxy resin, bisphenol F-type epoxy resin, 2, 2'-diarylbisphenol A-type epoxy resin, bisphenol S-type epoxy resin, hydrogenated bisphenol A-type epoxy resin, ropylene oxide-added bisphenol A-type epoxy resin, biphenyl type epoxy resin, naphthalene-type epoxy resin, resorcinol-type epoxy resin, glycidyl amines, and the like.

In addition, the sealing part may further include a heat curing agent. Examples of the sealing part include hydrazide compounds such as 1, 3-bis[hydrazinocarbonoethyl 5-isopropyl hydantoin], adipic acid(adipic acid) hydrazide; dicyandiamide, guanidine derivatives, 1-cyanoethyl-2-phenyl imidazole, N-[2-(2-methyl-1-imidazolyl) ethyl]urea, 2, 4-diamino-6-[2'-methylimidazolyl(1')]-ethyl-s-thoriazine, N,N'-bis(2-methyl-1-imidazolyl ethyl) urea, N, N'-(2-methyl-1-imidazolyl ethyl)-azipoamido, 2-phenyl-4-methyl-5-hydroxymethyl imidazole, 2-imidazoline-2-thiol, 2, 2'-thiodiethanethiol, additional products of various amines and epoxy resins, and the like.

The first sealing part may include a photocurable resin. Examples of the photocurable resin include acrylate-based resins such as urethane acrylate, and the like. In addition, the sealing part may further include a photocurable initiator. The photocurable initiator may be at least one selected from the group consisting of acetophenone-based compounds, benzophenone-based compounds, thioxanthone-based compounds, benzoin-based compounds, triazine-based compounds and oxime-based compounds.

In addition, the sealing part may further include a moisture absorbent such as zeolite and/or silica. In addition, the sealing part may further include an inorganic filler. The inorganic filler may have a material having high insulating nature, transparency and durability. Examples of the inorganic filler include silicon, aluminum, zirconia, a mixture thereof, and the like.

In addition, the electrochromic element according to an embodiment may further include a first bus bar (not shown), a second bus bar (not shown), a third bus bar (not shown) and a fourth bus bar (not shown).

The first bus bar may be disposed on the first transparent electrode 210. The first bus bar may access to the first transparent electrode 210.

The first bus bar may be electrically connected to the first transparent electrode 210. The first bus bar may be in direct contact with an upper surface of the first transparent electrode 210. The first bus bar may access to the first transparent electrode 210 through solder.

The second bus bar is disposed under the second transparent electrode 220. The second bus bar is accessed to the second transparent electrode 220.

The second bus bar may be electrically connected to the second transparent electrode 220. The second bus bar may be in direct contact with a lower surface of the second transparent electrode 220. The second bus bar may access to the second transparent electrode 220 through solder.

The third bus bar may be disposed under the third transparent electrode 230. The third bus bar may access to the third transparent electrode 230.

The third bus bar may be electrically connected to the third transparent electrode 230. The third bus bar may be in direct contact with a lower surface of the third transparent electrode 230. The third bus bar may access to the third transparent electrode 230 through solder.

The fourth bus bar is disposed on the fourth transparent electrode 240. The fourth bus bar is accessed to the fourth transparent electrode 240.

The fourth bus bar may be electrically connected to the fourth transparent electrode 240. The fourth bus bar may be in direct contact with an upper surface of the fourth transparent electrode 240. The fourth bus bar may access to the fourth transparent electrode 240 through solder.

The first bus bar, the second bus bar, the third bus bar and/or the fourth bus bar may include a metal. The first bus bar, the second bus bar, the third bus bar and/or the fourth bus bar may include a metal ribbon. The first bus bar, the second bus bar, the third bus bar and/or the fourth bus bar may include a conductive paste. The first bus bar, the second bus bar, the third bus bar and/or the fourth bus bar may include a binder and a conductive filler.

The electrochromic element according to an embodiment may be fabricated by the following method. FIGS. 8 to 11 are sectional views illustrating processes of fabricating the electrochromic element according to an embodiment.

Referring to FIG. 8, a first transparent electrode 210 is formed on a first substrate 110. The first transparent electrode 210 may be formed by a vacuum deposition process. A metal oxide such as indium tin oxide may be deposited on the first substrate 110 by a sputtering process, etc., thereby forming the first transparent electrode 210.

The first transparent electrode 210 may be formed by a coating process. Metal nanowires are coated together with a binder on the first substrate 110, thereby forming the first transparent electrode 210. The first substrate 110 may be coated with a conductive polymer, therbey forming the first transparent electrode 210.

In addition, the first transparent electrode 210 may be formed by a patterning process. A metal layer may be formed on the first substrate 110 by a sputtering process, etc., and the metal layer may be patterned, so that a first transparent electrode 210 including a metal mesh may be formed on the first substrate 110.

In addition, a third transparent electrode 230 is formed under the first substrate 110. The third transparent electrode 230 may be formed by a vacuum deposition process. A metal oxide such as indium tin oxide may be deposited on a lower surface of the first substrate 110 by a sputtering process, etc., so the third transparent electrode 230 may be formed.

The third transparent electrode 230 may be formed by a coating process. Metal nanowires and a binder may be bound together on the lower surface of the first substrate 110, so the third transparent electrode 230 may be formed. A conductive polymer may be coated on the lower surface of the first substrate 110, so the third transparent electrode 230 may be formed.

In addition, a third transparent electrode 230 may be formed by a patterning process. A metal layer may be formed on the lower surface of the first substrate 110 by a sputtering process, etc., the metal layer may be patterned, so a third transparent electrode 230 including a metal mesh may be formed on the lower surface of the first substrate 110.

A first discoloration layer 310 is formed on the first transparent electrode 210. The first discoloration layer 310 may be formed by a sol-gel coating process. A first sol solution including a first electrochromic material, a binder and a solvent may be coated on the first transparent electrode 210. A sol-gel reaction may occur in the coated first sol solution, and the first discoloration layer 310 may be formed.

The first sol solution may include the first discoloration material in the form of particles in a content of about 5 wt% to about 30 wt%. The first sol solution may include the binder in a content of about 5 wt% to about 30 wt%. The first sol solution may include the solvent in a content of about 60 wt% to about 90 wt%.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Next, a third discoloration layer 330 is formed under the third transparent electrode 230. After a laminate including the first substrate 110, the first transparent electrode 210, the third transparent electrode 230 and the first discoloration layer 310 is turned over, the third discoloration layer 330 may be formed by a sol-gel coating process.

A third sol solution including a third electrochromic material, a binder and a solvent may be coated on the lower surface of the third transparent electrode 230. A sol-gel reaction may occur in the coated third sol solution, and the third discoloration layer 330 may be formed.

The third sol solution may include the third electrochromic material in the form of particles in a content of about 5 wt% to about 30 wt%. The third sol solution may include the binder in a content of about 5 wt% to about 30 wt%. The third sol solution may include the solvent in a content of about 60 wt% to about 90 wt%.

The third sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Accordingly, a first laminate including the first substrate 110, the first transparent electrode 210, the third transparent electrode 230, the first discoloration layer 310 and the third discoloration layer 330 is formed.

Referring to FIG. 9, a second transparent electrode 220 is formed on a second substrate 120.

The second transparent electrode 220 may be formed by a vacuum deposition process. A metal oxide such as indium tin oxide may be deposited on the second substrate 120 by a sputtering process, etc., so the second transparent electrode 220 may be formed.

The second transparent electrode 220 may be formed by a coating process. Metal nanowires and a binder may be coated together on the second substrate 120, so the second transparent electrode 220 may be formed. A conductive polymer may be coated on the second substrate 120, so the second transparent electrode 220 may be formed.

In addition, a second transparent electrode 220 may be formed by a patterning process. A metal layer may be formed on the second substrate 120 by a sputtering process, etc., and the metal layer may be patterned, so that a second transparent electrode 220 including a metal mesh may be formed on the second substrate 120.

Next, a second discoloration layer 320 is formed on the second transparent electrode 220. The second discoloration layer 320 may be formed by a sol-gel coating process. A second sol solution including a second electrochromic material, a binder and a solvent may be formed on the second transparent electrode 220. A sol-gel reaction may occur in the coated second sol solution, and the second discoloration layer 320 may be formed.

The second sol solution may include the second discoloration material in the form of particles in a content of about 5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

Next, an electrolyte composition for forming a first electrolyte layer 410 is formed on the second discoloration layer 320.

The electrolyte composition may include a metal salt, an electrolyte, a photocurable resin and a photocurable initiator. The photocurable resin may be at least one selected from the group consisting of hexandiol diacrylate (HDDA), tripropylene glycoldiacrylate, ethylene glycoldiacrylate (EGDA), trimethylolpropane triacrylate (TMPTA), trimethylolpropane ethoxylated triacrylate (TMPEOTA), glycerol propoxylated triacrylate (GPTA), pentaerythritol tetraacrylate (PETA), and dipentaerythritol hexaacrylate (DPHA).

The metal salt, the electrolyte and the photocurable initiator may be the same as described above.

Next, the electrolyte composition is coated on the second discoloration layer 320. The electrolyte composition may be coated on the second discoloration layer 320 by a process such as bar coating, slit coating, knife coating, or roll coating.

Accordingly, a second laminate including the second substrate 120, the second transparent electrode 220, the second discoloration layer 320 and the first electrolyte composition coating layer 411 is formed.

Referring to FIG. 10, a fourth transparent electrode 240 is formed on a third substrate 130.

The fourth transparent electrode 240 may be formed by a vacuum deposition process. A metal oxide such as indium tin oxide may be deposited on the third substrate 130 by a sputtering process, etc., so that the fourth transparent electrode 240 may be formed.

The fourth transparent electrode 240 may be formed by a coating process. Metal nanowires and a binder may be coated together on the third substrate 130, so that the fourth transparent electrode 240 may be formed. A conductive polymer may be coated on the third substrate 130, so that the fourth transparent electrode 240 may be formed.

In addition, the fourth transparent electrode 240 may be formed by a patterning process. A metal layer may be formed on the third substrate 130 by a sputtering process, etc., and the metal layer may be patterned, so that a fourth transparent electrode 240 including a metal mesh may be formed on the third substrate 130.

Next, a fourth discoloration layer 340 is formed on the fourth transparent electrode 240. The fourth discoloration layer 340 may be formed by a sol-gel coating process. A fourth sol solution including a fourth electrochromic material, a binder and a solvent may be coated on the fourth transparent electrode 240. A sol-gel reaction may occur in the coated fourth sol solution, and the fourth discoloration layer 340 may be formed.

The fourth sol solution may include the fourth discoloration material in the form of particles in a content of about 5 wt% to about 30 wt%. The fourth sol solution may include the binder in a content of about 5 wt% to about 30 wt%. The fourth sol solution may include the solvent in a content of about 60 wt% to about 90 wt%.

The fourth sol solution may additionally include a dispersant.

Next, an electrolyte composition for forming a second electrolyte layer 420 is formed on the fourth discoloration layer 340.

The electrolyte composition may include a metal salt, an electrolyte, a photocurable resin and a photocurable initiator. The photocurable resin may be at least one selected from the group consisting of hexandiol diacrylate (HDDA), tripropylene glycoldiacrylate, ethylene glycoldiacrylate (EGDA), trimethylolpropane triacrylate (TMPTA), trimethylolpropane ethoxylated triacrylate (TMPEOTA), glycerol propoxylated triacrylate (GPTA), pentaerythritol tetraacrylate (PETA), and dipentaerythritol hexaacrylate (DPHA).

The metal salt, the electrolyte and the photocurable initiator may be the same as described above.

Next, the electrolyte composition is coated on the fourth discoloration layer 340. The electrolyte composition may be coated on the fourth discoloration layer 340 by a process such as bar coating, slit coating, knife coating, or roll coating.

Accordingly, a third laminate including the fourth substrate, the fourth transparent electrode 240, the fourth discoloration layer 340 and the second electrolyte composition coating layer 421 is formed.

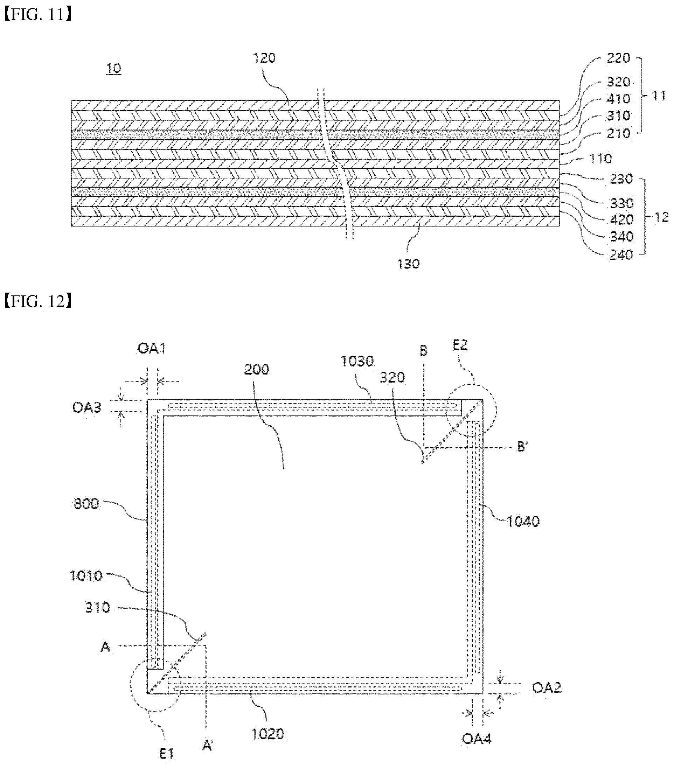

Referring to FIG. 11, the first laminate, the second laminate and the third laminate are laminated.

Here, the first electrolyte composition coating layer may be in direct contact with an upper surface of the first discoloration layer 310, and the second electrolyte composition coating layer may be in direct contact with a lower surface of the third discoloration layer 330.

Next, the first electrolyte composition coating layer and the second electrolyte composition coating layer may be cured by light, the first laminate, the second laminate and the third laminate may be bonded to each other. In addition, the first electrolyte layer 410 and the second electrolyte layer 420 are formed.

The first electrochromic part 11 has a first dark state and a first transmission state.

The first dark state is a state where a first electrical driving signal is applied to the first transparent electrode 210 and the second transparent electrode 220, and the first discoloration layer 310 and the second discoloration layer 320 are colored. By the first driving signal, the first discoloration layer 310 may be reduced, and the second discoloration layer 320 may be oxidized, so that the first electrochromic part 11 may be colored.

Accordingly, the first electrochromic part 11 may have low light transmittance in the first dark state. The first electrochromic part 11 may have a light transmittance of about 10% to about 30% in the first dark state.

The first transmission state is a state where a second electrical driving signal is applied to the first transparent electrode 210 and the second transparent electrode 220, and the first discoloration layer 310 and the second discoloration layer 320 are discolored. By the second driving signal, the first discoloration layer 310 may be oxidized, and the second discoloration layer 320 may be reduced, so that the first electrochromic part 11 may be discolored.

Accordingly, the first electrochromic part 11 may have high light transmittance in the first transmission state. The first electrochromic part 11 may have a light transmittance of about 50% to about 80% in the first transmission state.

The second electrochromic part 12 has a second dark state and a second transmission state.

The second dark state is a state where a third electrical driving signal is applied to the third transparent electrode 230 and the fourth transparent electrode 240, and the third discoloration layer 330 and the fourth discoloration layer 340 are colored. By the third driving signal, the third discoloration layer 330 may be reduced, and the fourth discoloration layer 340 may be oxidized, so that the second electrochromic part 12 may be colored.

Accordingly, the second electrochromic part 12 may have low light transmittance in the second dark state. The second electrochromic part 12 may have a light transmittance of about 10% to about 30% in the second dark state.

The second transmission state is a state where a fourth electrical driving signal is applied to the third transparent electrode 230 and the fourth transparent electrode 240, and the third discoloration layer 330 and the fourth discoloration layer 340 are discolored. By the fourth driving signal, the third discoloration layer 330 may be oxidized, and the fourth discoloration layer 340 may be reduced, so that the second electrochromic part 12 may be discolored.

Accordingly, the second electrochromic part 12 may have high light transmittance in the second transmission state. The second electrochromic part 12 may have a light transmittance of about 50% to about 80% in the second transmission state.

The electrochromic element according to an embodiment may have a first color in the first dark state and the second transmission state. That is, when the first electrochromic part 11 is in the first dark state, and the second electrochromic part 12 is in the second transmission state, the electrochromic element according to an embodiment may have the first color.

In the first transmission state and the second dark state, the electrochromic element according to an embodiment may have a second color. That is, when the first electrochromic part 11 is in the first transmission state, and the second electrochromic part 12 is in the second dark state, the electrochromic element according to an embodiment may have the second color.

The first color differs from the second color.

A difference between a* of the first color and a* of the second color may be greater than about 2. The difference between a* of the first color and a* of the second color may be about 2 to about 10. The difference between a* of the first color and a* of the second color may be about 5 to about 10. The difference between a* of the first color and a* of the second color may be greater than about 7.

The a* of the first color may be about -10 to about 10. The a* of the first color may be about -8 to about 8. The a* of the first color may be about -7 to about 7. The a* of the first color may be about -5 to about 5.

The a* of the second color may be about -10 to about 10. The a* of the second color may be about -8 to about 8. The a* of the second color may be about -7 to about 7. The a* of the second color may be about -5 to about 5.

The b* of the first color may be greater than the b* of the second color.

A difference between b* of the first color and b* of the second color may be greater than about 2. The difference between b* of the first color and b* of the second color may be about 2 to about 10. The difference between b* of the first color and b* of the second color may be about 5 to about 10. The difference between b* of the first color and b* of the second color may be greater than about 7.

The b* of the first color may be about -10 to about 10. The b* of the first color may be about -8 to about 8. The b* of the first color may be about -7 to about 7. The b* of the first color may be about -5 to about 5.

The b* of the second color may be about -10 to about 10. The b* of the second color may be about -8 to about 8 The b* of the second color may be about -7 to about 7. The b* of the second color may be about -5 to about 5.

The electrochromic element according to an embodiment may have a third color in the first dark state and the second dark state. That is, when the first electrochromic part 11 is in the first dark state, and the second electrochromic part 12 is in the second dark state, the electrochromic element according to an embodiment may have the third color.

The a* of the third color may be between the a* of the first color and the a* of the second color. In addition, the b * of the third color may be between the b* of the first color and the b* of the second color.

The first color may include blue. The second color may include brown. The third color may include black.

The L* of the third color may be about 0 to about 30. The L* of the third color may be less than about 20.

The L*, the a* and the b* may be measured using a colorimeter. The L*, the a* and the b* may be measured using a spectrophotometer (Konica-Minolta, CM-5).

The electrochromic element according to an embodiment may have a first light transmittance in the first transmission state and the second transmission state.

The first light transmittance may be about 30% to about 80%. The first light transmittance may be about 30% to about 50%. The first light transmittance may be about 50% to about 80%. The first light transmittance may be about 40% to about 70%. The first light transmittance may be about 40% to about 60%.

The electrochromic element according to an embodiment may have a second light transmittance in the first dark state and the second transmission state.

The second light transmittance may be about 10% to about 20%. The second light transmittance may be about 20% to about 40% The second light transmittance may be about 10% to about 30%. The second light transmittance may be about 20% to about 40%. The second light transmittance may be about 10% to about 15%.

The electrochromic element according to an embodiment may have a third light transmittance in the first transmission state and the second dark state.

The third light transmittance may be about 10% to about 20%. The third light transmittance may be about 20% to about 40%. The third light transmittance may be about 10% to about 30%. The third light transmittance may be about 20% to about 40%. The third light transmittance may be about 10% to about 15%.

The electrochromic element according to an embodiment may have a fourth light transmittance in the first dark state and the second dark state.

The fourth light transmittance may be about 3% to about 8%. The fourth light transmittance may be about 5% to about 10%. The fourth light transmittance may be about 3% to about 10%. The fourth light transmittance may be about 3% to about 15%. The fourth light transmittance may be about 5% to about 15%.

Since the electrochromic element according to an embodiment has the first color, the second color and the third color in the ranges described above, it may have a color range of various stages.

In addition, the electrochromic element according to an embodiment has the first light transmittance, the second light transmittance, the third light transmittance and the fourth light transmittance in the ranges described above, the overall light transmittance may control in a range of various stages.

The light transmittance may be total light transmittance. In the electrochromic element according to an embodiment, the total light transmittance may be measured using a transmittance meter (EDTM Co., SS2450).

The first discoloration layer 310 may include nickel oxide, and the third discoloration layer 330 may include Prussian blue.

In addition, the second discoloration layer 320 and the third discoloration layer 330 may include tungsten oxide or titanium oxide.

The first electrochromic part 11 and the second electrochromic part 12 may have different colors in the first dark state and in the second dark state, respectively. In particular, the first electrochromic part 11 and the second electrochromic part 12 may be laminated to each other.

The electrochromic element according to an embodiment may drive the first electrochromic part 11 and the second electrochromic part 12 separately from each other.

Accordingly, the electrochromic element according to an embodiment may implement a variety of colors and a variety of light transmittances by combining the first dark state, the second dark state, the first transmission state and the second transmission state. That is, the electrochromic element according to an embodiment may have a combination of the first dark state and the second dark state. The electrochromic element according to an embodiment may have a combination of the first dark state and the second transmission state. The electrochromic element according to an embodiment may have a combination of the first transmission state and the second dark state. The electrochromic element according to an embodiment may have a combination of the first transmission state and the second transmission state.

In particular, the electrochromic element according to an embodiment may drive the first electrochromic part 11 and the second electrochromic part 12 separately from each other. Accordingly, the electrochromic element according to an embodiment may implement multiple levels of colors and multiple levels of light transmittances without using complex driving methods.

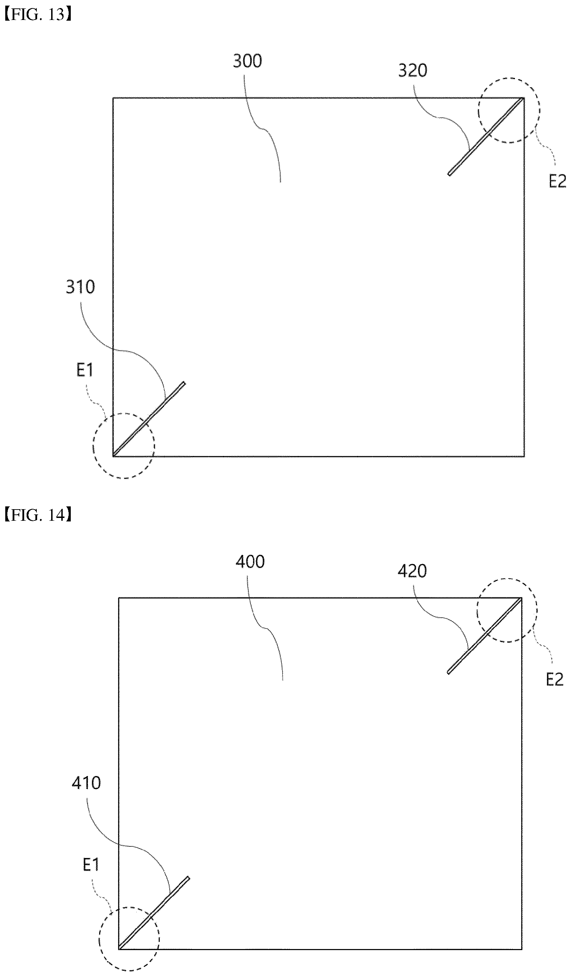

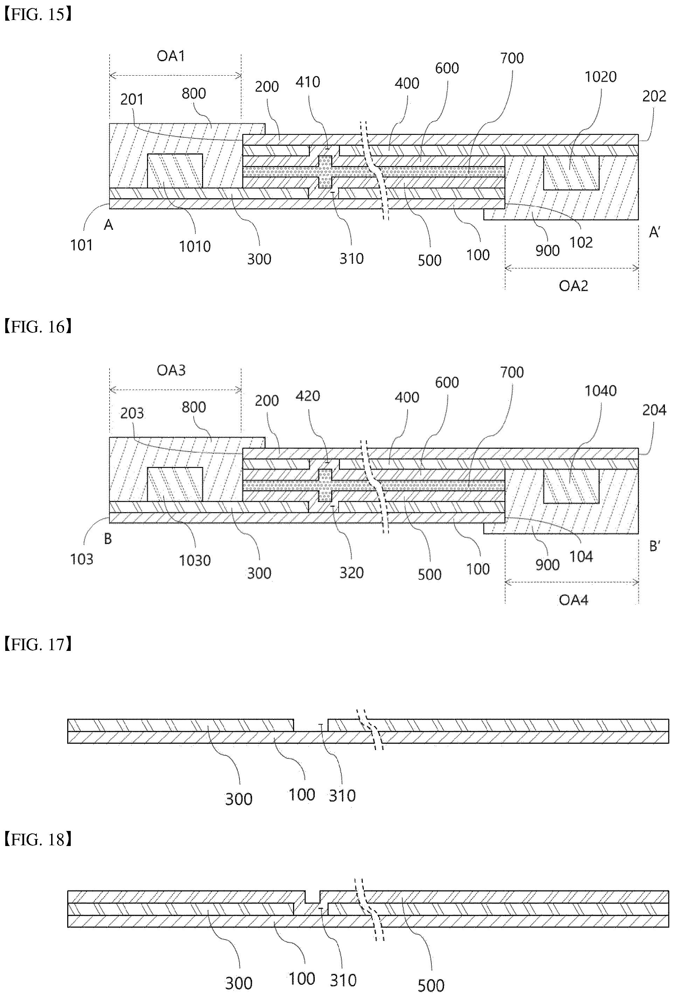

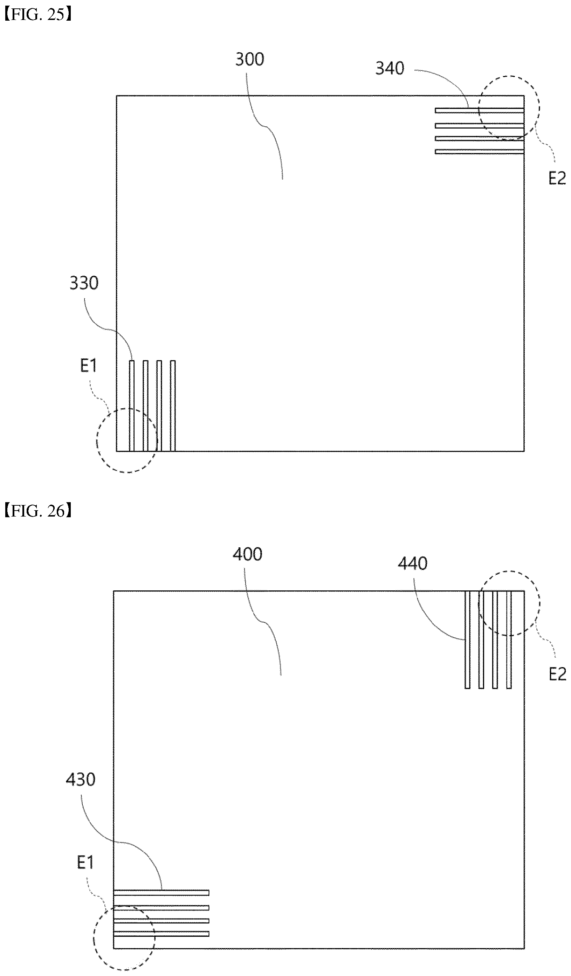

FIG. 12 illustrates the plan view of an electrochromic element according to still another embodiment. FIG. 13 illustrates the plan view of a first transparent electrode according to still another embodiment. FIG. 14 illustrates the plan view of a second transparent electrode according to still another embodiment. FIG. 15 is a sectional view illustrating a cross-section taken along line A-A' of FIG. 12. FIG. 16 is a sectional view illustrating a cross-section taken along line B-B' of FIG. 12. FIGS. 17 to 24 illustrate a process of fabricating the electrochromic element according to still another embodiment. FIG. 25 illustrates the plan view of a first transparent electrode according to still another embodiment. FIG. 26 illustrates a plan view of a second transparent electrode according to still another embodiment.

Referring to FIG. 12, the electrochromic element according to the embodiment may have a rectangular planar shape. The electrochromic element according to the embodiment may have a rectangular planar shape.

As shown in FIGS. 12 to 16, the electrochromic element according to the embodiment includes a first corner region E1 and a second corner region E2.

The first corner region E1 is a region around a first corner. The first corner region E1 may be a region within about 10 cm from the first corner. The first corner region E1 may be a region within about 20 cm from the first corner. The first corner region E1 may be a region within about 30 cm from the first corner.

The second corner region E2 is disposed in a diagonal direction with respect to the first corner region E1. The second corner region E2 may be disposed on the opposite side of the first corner region E1 with respect to the central portion of the electrochromic element according to an embodiment

The second corner region E2 is a region around a second corner. The second corner may be positioned in a diagonal direction with respect to the first corner. The second corner region E2 may be a region within about 10 cm from the second corner. The second corner region E2 may be a region within about 20 cm from the second corner. The second corner region E2 may be a region within about 30 cm from the second corner.

Referring to FIGS. 12 to 16, the electrochromic element according to an embodiment includes a first substrate 100, a second substrate 200, a first transparent electrode 300, a second transparent electrode 400, a first discoloration layer 500, a second discoloration layer 600, an electrolyte layer 700, a first bus bar 1010, a second bus bar 1020, a third bus bar 1030, a fourth bus bar 1040, a first sealing part 800, a second sealing part 900, a third sealing part and a fourth sealing part 900.

Together with the second substrate 200, the first substrate 100 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the first substrate 100 and the second substrate 200. The first substrate 100 and the second substrate 200 may protect the first transparent electrode 300, the first discoloration layer 500, the second discoloration layer 600, the second transparent electrode 400 and the electrolyte layer 700 from external physical impact and chemical impact.

The first substrate 100 may include a polymer resin. The first substrate 100 may include at least one selected from the group consisting of a polyester-based resin, a polyimide-based resin, a cyclic olefin polymer resin, a polyethersulfone, a polycarbonate or a polyolefin-based resin.

The first substrate 100 may include a polyester resin as a main component. The first substrate 100 may include polyethylene terephthalate. The first substrate 100 may include the polyethylene terephthalate in a content of about 90 wt% or more based on the total composition amount. The first substrate 100 may include the polyethylene terephthalate in a content of about 95 wt% or more based on the total composition amount. The first substrate 100 may include the polyethylene terephthalate in a content of about 97 wt% or more based on the total composition amount. The first substrate 100 may include the polyethylene terephthalate in a content of about 98 wt% or more based on the total composition amount.

The first substrate 100 may include a uniaxially or biaxially stretched polyethylene terephthalate film. The first substrate 100 may include a polyethylene terephthalate film stretched about 2 to about 5 times in a longitudinal direction and/or width direction.

The first substrate 100 may have high mechanical properties to reinforce the glass when applied to a window of a building or a vehicle.

The first substrate 100 may have a tensile strength of about 7 kgf/mm² to about 40 kgf/mm² in the longitudinal direction. The first substrate 100 may have a tensile strength of about 8 kgf/mm² to about 35 kgf/mm² in the longitudinal direction.

The first substrate 100 may have a tensile strength of about 7 kgf/mm² to about 40 kgf/mm² in the width direction. The first substrate 100 may have a tensile strength of about 8 kgf/mm² to about 35 kgf/mm² in the width direction.

The first substrate 100 may have a modulus of about 200 kgf/mm² to about 400 kgf/mm² in the longitudinal direction. The first substrate 100 may have a modulus of about 250 kgf/mm² to about 350 kgf/mm² in the longitudinal direction. The first substrate 100 may have a modulus of about 250 kgf/mm² to about 270 kgf/mm² in the longitudinal direction.

The first substrate 100 may have a modulus of about 200 kgf/mm² to about 400 kgf/mm² in the width direction. The first substrate 100 may have a modulus of about 250 kgf/mm² to about 350 kgf/mm² in the width direction. The first substrate 100 may have a modulus of about 250 kgf/mm² to about 270 kgf/mm² in the width direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The first substrate 100 may have a fracture elongation of about 30% to about 150% in the longitudinal direction. The first substrate 100 may have a fracture elongation of about 30% to about 130% in the longitudinal direction. The first substrate 100 may have a fracture elongation of about 40% to about 120% in the longitudinal direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The modulus, the fracture elongation and the tensile strength may be measured according to KS B 5521.

In addition, the modulus, the tensile strength and the fracture elongation may be measured according to ASTM D882.

Since the first substrate 100 has the improved mechanical strength as described above, it may efficiently protect the first transparent electrode 300, the second transparent electrode 400, the first discoloration layer 500, the second discoloration layer 600 and the electrolyte layer 700. In addition, since the first substrate 100 has the improved mechanical strength as described above, the mechanical strength of the mechanical strength of glass to be attached may be effectively reinforced.

The first substrate 100 may include glass. The first substrate 100 may be a glass substrate.

In addition, the first substrate 100 may have high chemical resistance. Accordingly, even if an electrolyte contained in the first substrate 100 leaks, damage to the surface of the first substrate 100 may be minimized.

The first substrate 100 may have improved optical properties. A total light transmittance of the first substrate 100 may be about 55% or more. The total light transmittance of the first substrate 100 may be about 70% or more. The total light transmittance of the first substrate 100 may be about 75% to about 99%. The total light transmittance of the first substrate 100 may be about 80% to about 99%.

A haze of the first substrate 100 may be about 20% or less. The haze of the first substrate 100 may be about 0.1% to about 20%. The haze of the first substrate 100 may be about 0.1% to about 10%. The haze of the first substrate 100 may be about 0.1% to about 7%.

The total light transmittance and the haze may be measured according to ASTM D 1003, etc.

Since the first substrate 100 has an appropriate total light transmittance and haze, the electrochromic element according to another embodiment may have improved optical properties. That is, since the first substrate 100 has an appropriate transmittance and haze, an improved appearance may be achieved by minimizing distortion of images from the outside while appropriately controlling a transmittance when the electrochromic element according to another embodiment is applied to a window.

In addition, the first substrate 100 may have an in-plane phase difference of about 100 nm to about 4000 nm. The first substrate 100 may have an in-plane phase difference of about 200 nm to about 3500 nm. The first substrate 100 may have an in-plane phase difference of about 200 nm to about 3000 nm.

The first substrate 100 may have an in-plane phase difference of about 7000 nm or more. The first substrate 100 may have an in-plane phase difference of about 7000 nm to about 50000 nm. The first substrate 100 may have an in-plane phase difference of about 8000 nm to about 20000 nm.

The in-plane phase difference may be derived from a refractive index and thickness according to the direction of the first substrate 100.

Since the first substrate 100 has the in-plane phase difference as described above, a decorative sheet according to an embodiment may have an improved appearance.

The thickness of the first substrate 100 may be about 10 *µ*m to about 200 *µ*m.The thickness of the first substrate 100 may be about 23 *µ*m to about 150 *µ*m.The thickness of the first substrate 100 may be about 30 *µ*m to about 120 *µ*m.

The first substrate 100 may include an organic filler or an inorganic filler. The organic or inorganic filler may function as an anti-blocking agent.

An average particle diameter of the filler may be about 0.1 *µ*m to about 5 *µ*m.The average particle diameter of the filler may be about 0.1 *µ*m to about 3 *µ*m.The average particle diameter of the filler may be about 0.1 *µ*m to about 1 *µ*m.

The filler may be at least one selected from the group consisting of silica particles, barium sulfate particles, alumina particles and titania particles.

In addition, the filler may be included in the first substrate 100 in a content of about 0.01 wt% to about 3 wt% based on the total amount of the first substrate 100. The filler may be included in the first substrate 100 in a content of about 0.05 wt% to about 2 wt% based on the total amount of the first substrate 100.

The first substrate 100 may have a single-layer structure. For example, the first substrate 100 may be a single-layer polyester film.

The first substrate 100 may have a multi-layer structure. For example, the first substrate 100 may be a multi-layer co-extruded film. The multi-layer co-extruded structure may include a center layer, a first surface layer and a second surface layer. The filler may be included in the first surface layer and the second surface layer.

The second substrate 200 faces the first substrate 100. The second substrate 200 is disposed on the first substrate 100. One end of the second substrate 200 may be disposed to be misaligned with one end of the first substrate 100. The other end of the second substrate 200 may be disposed to be misaligned with the other end of the first substrate 100.

Together with the first substrate 100, the second substrate 200 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the second substrate 200 and the first substrate 100. The second substrate 200 and the first substrate 100 may protect the first transparent electrode 300, the first discoloration layer 500, the second discoloration layer 600, the second transparent electrode 400 and the electrolyte layer 700 from external physical impact and chemical impact.

The second substrate 200 may include a polymer resin. The second substrate 200 may include at least one selected from the group consisting of a polyester-based resin, a polyimide-based resin, a cyclic olefin polymer resin, a polyethersulfone, a polycarbonate and a polyolefin-based resin.

The second substrate 200 may include a polyester resin as a main component. The second substrate 200 may include polyethylene terephthalate. The second substrate 200 may include the polyethylene terephthalate in a content of about 90 wt% or more based on the total composition amount. The second substrate 200 may include the polyethylene terephthalate in a content of about 95 wt% or more based on the total composition amount. The second substrate 200 may include the polyethylene terephthalate in a content of about 97 wt% or more based on the total composition amount. The second substrate 200 may include the polyethylene terephthalate in a content of about 98 wt% or more based on the total composition amount.

The second substrate 200 may include a uniaxially or biaxially stretched polyethylene terephthalate film. The second substrate 200 may include a polyethylene terephthalate film stretched about 2 to about 5 times in a longitudinal direction and/or width direction.

The second substrate 200 may have high mechanical properties to reinforce the glass when applied to a window of a building or a vehicle.

The second substrate 200 may have a tensile strength of about 7 kgf/mm² to about 40 kgf/mm² in the length direction. The second substrate 200 may have a tensile strength of about 8 kgf/mm² to about 35 kgf/mm² in the length direction.

The second substrate 200 may have a tensile strength of about 7 kgf/mm² to about 40 kgf/mm² in the width direction. The second substrate 200 may have a tensile strength of about 8 kgf/mm² to about 35 kgf/mm² in the width direction.

The second substrate 200 may have a modulus of about 200 kgf/mm² to about 400 kgf/mm² in the length direction. The second substrate 200 may have a modulus of about 250 kgf/mm² to about 350 kgf/mm² in the length direction. The second substrate 200 may have a modulus of about 250 kgf/mm² to about 270 kgf/mm² in the length direction.

The second substrate 200 may have a modulus of about 200 kgf/mm² to about 400 kgf/mm² in the width direction. The second substrate 200 may have a modulus of about 250 kgf/mm² to about 350 kgf/mm² in the width direction. The second substrate 200 may have a modulus of about 250 kgf/mm² to about 270 kgf/mm² in the width direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the width direction. The second substrate 200 may have a fracture elongation of about 30% to about 130% in the width direction. The second substrate 200 may have a fracture elongation of about 40% to about 120% in the width direction.

Since the second substrate 200 has the improved mechanical strength as described above, it may efficiently protect the first transparent electrode 300, the second transparent electrode 400, the first discoloration layer 500, the second discoloration layer 600 and the electrolyte layer 700. In addition, since the second substrate 200 has the improved mechanical strength as described above, the mechanical strength of the mechanical strength of glass to be attached may be effectively reinforced.

The second substrate 200 may include glass. The second substrate 200 may be a glass substrate.

In addition, the second substrate 200 may have high chemical resistance. Accordingly, even if an electrolyte contained in the second substrate 200 leaks, damage to the surface of the second substrate 200 may be minimized.

The second substrate 200 may have improved optical properties. The second substrate 200 may have a total light transmittance of about 55% or more. The second substrate 200 may have a total light transmittance of about 70% or more. The second substrate 200 may have a total light transmittance of about 75% to about 99%. The second substrate 200 may have a total light transmittance of about 80% to about 99%.

The haze of the second substrate 200 may be about 20% or less. The haze of the second substrate 200 may be about 0.1% to about 20%. The haze of the second substrate 200 may be about 0.1% to about 10% The haze of the second substrate 200 may be about 0.1% to about 7%.

Since the second substrate 200 has an appropriate total light transmittance and haze, the electrochromic element according to another embodiment may have improved optical properties. That is, since the second substrate 200 has an appropriate transmittance and haze, an improved appearance may be achieved by minimizing distortion of images from the outside while appropriately controlling a transmittance when the electrochromic element according to another embodiment is applied to a window.

In addition, the second substrate 200 may have an in-plane phase difference of about 100 nm to about 4000 nm. The second substrate 20 may have an in-plane phase difference of about 200 nm to about 3500 nm. The second substrate 200 may have an in-plane phase difference of about 200 nm to about 3000 nm.

The second substrate 200 may have an in-plane phase difference of about 7000 nm or more. The second substrate 200 may have an in-plane phase difference of about 7000 nm to about 50000 nm. The second substrate 200 may have an in-plane phase difference of about 8000 nm to about 20000 nm.

The in-plane phase difference may be derived from a refractive index and thickness according to the direction of the second substrate 200.

Since the second substrate 200 has the in-plane phase difference as described above, the decorative sheet according to an embodiment may have improved appearance.

The thickness of the second substrate 200 may be about 10 *µ*m to about 200 *µ*m.The thickness of the first substrate 100 may be about 23 *µ*m to about 150 *µ*m.The thickness of the first substrate 100 may be about 30 *µ*m to about 120 *µ*m.

The second substrate 200 may include an organic filler or an inorganic filler. The organic or inorganic filler may function as an anti-blocking agent.

An average particle diameter of the filler may be about 0.1 *µ*m to about 5 *µ*m The average particle diameter of the filler may be about 0.1 *µ*m to about 3 *µ*m.The average particle diameter of the filler may be about 0.1 *µ*m to about 1 *µ*m.

The filler may be at least one selected from the group consisting of silica particles, barium sulfate particles, alumina particles and titania particles.

In addition, the filler may be included in the second substrate 200 in a content of about 0.01 wt% to about 3 wt% of the total amount of the second substrate 200. The filler may be included in the second substrate 200 in a content of about 0.05 wt% to about 2 wt% of the total amount of the second substrate 200.

The second substrate 200 may have a single-layer structure. For example, the second substrate 200 may be a single-layer polyester film.

The second substrate 200 may have a multi-layer structure. For example, the second substrate 200 may be a multi-layer co-extruded film.

The first substrate 100 and the second substrate 200 may be flexible. Accordingly, Accordingly, the electrochromic element according to another embodiment may be flexible overall.

The first transparent electrode 300 is disposed on the first substrate 100. The first transparent electrode 300 may be deposited on the first substrate 100. In addition, a hard coating layer may be further included between the first transparent electrode 300 and the first substrate 100.

The first transparent electrode 300 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the first transparent electrode 300 may include graphene, silver nanowires and/or metal mesh.

The first transparent electrode 300 may have a total light transmittance of about 80% or more. The first transparent electrode 300 may have a total light transmittance of about 85% or more. The first transparent electrode 300 may have a total light transmittance of about 88% or more.

The first transparent electrode 300 may have a haze of about 10% or less. The first transparent electrode 300 may have a haze of about 7% or less. The first transparent electrode 300 may have a haze of about 5% or less.

A surface resistance of the first transparent electrode 300 may be about 1 Ω/sq to 60 Ω/sq The surface resistance of the first transparent electrode 300 may be about 1 Ω/sq to 40 Ω/sq. The surface resistance of the first transparent electrode 300 may be about 1 Ω/sq to 30 Ω/sq.

A thickness of the first transparent electrode 300 may be about 50 nm to about 50 *µ*m The thickness of the first transparent electrode 300 may be about 100 nm to about 10 *µ*m.The thickness of the first transparent electrode 300 may be about 150 nm to about 5 *µ*m.

The first transparent electrode 300 is electrically connected to the first discoloration layer 500. In addition, the first transparent electrode 300 is electrically connected to the electrolyte layer 700 through the first discoloration layer 500.

As shown in FIG. 13, the first transparent electrode 300 includes a first insulation pattern 310 and a third insulation pattern 320.

The first insulation pattern 310 may extend from the first corner region E1. The first insulation pattern 310 may extend from the first corner region E1 toward the central portion of the first transparent electrode 300.

The first insulation pattern 310 may be formed by removing a portion of the first transparent electrode 300. That is, the first insulation pattern 310 may expose the upper surface of the first substrate 100. The first insulation pattern 310 may be formed by opening a portion of the first transparent electrode 300.

The width of the first insulation pattern 310 may be about 1 *µ*m to about 100 *µ*m.The length of the first insulation pattern 310 may be about 10 cm to about 50 cm.

The first insulation pattern 310 may insulate opposite sides of the first transparent electrode 300 from each other. The first insulation pattern 310 may increase an electrical movement path in the first transparent electrode 300.

The third insulation pattern 320 may extend from the second corner region E2. The third insulation pattern 320 may extend from the second corner region E2 toward the central portion of the first transparent electrode 300.

The third insulation pattern 320 may be formed by removing a portion of the first transparent electrode 300. That is, the third insulation pattern 320 may expose the upper surface of the first substrate 100. The third insulation pattern 320 may be formed by opening a portion of the first transparent electrode 300.

The width of the third insulation pattern 320 may be about 1 *µ*m to about 100 *µ*m.The length of the third insulation pattern 320 may be about 10 cm to about 50 cm.

The third insulation pattern 320 may insulate opposite sides of the first transparent electrode 300 from each other. The third insulation pattern 320 may increase an electrical movement path in the first transparent electrode 300.

The second transparent electrode 400 is disposed under the second substrate 200. The second transparent electrode 400 may be deposited on the second substrate 200. In addition, a hard coating layer may further included between the second transparent electrode 400 and the second substrate 200.

The second transparent electrode 400 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the second transparent electrode 400 may include graphene, silver nanowires and/or metal mesh.

The second transparent electrode 400 may have a total light transmittance of about 80% or more. The second transparent electrode 400 may have a total light transmittance of about 85% or more. The second transparent electrode 400 may have a total light transmittance of about 88% or more.

The second transparent electrode 400 may have a haze of about 10% or less. The second transparent electrode 400 may have a haze of about 7% or less. The second transparent electrode 400 may have a haze of about 5% or less.

The surface resistance of the second transparent electrode 400 may be about 1 Ω/sq to 60 Ω/sq. The surface resistance of the second transparent electrode 400 may be about 1 Ω/sq to 40 Ω/sq. The surface resistance of the second transparent electrode 400 may be about 1 Ω/sq to 30 Ω/sq.

The thickness of the second transparent electrode 400 may be about 50 nm to about 50 *µ*m.The thickness of the second transparent electrode 400 may be about 100 nm to about 10 *µ*m.The thickness of the second transparent electrode 400 may be about 150 nm to about 5 *µ*m.

The second transparent electrode 400 is electrically connected to the second discoloration layer 600. In addition, the second transparent electrode 400 is electrically connected to the electrolyte layer 700 through the second discoloration layer 600.

As shown in FIG. 14, the second transparent electrode 400 includes a second insulation pattern 410 and a fourth insulation pattern 420.

The second insulation pattern 410 may extend from the first corner region E1. The second insulation pattern 410 may extend from the first corner region E1 toward the central portion of the second transparent electrode 400.

The second insulation pattern 410 may be formed by removing a portion of the second transparent electrode 400. That is, the second insulation pattern 410 may expose a lower surface of the second substrate 200. The second insulation pattern 410 may be formed by opening a portion of the second transparent electrode 400.

The width of the second insulation pattern 410 may be about 1 *µ*m to about 100 *µ*m. The length of the second insulation pattern 410 may be about 10 cm to about 50 cm.

The second insulation pattern 410 may insulate opposite sides of the second transparent electrode 400 from each other. The second insulation pattern 410 may increase an electrical movement path in the second transparent electrode 400.

The fourth insulation pattern 420 may extend from the second corner region E2. The fourth insulation pattern 420 may extend from the second corner region E2 toward the central portion of the second transparent electrode 400.

The fourth insulation pattern 420 may be formed by removing a portion of the second transparent electrode 400. That is, the fourth insulation pattern 420 may expose the lower surface of the second substrate 200. The fourth insulation pattern 420 may be formed by opening a portion of the second transparent electrode 400.

The width of the fourth insulation pattern 420 may be about 1 *µ*m to about 100 *µ*m. The length of the fourth insulation pattern 420 may be about 10 cm to about 50 cm.

The fourth insulation pattern 420 may insulate opposite sides of the second transparent electrode 400 from each other. The fourth insulation pattern 420 may increase an electrical movement path in the second transparent electrode 400.

In addition, the first insulation pattern 310 and the second insulation pattern 410 may be formed at positions corresponding to each other. When viewed on a plane, the first insulation pattern 310 and the second insulation pattern 410 may be disposed at the same position.

In addition, the third insulation pattern 320 and the fourth insulation pattern 420 may be formed at positions corresponding to each other. When viewed on a plane, the third insulation pattern 320 and the fourth insulation pattern 420 may be disposed at the same position.

The first discoloration layer 500 is disposed on the first transparent electrode 300. The first discoloration layer 500 may be directly disposed on the upper surface of the first transparent electrode 300. The first discoloration layer 500 may be electrically directly connected to the first transparent electrode 300.

The first discoloration layer 500 is electrically connected to the first transparent electrode 300.The first discoloration layer 500 may be directly accessed to the first transparent electrode 300. In addition, the first discoloration layer 500 is electrically connected to the electrolyte layer 700. The first discoloration layer 500 may be electrically connected to the electrolyte layer 700.

The first discoloration layer 500 may be discolored when supplied with electrons. The first discoloration layer 500 may include a first electrochromic material whose color changes when supplied with electrons. The first electrochromic material may include at least one selected from the group consisting of tungsten oxide, niobium pentoxide, vanadium pentoxide, titanium oxide, molybdenum oxide, viologen and poly(3,4-ethylenedioxythiophene (PEDOT).

The first discoloration layer 500 may include the first electrochromic material in the form of particles. The tungsten oxide, the niobium pentoxide, the vanadium pentoxide, the titanium oxide and the molybdenum oxide may be particles having a particle diameter of about 1nm to about 200 nm.

In addition, the first discoloration layer 500 may further include a binder. The binder may be an inorganic binder. The binder may include a silica gel. The binder may be formed by a silica sol containing tetramethoxysilane or methyltrimethoxysilane.

The second discoloration layer 600 is disposed under the second transparent electrode 400. The second discoloration layer 600 may be directly disposed on a lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may be directly accessed to the second transparent electrode 400. In addition, the second discoloration layer 600 is electrically connected to the electrolyte layer 700. The second discoloration layer 600 may be electrically connected to the electrolyte layer 700.

The second discoloration layer 600 may be discolored while losing electrons. The second discoloration layer 600 may include a second electrochromic material that is oxidized and discolored while losing electrons. The second discoloration layer 600 may include at least one selected from the group consisting of Prussian blue, nickel oxide and iridium oxide.

The second discoloration layer 600 may include the second electrochromic material in the form of particles. The Prussian blue, the nickel oxide and the iridium oxide may be particles having a particle diameter of about 1nm to about 200 nm.

In addition, the second discoloration layer 600 may further include the binder.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600.

The electrolyte layer 700 may include a solid polymer electrolyte containing metal ions, an inorganic hydrate, etc. The electrolyte layer 700 may include lithium ions (Li+), sodium ions (Na+), potassium ions (K+), and the like.

Specifically, poly-AMPS, PEO/LiCF₃SO₃ or the like may be used as the solid polymer electrolyte, and Sb₂O₅ • 4H₂O or the like may be used as the inorganic hydrate.

In addition, the electrolyte layer 700 is a configuration that provides electrolyte ions involved in an electrochromic reaction. The electrolyte ions may be, for example, monovalent cations such as H+, Li+, Na+, K+, Rb+ or Cs+.

The electrolyte layer 700 may include an electrolyte. For example, a liquid electrolyte, a gel polymer electrolyte, an inorganic solid electrolyte, etc. may be used as the electrolyte without limitation. In addition, the electrolyte may be used in the form of a single layer or film so as to be laminated together with the electrode or the substrate.

The type of electrolyte salt used in the electrolyte layer 700 is not particularly limited so long as it contains a compound capable of providing monovalent cations, i.e., H⁺, Li⁺, Na⁺, K⁺, Rb⁺ or Cs⁺. For example, the electrolyte layer 700 may include a lithium salt compound such as LiClO₄, LiBF₄, LiAsF₆, LiPF₆, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li or (CF₃SO₂)₂NLi; or a sodium salt compound such as NaClO₄.

As one example, the electrolyte layer 700 may include a Cl or F element-containing compound as an electrolyte salt. Specifically, the electrolyte layer 700 may include one or more electrolyte salts selected from among LiClO₄, LiBF₄, LiAsF₆, LiPF₆, LiCl, LiB₁₀Cl₁₀, LiCF₃SO₃, LiCF₃CO₂, LiAsF₆, LiSbF₆, LiAlCl₄, CF₃SO₃Li, (CF₃SO₂)₂NLi and NaClO₄.

The electrolyte may additionally include a carbonate compound as a solvent. Since a carbonate compound has a high dielectric constant, it may increase ionic conductivity. As a non-limiting example, a solvent such as propylene carbonate (PC), ethylene carbonate (EC), dimethyl carbonate (DMC), diethyl carbonate (DEC) or ethylmethyl carbonate (EMC) may be used as a carbonate compound.

As another example, when the electrolyte layer 700 includes a gel polymer electrolyte, the electrolyte layer 700 may include a polymer such as poly-vinyl sulfonic acid, poly-styrene sulfonic acid, polyethylene sulfonic acid, poly-2-acrylamido-2methyl-propane sulfonic acid, poly-perfluoro sulfonic acid, poly-toluene sulfonic acid, poly-vinyl alcohol, poly-ethylene imine, poly-vinyl pyrrolidone, poly-ethylene oxide (PEO), poly-propylene oxide (PPO), poly-(ethylene oxide (siloxane PEOS), poly-(ethylene glycol, siloxane), poly-(propylene oxide, siloxane), poly-(ethylene oxide, methyl methacrylate) (PEO-PMMA), poly-(ethylene oxide, acrylic acid) (PEO PAA), poly-(propylene glycol, methyl methacrylate) (PPG PMMA), poly-ethylene succinate or poly-ethylene adipate. In one example, a mixture of two or more of the listed polymers or two or more copolymers may be used as a polymer electrolyte.

In addition, the electrolyte layer 700 may include a curable resin that can be cured by ultraviolet irradiation or heat. The curable resin may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocurable initiator and/or a heat-curable initiator.

A thickness of the electrolyte layer 700 may be about 10 *µ*m to about 200 *µ*m.The thickness of the electrolyte layer 700 may be about 50 *µ*m to about 150 *µ*m.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm wavelength or 550 nm. The transmittance may be measured using a known haze meter (HM).

The electrochromic element according to an embodiment includes a first open region OA1. The first open region OA1 may be formed by removing a portion of each of the second substrate 200, the second transparent electrode 400, the second discoloration layer 600, the electrolyte layer 700 and the first discoloration layer 500. The first open region OA1 is formed by removing a portion of each of the second substrate 200, the second transparent electrode 400, the second discoloration layer 600, the electrolyte layer 700 and the first discoloration layer 500 such that a portion of the upper surface of the first transparent electrode 300 is exposed.

In addition, the first open region OA1 may be disposed on an outer part of the first substrate 100 and the first transparent electrode 300. The first open region OA1 may have a shape extending in one direction along an edge portion of the first substrate 100 and the first transparent electrode 300.

The first open region OA1 may be disposed between a first side surface 101 of the first substrate 100 and a third side surface 201 of the second substrate 200. The first side surface 101 and the third side surface 201 may be disposed on different planes. In addition, the first side surface 101 and the third side surface 201 may extend in a parallel direction.

The third side surface 201 may be disposed closer to the center of the electrochromic element according to an embodiment than the first side surface 101.

The width of the first open region OA1 may be about 1mm to about 20 mm. The width of the first open region OA1 may be about 2mm to about 10 mm.

The electrochromic element according to an embodiment includes a second open region OA2. The second open region OA2 may be formed by removing a portion of the first substrate 100, a portion of the first transparent electrode 300, a portion of the first discoloration layer 500, a portion of the electrolyte layer 700 and a portion of the second discoloration layer 600. The second open region OA2 may be formed by removing a portion of the first substrate 100, a portion of the first transparent electrode 300, a portion of the first discoloration layer 500, a portion of the electrolyte layer 700 and a portion of the second discoloration layer 600 such that a portion of the lower surface of the second transparent electrode 400 is exposed.

In addition, the second open region OA2 may be disposed on edge portions of the second substrate 200 and the second transparent electrode 400. The second open region OA2 may have a shape extending in one direction along the edge portions of the second substrate 200 and the second transparent electrode 400.

The first open region OA1 and the second open region OA2 may extend in different directions from the first corner region E1. That is, the first open region OA1 and the second open region OA2 may meet each other at the first corner region E1.

The second open region OA2 may be disposed between a second side surface 102 of the first substrate 100 and a fourth side surface 202 of the second substrate 200. The second side surface 102 and the fourth side surface 202 may be disposed on different planes. In addition, the second side surface 102 and the fourth side surface 202 may meet each other at the first corner region E1.

The width of the second open region OA2 may be about 1 mm to about 20 mm. The width of the second open region OA2 may be about 2mm to about 10 mm.

The first bus bar 1010 is disposed on the first transparent electrode 300. The first bus bar 1010 may be disposed in the first open region OA1. The first bus bar 1010 is accessed to the first transparent electrode 300. The first bus bar 1010 may be disposed on an upper surface, opened by the first open region OA1, of the first transparent electrode 300.

The first bus bar 1010 may be electrically connected to the first transparent electrode 300. The first bus bar 1010 may be in direct contact with the upper surface of the first transparent electrode 300. The first bus bar 1010 may access to the first transparent electrode 300 through solder.

The first bus bar 1010 may extend in a direction where the first open region OA1 extends. That is, the first bus bar 1010 may have a shape extending along an edge region of the first transparent electrode 300.

The first bus bar 1010 extends from the first corner region E1. The first bus bar 1010 may extend along one outer side of the first transparent electrode 300 from the first corner region E1.

The first sealing part 800 may cover the first bus bar 1010. The first sealing part may cover the upper surface and side surface of the first bus bar 1010. The first sealing part 800 may protect the first bus bar 1010.

Since the first sealing part 800 efficiently protects the first bus bar 1010, the first bus bar 1010 may be prevented from being damaged by external impact or disconnected from the first transparent electrode 300.

The second bus bar 1020 is disposed under the second transparent electrode 400. The second bus bar 1020 may be disposed in the second open region OA2. The second bus bar 1020 is accessed to the second transparent electrode 400. The second bus bar 1020 may be disposed on a lower surface, opened by the second open region OA2, of the second transparent electrode 400.

The second bus bar 1020 may be electrically connected to the second transparent electrode 400. The second bus bar 1020 may be in direct contact with the lower surface of the second transparent electrode 400. The second bus bar 1020 may access to the second transparent electrode 400 through solder.

The second bus bar 1020 may extend in a direction where the second open region OA2 extends. That is, the second bus bar 1020 may have a shape extending along the outer edge region of the second transparent electrode 400.

The second bus bar 1020 extends from the first corner region E1. The second bus bar 1020 may extend from the first corner region E1 along one outer side of the second transparent electrode 400.

The second sealing part 900 may cover the second bus bar 1020. The second sealing part 900 may cover the lower surface and side surface of the second bus bar 1020. The second sealing part 900 may protect the second bus bar 1020.

Since the second sealing part 900 efficiently protects the second bus bar 1020, the second bus bar 1020 may be prevented from being damaged by external impact or disconnected from the second transparent electrode 400.

The third bus bar 1030 is disposed on the first transparent electrode 300. The third bus bar 1030 may be disposed in the third open region OA3. The third bus bar 1030 accesses to the first transparent electrode 300. The third bus bar 1030 may be disposed in an upper surface, opened by the third open region OA3, of the first transparent electrode 300.

The third bus bar 1030 may be electrically connected to the first transparent electrode 300. The third bus bar 1030 may be in direct contact with the upper surface of the first transparent electrode 300. The third bus bar 1030 may access to the first transparent electrode 300 through solder.

The third bus bar 1030 may extend in a direction where the third open region OA3 extends. That is, the third bus bar 1030 may have a shape extending along the edge region of the first transparent electrode 300.

The third bus bar 1030 extends from the second corner region E2. The third bus bar 1030 may extend along another outer edge of the first transparent electrode 300 from the second corner region E2.

The first sealing part 800 may cover the third bus bar 1030. The first sealing part may cover the upper surface and side surface of the third bus bar 1030. The first sealing part 800 may protect the third bus bar 1030.

Since the first sealing part 800 efficiently protects the third bus bar 1030, the first bus bar 1010 may be prevented from being damaged by external impact or disconnected from the first transparent electrode 300.

The fourth bus bar 1040 is disposed under the second transparent electrode 400. The fourth bus bar 1040 may be disposed in the fourth open region OA4. The fourth bus bar 1040 accesses to the second transparent electrode 400. The fourth bus bar 1040 may be disposed on a lower surface, opened by the fourth open region OA4, of the second transparent electrode 400.

The fourth bus bar 1040 may be electrically connected to the second transparent electrode 400. The fourth bus bar 1040 may be in direct contact with the lower surface of the second transparent electrode 400. The fourth bus bar 1040 may access to the second transparent electrode 400 through solder.

The fourth bus bar 1040 may extend in a direction where the fourth open region OA4 extends. That is, the fourth bus bar 1040 may have a shape extending along the outer edge region of the second transparent electrode 400.

The fourth bus bar 1040 extends from the second corner region E2. The fourth bus bar 1040 may extend along another outer edge of the second transparent electrode 400 from the second corner region E2.

The second sealing part 900 may cover the fourth bus bar 1040. The second sealing part 900 may cover the lower surface and side surface of the fourth bus bar 1040. The second sealing part 900 may protect the fourth bus bar 1040.

Since the second sealing part 900 efficiently protects the fourth bus bar 1040, the fourth bus bar 1040 may be prevented from being damaged by external impact or disconnected from the second transparent electrode 400.

The first bus bar 1010, the second bus bar 1020, the third bus bar 1030 and/or the fourth bus bar 1040 may include a metal. The first bus bar 1010, the second bus bar 1020, the third bus bar 1030 and/or the second bus bar 1020 may include a metal ribbon. The first bus bar 1010, the second bus bar 1020, the third bus bar 1030 and/or the fourth bus bar 1040 may include a conductive paste. The first bus bar 1010, the second bus bar 1020, the third bus bar 1030 and/or the fourth bus bar 1040 may include a binder and a conductive filler.

The first sealing part 800 is disposed in the first open region OA1 and the third open region OA3. The first sealing part 800 is disposed on an upper surface of the exposed first transparent electrode 300. The first sealing part 800 covers an upper surface of the exposed first transparent electrode 300. The first sealing part 800 may be directly disposed on the upper surface of the exposed first transparent electrode 300. The first sealing part 800 may be brought into close contact with the upper surface of the exposed first transparent electrode 300. The first sealing part 800 300 may be adhered to the upper surface of the exposed first transparent electrode.

The first sealing part 800 may cover a portion of the upper surface of the second substrate 200. The first sealing part 800 may be disposed on the portion of the upper surface of the second substrate 200. The first sealing part 800 may be brought into close contact with the portion of the upper surface of the second substrate 200. The first sealing part 800 may be adhered to the portion of the upper surface of the second substrate 200.

The electrochromic element according to the embodiment may efficiently protect the electrolyte layer 700, the first discoloration layer 500, the second discoloration layer 600 and the second transparent electrode 400.

The second sealing part 900 is disposed in the second open region OA2 and the fourth open region OA4. The second sealing part 900 is disposed on a lower surface of the exposed second transparent electrode 400. The second sealing part 900 covers the lower surface of the exposed second transparent electrode 400. The second sealing part 900 may be directly disposed on the lower surface of the exposed second transparent electrode 400. The second sealing part 900 may be brought into close contact with the lower surface of the exposed second transparent electrode 400. The second sealing part 900 may be adhered to the lower surface of the exposed second transparent electrode 400.

The second sealing part 900 may cover a portion of the lower surface of the first substrate 100. The second sealing part 900 may be disposed on the portion of the lower surface of the first substrate 100. The second sealing part 900 may be brought into close contact with the portion of the lower surface of the first substrate 100. The second sealing part 900 may be adhered to the portion of the lower surface of the first substrate 100.

The electrochromic element according to an embodiment may efficiently protect the electrolyte layer 700, the first discoloration layer 500, the second discoloration layer 600 and the second transparent electrode 400.

The first sealing part 800 and/or the second sealing part 900 include a curable resin. The second sealing part 900 may include a thermosetting resin and/or a photocurable resin.

Examples of the thermosetting resin include epoxy resin, melamine resin, urea resin, unsaturated polyester resin, and the like. In addition, examples of the epoxy resin include phenol novolac-type epoxy resin, cresol novolac-type epoxy resin, biphenyl novolac-type epoxy resin, trisphenol novolac-type epoxy resin, dicyclopentadiene novolac-type epoxy resin, bisphenol A-type epoxy resin, bisphenol F-type epoxy resin, 2, 2'-diarylbisphenol A-type epoxy resin, bisphenol S-type epoxy resin, hydrogenated bisphenol A-type epoxy resin, ropylene oxide-added bisphenol A-type epoxy resin, biphenyl type epoxy resin, naphthalene-type epoxy resin, resorcinol-type epoxy resin, glycidyl amines, and the like.

In addition, the first sealing part 800 and/or the second sealing part 900 may further include a heat curing agent. Examples of the sealing part include hydrazide compounds such as 1, 3-bis[hydrazinocarbonoethyl 5-isopropyl hydantoin], adipic acid(adipic acid) hydrazide; dicyandiamide, guanidine derivatives, 1-cyanoethyl-2-phenyl imidazole, N-[2-(2-methyl-1-imidazolyl) ethyl]urea, 2, 4-diamino-6-[2'-methylimidazolyl(1')]-ethyl-s-thoriazine, N,N'-bis(2-methyl-1-imidazolyl ethyl) urea, N, N'-(2-methyl-1-imidazolyl ethyl)-azipoamido, 2-phenyl-4-methyl-5-hydroxymethyl imidazole, 2-imidazoline-2-thiol, 2, 2'-thiodiethanethiol, additional products of various amines and epoxy resins, and the like.

The first sealing part 800 and/or the second sealing part 900 may include a photocurable resin. Examples of the photocurable resin include acrylate-based resins such as urethane acrylate, and the like. In addition, the first sealing part 800 and/or the second sealing part 900 may further include a photocurable initiator. The photocurable initiator may be at least one selected from the group consisting of acetophenone-based compounds, benzophenone-based compounds, thioxanthone-based compounds, benzoin-based compounds, triazine-based compounds and oxime-based compounds.

In addition, the first sealing part 800 and/or the second sealing part 900 may further include a moisture absorbent such as zeolite and/or silica.

In addition, the first sealing part 800 and/or the second sealing part 900 may further include an inorganic filler. The inorganic filler may have a material having high insulating nature, transparency and durability. Examples of the inorganic filler include silicon, aluminum, zirconia, a mixture thereof, and the like.

The electrochromic element according to an embodiment may be fabricated by the following method. FIGS. 17 to 24 are sectional views illustrating processes of fabricating the electrochromic element according to an embodiment.

Referring to FIG. 17, a first transparent electrode 300 is formed on a first substrate 100. The first transparent electrode 300 may be formed by a vacuum deposition process. A metal oxide such as indium tin oxide may be deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that a first transparent electrode 300 including a metal mesh may be formed on the first substrate 100.

Next, a first insulation pattern 310 and a third insulation pattern 320 are formed on the first transparent electrode 300. The first insulation pattern 310 and the third insulation pattern 320 may be formed by removing a portion of the first transparent electrode 300.

The first insulation pattern 310 and the third insulation pattern 320 may expose the upper surface of the first substrate 100. The second transparent electrode 400 is completely removed from the first insulation pattern 310 and the third insulation pattern 320, so that the first insulation pattern 310 and the third insulation pattern 320 may perform the insulation function.

Referring to FIG. 18, a first discoloration layer 500 is formed on the first transparent electrode 300. The first discoloration layer 500 may be formed by a sol-gel coating process. A first sol solution including a first electrochromic material, a binder and a solvent may be coated on the first transparent electrode 300. A sol-gel reaction may occur in the coated first sol solution, and the first discoloration layer 500 may be formed.

The first sol solution may include the first discoloration material in the form of particles in a content of about 5 wt% to about 30 wt%. The first sol solution may include the binder in a content of about 5 wt% to about 30 wt%. The first sol solution may include the solvent in a content of about 60 wt% to about 90 wt%.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

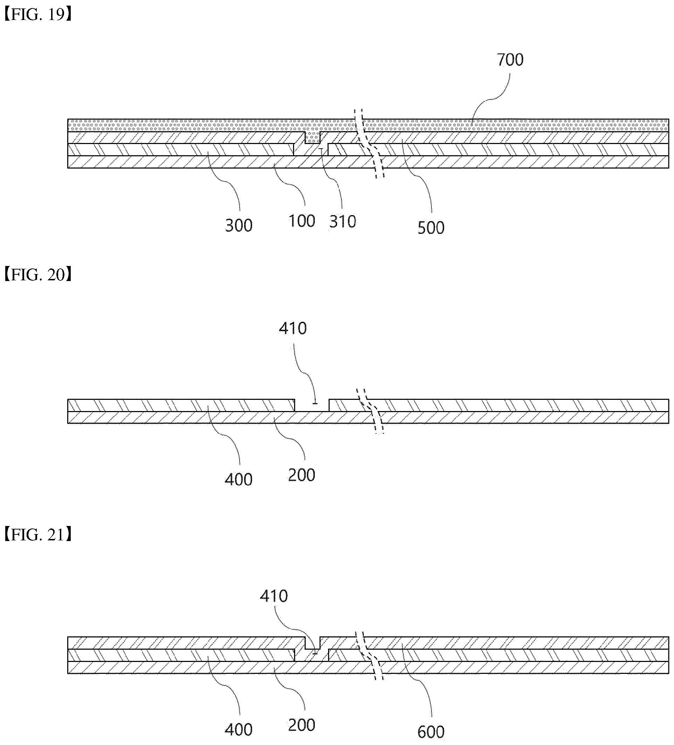

Referring to FIG. 19, an electrolyte composition for forming an electrolyte layer 700 is formed on the first discoloration layer 500.

The electrolyte composition may include a metal salt, an electrolyte, a photocurable resin and a photocurable initiator. The photocurable resin may be at least one selected from the group consisting of hexandiol diacrylate (HDDA), tripropylene glycoldiacrylate, ethylene glycoldiacrylate (EGDA), trimethylolpropane triacrylate (TMPTA), trimethylolpropane ethoxylated triacrylate (TMPEOTA), glycerol propoxylated triacrylate (GPTA), pentaerythritol tetraacrylate (PETA), and dipentaerythritol hexaacrylate (DPHA).

The metal salt, the electrolyte and the photocurable initiator may be the same as described above.

Referring to FIG. 20, a second transparent electrode 400 is formed on a second substrate 200.

The second transparent electrode 400 may be formed by a vacuum deposition process. A metal oxide such as indium tin oxide may be deposited on the second substrate 200 by a sputtering process, etc., thereby forming the second transparent electrode 400.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a second transparent electrode 400 including a metal mesh may be formed on the second substrate 200.

Next, a second insulation pattern 410 and a fourth insulation pattern 420 are formed on the second transparent electrode 400. The second insulation pattern 410 and the fourth insulation pattern 420 may be formed by removing a portion of the second transparent electrode 400.

The second insulation pattern 410 and the fourth insulation pattern 420 may expose the lower surface of the second substrate 200. The second transparent electrode 400 may be completely removed from the second insulation pattern 410 and the fourth insulation pattern 420, so that the second insulation pattern 410 and the fourth insulation pattern 420 may perform the insulation function.

Referring to FIG. 21, a second discoloration layer 600 is formed on the second transparent electrode 400. The second discoloration layer 600 may be formed by a sol-gel coating process. A second sol solution including a second electrochromic material, a binder and a solvent may be coated on the second transparent electrode 400. A sol-gel reaction may occur in the coated second sol solution, and the second discoloration layer 600 may be formed.

The second sol solution may include the second discoloration material in the form of particles in a content of about 5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

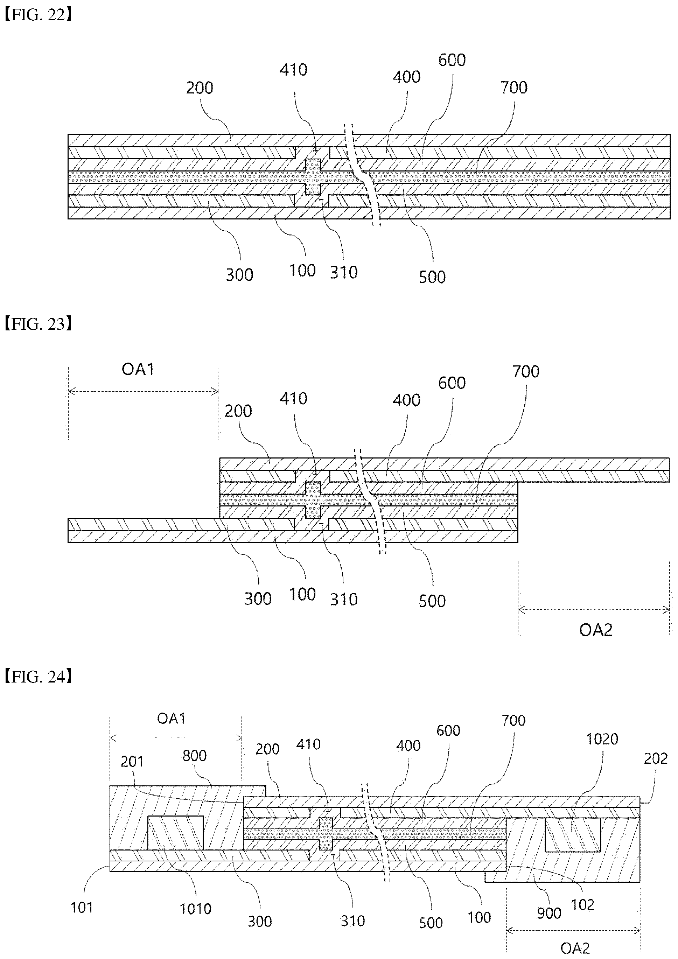

Referring to FIG. 22, the second substrate 200, the second transparent electrode 400 and the second discoloration layer 600 are laminated on the coated electrolyte composition. Here, the second discoloration layer 600 is brought into direct contact with the coated electrolyte composition.

Next, the coated electrolyte composition is cured by light, and a first laminate including the first substrate 100, the first transparent electrode 300 and the first discoloration layer 500 and a second laminate including the second substrate 200, the second transparent electrode 400 and the second discoloration layer 600 are laminated to each other. That is, the first laminate and the second laminate may be adhered to each other by the electrolyte layer 700.

Referring to FIG. 23, a first open region OA1 and a third open region OA3 are formed by removing a portion of each of the first discoloration layer 500, the electrolyte layer 700, the second discoloration layer 600, the second transparent electrode 400 and the second substrate 200. The first open region OA1 and the third open region OA3 expose a portion of the upper surface of the first transparent electrode 300.

In addition, a second open region OA2 and a fourth open region OA4 are formed by removing a portion of each of the first substrate 100, the first transparent electrode 300, the first discoloration layer 500, the electrolyte layer 700 and the second discoloration layer 600. The second open region OA2 and the fourth open region OA4 expose a portion of the lower surface of the second transparent electrode 400.

Referring to FIG. 24, a first bus bar 1010 is formed in the first open region OA1, and a third bus bar 1030 is formed in the third open region OA3. The first bus bar 1010 and the third bus bar 1030 may be electrically connected to the upper surface of the first transparent electrode 300.

A first curable resin composition 801 is applied in the first open region OA1 and the third open region OA3. The first curable resin composition 801 may be continuously applied from the upper surface of the first transparent electrode 300 to a portion of the upper surface of the second substrate 200. That is, the first curable resin composition 801 may cover one side surface of the first discoloration layer 500, one side surface of the electrolyte layer 700, one side surface of the second discoloration layer 600, one side surface of the second transparent electrode 400 and one side surface of the second substrate 200.

In addition, a second bus bar 1020 is formed in the second open region OA2, and a fourth bus bar 1040 is formed in the fourth open region OA4. The second bus bar 1020 and the fourth bus bar 1040 may be electrically connected to the lower surface of the second transparent electrode 400.

A second curable resin composition 901 is applied to the second open region OA2 and the fourth open region OA4. The second curable resin composition 901 may be continuously applied from the lower surface of the second transparent electrode 400 to a portion of the lower surface of the first substrate 100. That is, the second curable resin composition 901 may cover another side surface of the first substrate 100, another side surface of the first discoloration layer 500, another side surface of the electrolyte layer 700, and another side surface of the second discoloration layer 600.

Next, the first curable resin composition 801 is cured, and a first sealing part 800 is formed. The second curable resin composition 901 is cured, and a second sealing part 900 is formed.

The first curable resin composition 801 and the second curable resin composition 901 may be simultaneously or sequentially cured. That is, the first curable resin composition 801 and the second curable resin composition 901 may be simultaneously applied and flattened, so that the first sealing part 800 and the second sealing part 900 may be simultaneously formed. Alternatively, the first curable resin composition 801 may be applied and cured so that the first sealing part 800 may be formed, and the second curable resin composition may be applied and cured so that the second sealing part 900 may be formed.

Accordingly, the electrochromic element according to an embodiment may be fabricated.

FIG. 25 illustrates the plan view of a first transparent electrode 300 according to still another embodiment. FIG. 26 illustrates the plan view of a second transparent electrode 400 according to still another embodiment.

Referring to FIG. 25, the first insulation pattern may include multiple fifth insulation patterns 330 extending in a first direction. The fifth insulation patterns 330 may extend in the first direction from the first corner region E1. The fifth insulation patterns 330 may be spaced apart from each other and may extend parallel to each other.

The third insulation pattern 320 may include multiple seventh insulation patterns 340 extending in a second direction. The seventh insulation patterns 340 may extend in the second direction from the second corner region E2. The seventh insulation patterns 340 may be spaced apart from each other and may extend parallel to each other.

Referring to FIG. 26, the second insulation pattern 410 may include multiple sixth insulation patterns 430 extending in a second direction. The sixth insulation patterns 430 may extend in the second direction from the first corner region E1. The sixth insulation patterns 430 may be spaced apart from each other and may extend parallel to each other.

The fourth insulation pattern 420 may include multiple eighth insulation patterns 440 extending in a first direction. The eighth insulation patterns 440 may extend in the first direction from the second corner region E2. The eighth insulation patterns 440 may be spaced apart from each other and may extend parallel to each other.

The fifth insulation patterns 330 may intersect with the sixth insulation patterns 430. In addition, the seventh insulation patterns 340 may intersect with the eighth insulation patterns 440. Accordingly, the first insulation pattern, the second insulation pattern, the third insulation pattern and the fourth insulation pattern may uniformly increase the electrical path in the first corner region E1 and the second corner region E2.

Accordingly, the electrochromic element according to an embodiment may have a uniform color change speed throughout.

The electrochromic element according to an embodiment includes a first bus bar 1010 and second bus bar 1020 respectively extending in different directions from the first corner region E1. In addition, the electrochromic element according to an embodiment may include a third bus bar 1030 and fourth bus bar 1040 respectively extending in different directions from a second corner region E2.

Accordingly, the electrochromic element according to an embodiment may supply a driving signal to the first transparent electrode 300 through the first bus bar 1010 and the third bus bar 1030, and supply a driving signal to the second transparent electrode 400 through the second bus bar 1020 and the fourth bus bar 1040.

Accordingly, the electrochromic element according to an embodiment may have a fast color change speed across the entire surface because a driving signal is supplied from four sides thereof. In particular, the electrochromic element according to an embodiment may have a uniform discoloration and fast color change speed throughout the entire surface.

In addition, in the first corner region E1, the first bus bar 1010 and the second bus bar 1020 may be adjacent to each other. The first insulation pattern 310 and the second insulation pattern 410 may increase the length of the electrical path of the first bus bar 1010 and the second bus bar 1020.

Accordingly, the electrochromic element according to an embodiment may suppress deterioration in a region adjacent to the first corner region E1 and the second corner region E2. Accordingly, the electrochromic element according to an embodiment may have improved durability.

In addition, the electrochromic element according to an embodiment may suppress an increase in the color change speed in a region where the first bus bar 1010 and the second bus bar 1020 are adjacent to each other. Accordingly, the electrochromic element according to an embodiment may have a uniform color change speed throughout.

In addition, the electrochromic element according to an embodiment may include a first sealing part 800 covering the first bus bar 1010; and a second sealing part 900 covering the second bus bar 1020. Accordingly, the discoloration layers 500 and 600 and the electrolyte layer 700 inside the electrochromic element according to an embodiment may be effectively protected.

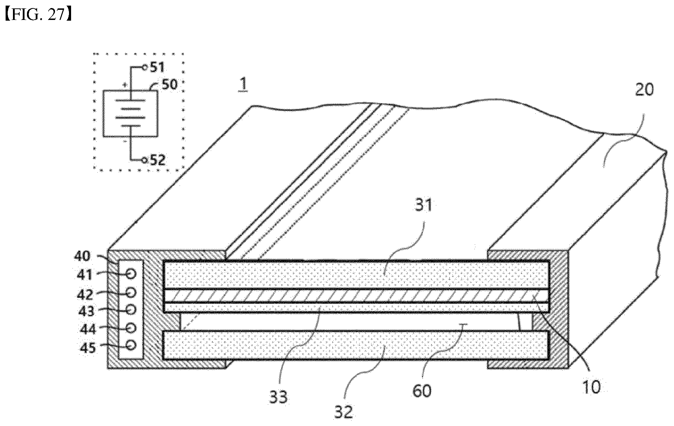

FIG. 27 illustrates a window device 1 according to an embodiment.

Referring to FIG. 27, the window device 1 according to an embodiment includes the electrochromic element 10, a frame 20, windows 31, 32 and 33, a plug-in component 40 and a power supply 50.

The frame 20 may be composed of one or more pieces. For example, the frame 20 may be composed of one or more materials, e.g., vinyl, PVC, aluminum (Al), steel, or fiberglass. The frame 20 fixes the windows 31, 32 and 33 and seals the spaces between the windows 31, 32 and 33.

In addition, the frame 20 may hold or include foam or pieces made of other materials. The frame 20 includes a spacer, and the spacer may be disposed between adjacent windows 31, 32 and 33. In addition, the spacer may tightly seal the spaces between the windows 31, 32 and 33, together with an adhesive sealant.

The windows 31, 32 and 33 are fixed to the frame 20. The windows 31, 32 and 33 may be glass pane. The windows 31, 32 and 33 may be general silicon oxide (SOx)-based glass substrates such as soda lime glass or float glass composed of about 75% silica (SiO₂) plus Na₂O, CaO, and some minor additives. However, any material having appropriate optical, electrical, thermal, and mechanical properties may be used. The windows 31, 32 and 33 may also include, for example, other glass materials, plastics and thermoplastic resins (e.g., poly(methyl methacrylate), polystyrene, a polycarbonate, allyl diglycol carbonate, SAN (styrene acrylonitrile copolymer), poly(4-methyl-1-pentene), polyester, polyamide), or mirror materials. The windows 31, 32 and 33 may include tempered glass.

The windows 31, 32 and 33 may include a first window 31, a second window 32 and a third window 33. The first window 31 and the third window 33 may be disposed at the outermost side, and the second window 32 may be disposed between the first window 31 and the third window 33.

The electrochromic element 10 is disposed between the first window 31 and the second window 32. The electrochromic element 10 may be laminated to the first window 31 and the second window 32.

The electrochromic element 10 may be laminated to the first window 31 by a first polyvinyl butyral sheet. That is, the first polyvinyl butyral sheet may be disposed on the first window 31 and the electrochromic element 10, and may be laminated to the first window 31 and the electrochromic element 10.

The electrochromic element 10 may be laminated to the second window 32 by a second polyvinyl butyral sheet. That is, the second polyvinyl butyral sheet may be disposed on the second window 32 and the electrochromic element 10 and may be laminated to the second window 32 and the electrochromic element 10.

A space 60 may be formed between the second window 32 and the third window 33. The space may be filled with one or more gases, such as argon (Ar), krypton (Kr), or xenon (Xn).

The windows 31, 32 and 33 may have glass pane sizes for residential or commercial window applications. The size of glass pane may vary widely depending on the specific needs of the home or commercial enterprise. In some embodiments, the windows 31, 32 and 33 may be formed of architectural glass. Architectural glass is typically used in commercial buildings, but can also be used in residential buildings. Normally, but not necessarily, the indoor environment is separated from the outdoor environment. In some embodiments, a suitable architectural glass substrate is at least about 20 inches by about 20 inches, and may be much larger, for example, about 80 inches by about 120 inches, or larger. Architectural glass is typically at least about 2 millimeters (mm) thick and may be as thick as 6 mm or more.

In embodiments, the windows 31, 32 and 33 have a thickness in a range of about 1 mm to about 10 mm.

In embodiments, the windows 31, 32 and 33 may be, for example, very thin and flexible Gorilla Glass^{®} or WillowTM Glass which is commercially available from of Corning, Inc. in New York. The thicknesses of these glasses may be less than 0.3 mm or less than about 1 mm.

The plug-in component 40 may include a first electrical input 41, a second electrical input 42, a third electrical input 43, a fourth electrical input 44 and a fifth electrical input 45.

In addition, the power supply 50 includes a first power terminal 51 and a second power terminal 52.

The first electrical input 41 is electrically connected to the first power terminal 51 through one or more wires or other electrical connections, components, or devices.

The first electrical input 41 may include a pin, a socket, or another electrical connector or conductor. In addition, the first electrical input 41 may be electrically connected to the electrochromic element 10 through the first bus bar 1010 and the third bus bar 1030. The first bus bar 1010 and the third bus bar 1030 may be electrically connected to the first transparent electrode 300.

The second electrical input 42 is electrically connected to the second power terminal 52 through one or more wires or other electrical connections, components, or devices.

The second electrical input 42 may include a pin, a socket, or another electrical connector or conductor. In addition, the second electrical input 42 may be electrically connected to the electrochromic element 10 through the second bus bar 1020 and the fourth bus bar 1040. The second bus bar 1020 and the fourth bus bar 1040 may be electrically connected to the second transparent electrode 400.

The third electrical input 43 may be coupled to a device, system, or building ground.

The fourth electrical input 44 and the fifth electrical input 45 may be individually used, for example, for communication between a controller or microcontroller for controlling the window device 1 and a network controller.

The power supply 50 supplies power to the electrochromic element 10 through the plug-in component 40. In addition, the power supply 50 may be controlled by the controller outside to supply power of a certain waveform to the electrochromic element 10.

In addition, the features, structures, effects, and the like described in the embodiments are included in at least one embodiment of the present invention, and are not necessarily limited to only one embodiment. Furthermore, the features, structures, effects and the like illustrated in the embodiments can be combined and modified by those skilled in the art to which the embodiments belong. Therefore, it should be understood that the combined and modified embodiments are included in the present invention.

Although the above description focuses on embodiments, these are only examples and do not limit the present invention, and those with ordinary knowledge in the field to which the present invention pertains will be able to recognize that various modifications and applications not exemplified above are possible without departing from the essential characteristics of the present invention. For example, each component specifically shown in the embodiments can be modified and implemented, and the differences related to such modifications and applications should be interpreted as being included in the scope of the present invention defined in the appended claims.

## Claims

1. An electrochromic element, comprising:
an electrochromic part; and
a photoelectron capping part configured to absorb photoelectrons generated when external light is incident on the electrochromic part.

2. The electrochromic element according to claim 1, wherein the electrochromic part comprises:
a first substrate;
a first transparent electrode disposed on the first substrate;
a first reduction discoloration layer disposed on the first transparent electrode;
an electrolyte layer disposed on the first reduction discoloration layer;
a first oxidation discoloration layer disposed on the first electrolyte layer;
a second transparent electrode disposed on the first oxidation discoloration layer; and
a second substrate disposed on the second transparent electrode,
wherein the photoelectrons are generated in the first oxidation discoloration layer.

3. The electrochromic element according to claim 2, wherein the photoelectron capping part is electrically connected to the first transparent electrode and the second transparent electrode.

4. The electrochromic element according to claim 3, wherein the photoelectron capping part comprises:
a third transparent electrode electrically connected to the first transparent electrode;
a second oxidation discoloration layer disposed on the third transparent electrode;
a second electrolyte layer disposed on the second oxidation discoloration layer;
a second reduction discoloration layer disposed on the second electrolyte layer; and
a fourth transparent electrode disposed on the second reduction discoloration layer and electrically connected to the second transparent electrode.

5. The electrochromic element according to claim 4, wherein the first transparent electrode and the third transparent electrode are formed integrally, and
the second transparent electrode and the fourth transparent electrode are formed integrally.

6. The electrochromic element according to claim 1, wherein the photoelectron capping part comprises a first photoelectron-capping part and second photoelectron capping part configured to extend parallel to each other, and
the electrochromic part is disposed between the first photoelectron-capping part and the second photoelectron capping part.

7. The electrochromic element according to claim 2, wherein the photoelectron capping part is disposed between the first substrate and the second substrate.

8. The electrochromic element according to claim 4, wherein the first reduction discoloration layer comprises at least one selected from the group consisting of tungsten oxide, niobium pentoxide, vanadium pentoxide, titanium oxide, molybdenum oxide, viologen and poly(3,4-ethylenedioxythiophene (PEDOT),
the second reduction discoloration layer comprises at least one selected from the group consisting of tungsten oxide, niobium pentoxide, vanadium pentoxide, titanium oxide, molybdenum oxide, viologen and poly(3,4-ethylenedioxythiophene (PEDOT),
the first oxidation discoloration layer comprises at least one selected from the group consisting of Prussian blue, lithium nickel oxide and iridium oxide, and
the second oxidation discoloration layer comprises at least one selected from the group consisting of Prussian blue, lithium nickel oxide and iridium oxide.

9. The electrochromic element according to claim 4, wherein the first reduction discoloration layer receives cations, contained in the first electrolyte layer, by driving voltage applied to the first transparent electrode and the second transparent electrode, and
the second reduction discoloration layer receives cations contained in the second electrolyte layer when the external light is incident on the electrochromic part.

10. The electrochromic element according to claim 4, wherein the first oxidation discoloration layer releases cations to the first electrolyte layer by driving voltage applied to the first transparent electrode and the second transparent electrode, and
the second oxidation discoloration layer releases cations to the second electrolyte layer when the external light is incident on the electrochromic part.

11. An electrochromic element, comprising:
a first substrate;
a first transparent electrode disposed on the first substrate;
a third transparent electrode disposed on the first substrate and formed integrally with the first transparent electrode;
a first reduction discoloration layer disposed on the first transparent electrode;
a second oxidation discoloration layer disposed on the third transparent electrode;
an electrolyte layer configured to cover the first reduction discoloration layer and the second oxidation discoloration layer;
a first oxidation discoloration layer disposed on the electrolyte layer;
a second reduction discoloration layer disposed on the electrolyte layer;
a second transparent electrode disposed on the first oxidation discoloration layer;
a fourth transparent electrode disposed on the second reduction discoloration layer and formed integrally with the second transparent electrode; and
a second substrate disposed on the second transparent electrode and the fourth transparent electrode.

12. A window device, comprising:
a frame;
a window mounted on the frame; and
an electrochromic element disposed in the window,
wherein the electrochromic element comprises:
an electrochromic part; and
a photoelectron capping part configured to absorb photoelectrons generated when external light is incident on the electrochromic part.
